(19) Europäisches Patentamt
European Patent Office
Office européen des brevets

(11) **EP 3 994 856 B1**

(12) **EUROPÄISCHE PATENTSCHRIFT**

(45) Veröffentlichungstag und Bekanntmachung des Hinweises auf die Patenterteilung:
**20.11.2024 Patentblatt 2024/47**

(21) Anmeldenummer: **20736675.8**

(22) Anmeldetag: **02.07.2020**

(51) Internationale Patentklassifikation (IPC):
**H04L 25/03** *(2006.01)*

(52) Gemeinsame Patentklassifikation (CPC):
**H04L 25/03331; H04L 25/03178; H04L 25/03318**

(86) Internationale Anmeldenummer:
**PCT/EP2020/068735**

(87) Internationale Veröffentlichungsnummer:
**WO 2021/001509 (07.01.2021 Gazette 2021/01)**

(54) **EMPFÄNGER ZUM EMPFANGEN EINES KOMBINATIONSSIGNALS MIT BERÜCKSICHTIGUNG EINER INTER-SYMBOL-INTERFERENZ UND NIEDRIGER KOMPLEXITÄT, VERFAHREN ZUM EMPFANGEN EINES KOMBINATIONSSIGNALS UND COMPUTERPROGRAMM**

LOW-COMPLEXITY RECEIVER FOR RECEIVING A COMBINED SIGNAL AND ACCOUNTING FOR ISI, METHOD FOR RECEIVING SUCH A SIGNAL AND COMPUTER PROGRAM

RÉCEPTEUR DE COMPLEXITÉ BASSE POUR RECEVOIR UN SIGNAL COMBINÉ EN TENANT COMPTE D'INTERFÉRENCE INTERSYMBOLES, PROCÉDÉ POUR RECEVOIR UN TEL SIGNAL ET PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2019 DE 102019209801**

(43) Veröffentlichungstag der Anmeldung:
**11.05.2022 Patentblatt 2022/19**

(73) Patentinhaber: **Innovationszentrum für Telekommunikationstechnik GmbH IZT**
**91058 Erlangen (DE)**

(72) Erfinder: **HIRSCHBECK, Martin**
**90419 Nürnberg (DE)**

(74) Vertreter: **Burger, Markus et al**
**Schoppe, Zimmermann, Stöckeler Zinkler, Schenk & Partner mbB Patentanwälte Radlkoferstraße 2 81373 München (DE)**

(56) Entgegenhaltungen:
**US-A1- 2009 161 749**

- **ROSSLER J F ET AL: "A comparison of iterative demapping with iterative soft decision interference cancellation employing the distribution of interference", PROCEEDINGS / 2004 IEEE 59TH VEHICULAR TECHNOLOGY CONFERENCE, VTC 2004-SPRING : TOWARDS A GLOBAL WIRELESS WORLD ; 17 - 19 MAY 2004, MILAN, ITALY, IEEE OPERATIONS CENTER, PISCATAWAY, NJ, vol. 1, 17 May 2004 (2004-05-17), pages 570 - 574Vol.1, XP010764862, ISBN: 978-0-7803-8255-8, DOI: 10.1109/VETECS.2004.1388017**
- **1 January 1998, GENERALIZED COHERENT MULTICARRIER SYSTEMS FOR MOBILE COMMUNICATIONS, SHAKER VERLAG, AACHEN, PAGE(S) 7 - 23, ISBN: 978-3-8265-4382-1, XP002791787**

**Beschreibung**

Technisches Gebiet

Ausführungsbeispiele gemäß der vorliegenden Erfindung beziehen sich auf Empfänger zum Empfangen eines Kombinationssignals, das zwei separate Signalanteile aufweist, deren Impulse zueinander verschoben sind und/oder deren Trägerschwingungen eine Phasendifferenz aufweisen.

Weitere Ausführungsbeispiele gemäß der Erfindung beziehen sich auf Verfahren zum Empfangen eines Kombinationssignals.

Weitere Ausführungsbeispiele gemäß der Erfindung beziehen sich auf entsprechende Computerprogramme.

Ausführungsbeispiele gemäß der Erfindung beziehen sich allgemein gesprochen auf eine Optimierung eines 2-Nutzer-Empfängers.

Hintergrund der Erfindung

Bei der digitalen Informationsübertragung tritt oft bzw. meist der Fall auf, dass sich zwei oder mehrere gleichartige, datentragende Nachrichtensignale auf dem Übertragungsweg additiv überlagern bzw. bereits als überlagerte Signale von einem Sender abgegeben werden. Solange für eine Trennbarkeit der Signale durch die Anwendung eines Multiplex-Verfahrens sendeseitig Sorge getragen wird, z. B. durch Nutzung unterschiedlicher Frequenzbereiche (Frequenzmultiplex oder "Frequency Division Multiplex": FDM), disjunkter Zeitschlitze (Zeit-Multiplex oder "Time Division Multiplex": TDM), unterschiedlicher Codes (Codemultiplex bzw. "Code Division Multiplex Access": CDMA) oder verschiedene räumliche Ausbreitungsrichtungen und deren Auflösung durch mehrere räumlich getrennte Empfangsantennen (räumlicher Multiplex oder "Space-Division Multiple Access" durch MIMO-Übertragung: SDMA) stellt dies keinerlei Problem dar und ist seit Beginn der elektrischen Nachrichtentechnik bekannt.

Komplizierter wird die Situation, wenn die Signale unkoordiniert gleichzeitig im gleichen Frequenzband überlagern. Solange sich hierbei die Empfangssignale bezüglich der Empfangsleistung, der Übertragungsraten (Bit pro Symbol) und/oder ihrer Leistungseffizienz deutlich unterscheiden, ist oftmals eine sukzessive Demodulation, Detektion und Decodierung möglich, d. h. eine Detektion des jeweils stärksten Signals und dessen Subtraktion vom empfangenen Summensignal nach Re-Codierung und Re-Modulation anhand der detektierten Daten. Unter bestimmten Randbedingungen kann diese Vorgehensweise sogar eine informationstheoretisch optimale Lösung darstellen.

Es wurde erkannt, dass bei weniger ausgeprägten Unterschieden in den Empfangsleistungen und/oder Leistungseffizienzen der einzelnen Signale ein iteratives Vorgehen empfehlenswert sein kann, wobei eine den geschätzten Wahrscheinlichkeiten der Datensymbole entsprechende Teilsubtraktion von interferierenden Signalen erfolgt und in mehreren Iterationsschritten eine Ausprägung der Wahrscheinlichkeiten zugunsten jeweils einem Datensymbol erfolgen kann.

Es hat sich gezeigt, dass bei nahezu gleichstarken und gleich leistungseffizienten Signalen meist nur die Anwendung eines optimalen Mehrnutzer (Multi-User) Empfängers (oder eines zumindest annähernd optimalen Mehrnutzer-Empfängers) ein gangbarer Weg ist. Die überlagerten Signale werden als ein Signal aufgefasst, das pro Modulationsschritt alle Datensymbole repräsentiert, die der Überlagerung der Einzelsignale entsprechen. Bei identischen Modulationsverfahren für N Einzelsignale mit je M Signalelementen je Modulationsschritt (M-stufiges Übertragungsverfahren) entsteht so ein äquivalentes Modulationsverfahren für die Empfangsseite mit bis zu $M^N$ Signalelementen, wobei mitunter in ungünstiger Weise gleiche bzw. sehr ähnliche Signalelemente für unterschiedliche Kombinationen der Einzeldatensymbole entstehen können. Hierdurch kann ein drastischer Kapazitätsverlust verursacht werden.

Als Beispiel sei eine phasengleiche Addition zweier BPSK-Signale (M = N = 2) angeführt, wobei aus der Überlagerung zweier Konstellationen {-1; +1} empfangsseitig die Konstellation {-2; 0; +2} entsteht. Ein eindeutiger Rückschluss auf die Sendesymbole bei Detektion des Empfangssymbols 0 ist auch im störungsfreien Fall nicht mehr möglich.

Treten bei einzelnen Signalen aufgrund dispersiver Verzerrungen (z. B. infolge Mehrwegausbreitung und/oder Reflexionen) Inter-Symbol-Interferenzen (ISI) auf, so entsteht für die optimale Mehr-Nutzer-Detektion ein bis zu $M^{NL}$-stufiges Signal, wobei L die maximale Länge der Inter-Symbol-Interferenz, ISI, gemäß den Symbolintervallen T bezeichnet. Die Erzeugung des Empfangssignals kann durch die Wirkungsweise eines Mealy-Automaten mit bis zu $(M^N)^{L-1}$ Gedächtniszuständen moduliert werden.

Es wurde erkannt, dass eine gemeinsame Optimaldetektion aller Signale mittels eines Trellis-Decodierverfahrens, vorzugsweise des Viterbi- oder des BCJR-Algorithmus, der beispielsweise in dem Buch "Trellis-Codierung: Grundlagen und Anwendungen in der digitalen Übertragungstechnik", Vol. 21 of Nachrichtentechnik" von J. Huber (Springer-Verlag, 1992) beschrieben ist, möglich ist.

Es wurde im Übrigen erkannt, dass die Zahl der Gedächtniszustände dabei zumeist so groß wird, dass eine Echtzeitimplementierung eines Trellis-Decoders zur optimalen Mehr-Nutzer-Detektion nicht mehr möglich ist.

Der Artikel von Rößler et al.: "A comparison of iterative demapping with iterative soft decision interference cancellation employing the distribution of interference", Proceeding/ 2004 IEEE 59 th vehicular technology conderence, Bd. 1, 17. Mai 2004, Seiten 570-574, Vol. 1, DOI: 10.119/VETECS.2004.1388017, ISBN: 978-0-7803-8255-8 beschreibt einen Empfänger für ein mit Intersymbol- und Merchfachzugriffsinterferenz behaftetes Kombinationssignal.

US 2009 / 0 161 749 A1 offenbart eine Basisstation, welche Sendesignale auf jeweils unterschiedlichen Unterträgern von zwei Mobilstationen als Kombinationssignal empfängt und abtastet.

Es besteht daher ein Bedarf nach einem verbesserten Konzept zur Mehrnutzerkommunikation, das einen verbesserten Kompromiss zwischen Komplexität und Empfangsqualität liefert. Ein Aufgabe der vorliegenden Erfindung ist es, ein Konzept bereit zu stellen, mit welchem eine Abschätzung der Sendesymbole von verschiedenen Signalanteilen vereinfacht wird.

Diese Aufgabe wird durch die Merkmale der unabhängigen Ansprüche gelöst.

Ein Ausführungsbeispiel gemäß der Erfindung schafft einen Empfänger zum Empfangen eines Kombinationssignals, das zwei separate Signalanteile aufweist, deren Impulse zueinander verschoben sind und/oder deren Trägerschwingungen eine Phasendifferenz aufweisen.

Der Empfänger weist optional zumindest ein an eine Sendeimpulsform der Impulse zumindest eines der Signalanteile angepasstes Filter auf.

Der Empfänger ist ausgelegt, um eine erste Serie von Abtastwerten (z.B. $y_1[k]$) unter Verwendung einer ersten Abtastung zu erhalten, wobei die erste Abtastung an eine Symbolphase des ersten Signalanteils angepasst ist (beispielsweise auf eine Symbolphase des ersten Signalanteils synchronisiert ist).

Der Empfänger ist ausgelegt, um eine zweite Serie von Abtastwerten (z.B. $y_2[k]$) unter Verwendung einer zweiten Abtastung, zu erhalten, wobei die zweite Abtastung an eine Symbolphase des zweiten Signalanteils angepasst ist (beispielsweise auf eine Symbolphase des zweiten Signalanteils synchronisiert ist).

Der Empfänger ist ausgelegt, um Wahrscheinlichkeiten (z.B. $p_{1,m}[k]$) von Sendesymbolen des ersten Signalanteils und Wahrscheinlichkeiten (z.B. $p_{2,m}[k]$) von Sendesymbolen des zweiten Signalanteils für eine Mehrzahl von Abtastzeitpunkten (k) basierend auf der ersten Serie von Abtastwerten und der zweiten Serie von Abtastwerten zu erhalten.

Der Empfänger ist ausgelegt, um basierend auf Abtastwerten (z.B. $y_1[k]$) der ersten Abtastung (also beispielsweise der auf den Symboltakt des ersten Signalanteils synchronisierten Abtastung) und geschätzten oder berechneten Wahrscheinlichkeiten (z.B. $p_{2,m}[k]$) für Symbole (zum Beispiel m=0 ... $M_2$-1) des zweiten Signalanteils ohne Berücksichtigung (bzw. unter Vernachlässigung) einer Intersymbolinterferenz zwischen Sendesymbolen des ersten Signalanteils in den Abtastwerten der ersten Abtastung Wahrscheinlichkeiten (z.B. $p_{1,m}[k]$) für Symbole (z.B. m=0... $M_1$-1) des ersten Signalanteils zu bestimmen.

Der Empfänger ist ferner ausgelegt, um basierend auf Abtastwerten (z.B. $y_2[k]$) der zweiten Abtastung (also der auf den Symboltakt des zweiten Signalanteils synchronisierten Abtastung) und geschätzten oder berechneten Wahrscheinlichkeiten (z.B. $p_{1,m}[k]$) für Symbole (z.B. m=0 ... $M_1$-1) des ersten Signalanteils ohne Berücksichtigung einer Intersymbolinterferenz zwischen Sendesymbolen des zweiten Signalanteils in den Abtastwerten der zweiten Abtastung (zum Beispiel aktualisierte) Wahrscheinlichkeiten (z.B. $p_{2,m}[k]$) für Symbole (z.B. m=0...$M_2$-1) des zweiten Signalanteils zu bestimmen.

Dieses Ausführungsbeispiel gemäß der vorliegenden Erfindung basiert auf der Erkenntnis, dass in manchen Situationen ein ausreichend gutes Empfangsergebnis bei einem Kombinationssignal, das zwei separate Signalanteile aufweist, erzielt werden kann, wenn das Kombinationssignal jeweils separat mit an die Symbolphasen der jeweiligen Signalanteile angepassten Abtastungen abgetastet wird, und wenn Wahrscheinlichkeiten von Sendesymbolen eines jeweils betrachteten Signalanteils dann ohne eine Berücksichtigung einer Intersymbolinterferenz zwischen Sendesymbolen des jeweiligen (aktuell betrachteten) Signalanteils, aber unter Berücksichtigung einer Interferenz durch Sendesymbole des jeweils anderen Signalanteils bestimmt werden.

Indem Wahrscheinlichkeiten von Sendesymbolen beispielsweise eines ersten Signalanteils basierend auf einer ersten Abtastung, die an die Symbolphase des ersten Signalanteils angepasst ist, erhalten werden, kann beispielsweise durch eine geeignete Wahl eines Abtasttakts der ersten Abtastung erreicht werden, dass die Intersymbolinterferenz zwischen den Sendesymbolen des ersten Signalanteils hierbei vernachlässigbar ist. Indem eine Wahrscheinlichkeitsinformation betreffend die Wahrscheinlichkeiten von Sendesymbolen des zweiten Signalanteils herangezogen wird, kann im Übrigen die Qualität der Schätzung von Wahrscheinlichkeiten von Sendesymbolen des ersten Signalanteils mit moderatem Aufwand noch einmal deutlich verbessert werden, da im Hinblick auf die Sendesymbole des zweiten Signalanteils bereits zur Verfügung stehende Information ausgenutzt wird, wobei diese Information beispielsweise auch iterativ verbessert werden kann. Allerdings ist es bei dem vorliegenden Konzept nicht erforderlich, eine Intersymbolinterferenz zwischen Sendesymbolen des gerade betrachteten Signalanteils (beispielsweise des zweiten Signalanteils), die sich beispielsweise aufgrund einer zur Impulsformung durchgeführten Filterung eingibt, zu berücksichtigen. So wurde nämlich erkannt, dass sich durch die Berücksichtigung der Intersymbolinterferenz für die Sendesymbole des jeweiligen Signalanteils, für den gerade Wahrscheinlichkeiten von Sendesymbolen bestimmt werden, in manchen Fällen nur eine geringfügige Verbesserung der Sendesymbol-Wahrscheinlichkeiten ergibt, die jedenfalls in manchen Situationen nicht in einem vorteilhaften Verhältnis zu dem damit verbundenen Mehraufwand steht.

Es wurde erkannt, dass es in manchen Fällen deutlich effizienter ist, das Kombinationssignal zweimal abzutasten, so dass in einer ersten Serie von Abtastwerten die Intersymbolinterferenz zwischen Sendesymbolen des ersten Signalanteils vernachlässigbar ist (beispielsweise durch eine geeignete Wahl der Abtastzeitpunkten), und so dass in einer zweiten Serie von Abtastwerten Intersymbolinterferenz zwischen Sendesymbolen des zweiten Signalanteils vernachlässigbar ist (beispielsweise durch eine geeignete Wahl von Abtastzeitpunkten). Es wurde erkannt, dass eine entsprechende zweifache Abtastung mit vertretbarem Aufwand realisierbar ist, und dass die entsprechende Vernachlässigung von Intersymbolinterferenz in Anbetracht der zweifachen Abtastung in manchen Fällen keine wesentliche Verschlechterung einer Empfangsqualität mit sich bringt.

Bei einem Ausführungsbeispiel des Empfängers sind Abtastzeitpunkte der ersten Abtastung so eingestellt (oder der Empfänger ist ausgelegt, um Abtastzeitpunkte der ersten Abtastung - beispielsweise durch Wahl der zugehörigen Symbolphase - so einzustellen), dass eine Abtastung eines Ausgangssignals eines signalangepassten Filters derart erfolgt, dass ein Ausgangssignalanteil des signalangepassten Filters, der auf dem ersten Signalanteil basiert, im Wesentlichen Intersymbol-Interferenz-frei abgetastet wird (beispielsweise durch Abtastung mit einem Symboltakt, wobei eine Symbolphase so gewählt ist, dass der erste Signalanteil "zu den optimalen Zeitpunkten", also beispielsweise ISI-frei abgetastet wird, beispielsweise derart, dass Abtastzeitpunkte um höchsten 5% oder um höchstens 10 Prozent einer Symbolphase von Nulldurchgängen einer Antwort des Signalangepassten Filters auf ein einzelnes Sendesymbol des ersten Signalanteils abweichen).

Weiterhin sind Abtastzeitpunkte der zweiten Abtastung so eingestellt (oder der Empfänger ist ausgelegt, um Abtastzeitpunkte der zweiten Abtastung - beispielsweise durch Wahl der zugehörigen Symbolphase - so einzustellen), dass eine Abtastung eines Ausgangssignals eines signalangepassten Filters derart erfolgt, dass ein Ausgangssignalanteil des signalangepassten Filters, der auf dem zweiten Signalanteil basiert, im Wesentlichen Intersymbol-Interferenz-frei abgetastet wird.

Durch die entsprechende Auswahl der Abtastzeitpunkte der ersten Abtastung und der zweiten Abtastung wird erreicht, dass beispielsweise in der ersten Serie von Abtastwerten die Intersymbolinterferenz zwischen Symbolen des ersten Signalanteils vernachlässigbar ist, und dass in der zweiten Serie von Abtastwerten die Intersymbolinterferenz zwischen Symbolen des zweiten Signalanteils vernachlässigbar ist. Somit kann durch die entsprechend angepasste zweifache Abtastung von einer Verwendung von komplizierten Intersymbolinterferenzmodellen, die Intersymbolinterferenz zwischen Symbolen desjenigen Signalanteils, für den gerade Symbolwahrscheinlichkeiten berechnet werden, abgesehen werden. Lediglich Beiträge von Sendesymbolen des anderen Signalanteils werden - gewichtet mit entsprechenden Wahrscheinlichkeiten - als "Störeinfluss" berücksichtigt, doch dies kann mit vertretbarem Aufwand erfolgen.

Bei einem Ausführungsbeispiel ist der Empfänger ausgelegt, um die erste Abtastung an die Symbolphase des ersten Signalanteils und an die Trägerphase des zweiten Signalanteils anzupassen (bzw. darauf zu synchronisieren). Weiterhin ist der Empfänger ausgelegt, um die zweite Abtastung an die Symbolphase des zweiten Signalanteils und an die Trägerphase des ersten Signalanteils anzupassen (bzw. darauf zu synchronisieren). Indem beispielsweise die erste Abtastung an die Symbolphase des ersten Signalanteils angepasst wird, kann erreicht werden, dass eine Intersymbolinterferenz zwischen Sendesymbolen des ersten Signalanteils in der ersten Serie von Abtastwerten vernachlässigbar ist. In ähnlicher Weise kann durch eine Anpassung der zweiten Abtastung an die Symbolphase des zweiten Signalanteils erreicht werden, dass eine Intersymbolinterferenz zwischen Sendesymbolen des zweiten Signalanteils in den Abtastwerten der zweiten Abtastung vernachlässigbar wird. Durch die Anpassung der ersten Abtastung an die Trägerphase des zweiten Signalanteils kann ferner erreicht werden, dass bei der Bestimmung des Einflusses der Sendesymbole des zweiten Signalanteils auf die erste Folge von Abtastwerten eine Phasendrehung zwischen den Stör-Beiträgen verschiedener Sendesymbole des zweiten Signalanteils auf einen gegebenen Wert der ersten Abtastung vermieden wird. In ähnlicher Weise wird durch die Anpassung der zweiten Abtastung an die Trägerphase des ersten Signalanteils erreicht, dass Stör-Beiträge des ersten Signalanteils auf die Abtastwerte der zweiten Abtastung keine (oder nur eine vernachlässigbare) Phasendrehung gegeneinander aufweisen. Somit wird durch die entsprechende Einstellung der ersten Abtastung und der zweiten Abtastung einerseits erreicht, dass Intersymbolinterferenz zwischen aufeinanderfolgenden Symbolen desjenigen Signalanteils, für den gerade Symbolwahrscheinlichkeiten bestimmt werden, vernachlässigt werden kann, und andererseits wird auch erreicht, dass eine Beeinflussung bzw. Störung durch den jeweils anderen Signalanteil - jedenfalls in einem relevanten Zeitintervall - keiner wesentlichen Phasendrehung unterliegt.

Dadurch wird eine Bestimmung bzw. Abschätzung der Sendesymbole der beiden Signalanteile deutlich vereinfacht.

Bei einem Ausführungsbeispiel ist der Empfänger ausgelegt, um eine Wahrscheinlichkeitsfunktion (beispielsweise die Exponentialfunktion in Gleichung (2.5)) auszuwerten (beispielsweise für eine Mehrzahl von verschiedenen Überlagerungen $i_{1,p}$, die durch verschiedene Folgen von Sendesymbolen des zweiten Signalanteils herrühren), die eine Wahrscheinlichkeit eines Sendesymbols (z.B. $a_{1,m}$) des ersten Signalanteils bei Vorliegen eines aktuellen Abtastwerts (z.B. $y_1[k]$) der ersten Abtastung und bei Vorliegen einer Überlagerung (z.B. $i_{1,p}$) aufgrund einer Folge (z.B. $a_{2,0}$; $a_{2,0}$; ...; $a_{2,0}$) von Sendesymbolen des zweiten Signalanteils sowie bei Vorliegen einer Rauschstörung (z.B. $v_3$) beschreibt, um

die Wahrscheinlichkeiten (z.B. $p_{1,m}[k]$) für Sendesymbole (z.B. $m=0...\ M_1-1$) des ersten Signalanteils zu bestimmen.

Ferner ist der Empfänger ausgelegt, um eine Wahrscheinlichkeitsfunktion (beispielsweise die Exponentialfunktion in Gleichung (3.4)) (beispielsweise für eine Mehrzahl von verschiedenen Überlagerungen $i_{2,p}$, die durch verschiedene Folgen von Sendesymbolen des ersten Signalanteils herrühren) auszuwerten, die eine Wahrscheinlichkeit eines Sendesymbols (z.B. $a_{2,m}$) des zweiten Signalanteils bei Vorlegen eines aktuellen Abtastwerts (z.B. $y_2[k]$) der zweiten Abtastung und bei Vorliegen einer Überlagerung (z.B. $i_{2,p}$) aufgrund einer Folge (z.B. $a_{1,0}$; $a_{1,0}$; ...; $a_{1,0}$) von Sendesymbolen des ersten Signalanteils sowie bei Vorliegen einer Rauschstörung (z.B. $v_3$) beschreibt, um die Wahrscheinlichkeiten (z.B. $p_{2,m}[k]$) für Symbole (z.B. $m=0...\ M_2-1$) des zweiten Signalanteils zu bestimmen.

Indem also beispielsweise eine entsprechende Wahrscheinlichkeitsfunktion ausgewertet wird, kann bestimmt werden, wie wahrscheinlich ein Sendesymbol des ersten Signalanteils unter der Annahme, dass eine bestimmte Folge von Sendesymbolen des zweiten Signalanteils in einer relevanten zeitlichen Umgebung gesendet wurde, übermittelt wurde. Hierbei ist es auch möglich, dass verschiedene Überlagerungen bzw. Überlagerungswerte, die durch verschiedene Kombinationen bzw. Folgen von Sendesymbolen des zweiten Signalanteils herrühren, wie auch deren Wahrscheinlichkeiten berücksichtigt werden. In anderen Worten, es kann ausgehend von einem Abtastwert der ersten Folge von Sendesymbolen bestimmt werden, wie wahrscheinlich verschiedene Sendesymbole des ersten Signalanteils in einem betrachteten Zeitschritt sind, wobei der Einfluss verschiedener möglicher Kombinationen bzw. Folgen von Sendesymbolen des zweiten Signalanteils auf den gerade betrachteten Abtastwert der ersten Folge von Abtastwerten sowie Wahrscheinlichkeiten für diese verschiedenen Kombinationen bzw. Folgen von Sendesymbolen des zweiten Signalanteils ebenfalls berücksichtigt werden. Entsprechend können die Wahrscheinlichkeiten von Sendesymbolen des ersten Signalanteils zuverlässig und in effizienter Weise ermittelt werden, wobei beispielsweise für eine Berechnung einer Wahrscheinlichkeit eines Sendesymbols des ersten Signalanteils angenommene, geschätzte oder bestimmte Wahrscheinlichkeiten für Sendesymbole des zweiten Signalanteils in einer relevanten (zeitlichen) Umgebung eines aktuellen Zeitschritts, ein (einziger) Abtastwert der ersten Folge von Abtastwerten und eine Information über eine Rauschstörung (die beispielsweise angenommen, geschätzt oder berechnet werden kann) benötigt bzw. ausgewertet werden. In entsprechender Weise können auch sehr effizient Wahrscheinlichkeiten von Sendesymbolen des zweiten Signalanteils ermittelt werden.

Bei einem Ausführungsbeispiel ist der Empfänger ausgelegt, um die Wahrscheinlichkeitsfunktion (beispielsweise die Exponentialfunktion in Gleichung (2.5)), die eine Wahrscheinlichkeit eines Sendesymbols (z.B. $a_{1,m}$) des ersten Signalanteils beschreibt, für eine Mehrzahl von verschiedenen Überlagerungen (z.B. $i_{1,p}$), die durch verschiedene Folgen von Sendesymbolen des zweiten Signalanteils herrühren, auszuwerten, und um Ergebnisse der Auswertungen entsprechend zugehörigen Wahrscheinlichkeiten (z.B. $\Pr\{i_1[k]=i_{1,p}\}$) der jeweiligen (zugehörigen) Folgen von Sendesymbolen des zweiten Signalanteils zu gewichten, um Wahrscheinlichkeitsbeiträge zu einer Wahrscheinlichkeit (z.B. $p_{1,m}[k]$) für ein Sendesymbol (z.B. $m$) des ersten Signalanteils zu erhalten, und um die Wahrscheinlichkeitsbeiträge, die zu einem gleichen Sendesymbol (z.B. $m$) des ersten Signalanteils zugeordnet sind, zu summieren, um die Wahrscheinlichkeit (z.B. $p_{1,m}[k]$) für das Sendesymbol (z.B. $m$) des ersten Signalanteils zu erhalten.

Bei einem Ausführungsbeispiel ist der Empfänger ausgelegt, um bei einer Auswertung der Wahrscheinlichkeitsfunktion (2.5) einen zeitlich variablen Beitrag eines Sendesymbols des ersten Signalanteils, der sich aufgrund einer Differenz von Trägerfrequenzen des ersten Signalanteils und des zweiten Signalanteils ergibt, zu berücksichtigen.

Durch die entsprechende Vorgehensweise kann beispielsweise eine Abweichung von Trägerfrequenzen zwischen dem ersten Signalanteil und dem zweiten Signalanteil in effizienter Weise berücksichtigt werden. Der Beitrag von Sendesymbolen des ersten Signalanteils kann nämlich in zeitlich variabler Weise gewichtet werden, indem er beispielsweise mit einem zeitlich veränderlichen komplexen Zeiger multipliziert wird. Somit sind verschiedene Signalanteile auch dann ohne größere Probleme detektierbar, wenn die Trägerfrequenzen sich etwas unterscheiden.

Alternativ oder zusätzlich ist der Empfänger ausgelegt, um die Wahrscheinlichkeitsfunktion (beispielsweise die Exponentialfunktion in Gleichung (3.4)), die eine Wahrscheinlichkeit eines Sendesymbols (z.B. $a_{2,m}$) des zweiten Signalanteils beschreibt, für eine Mehrzahl von verschiedenen Überlagerungen (z.B. $i_{2,p}$), die durch verschiedene Folgen von Sendesymbolen des ersten Signalanteils herrühren, auszuwerten, und um Ergebnisse der Auswertungen entsprechend zugehörigen Wahrscheinlichkeiten (z.B. $\Pr\{i_2[k]=i_{2,p}\}$) der jeweiligen (zugehörigen) Folgen von Sendesymbolen des ersten Signalanteils zu gewichten, um Wahrscheinlichkeitsbeiträge zu einer Wahrscheinlichkeit (z.B. $p_{2,m}[k]$) für ein Sendesymbol (z.B. $m$) des zweiten Signalanteils zu erhalten, und um die Wahrscheinlichkeitsbeiträge, die zu einem gleichen Sendesymbol (z.B. $m$) des zweiten Signalanteils zugeordnet sind, zu summieren, um die Wahrscheinlichkeit (z.B. $p_{2,m}[k]$) für das Sendesymbol (z.B. $m$) des zweiten Signalanteils zu erhalten.

Bei einem Ausführungsbeispiel ist der Empfänger ausgelegt, um bei einer Auswertung der zweiten Wahrscheinlichkeitsfunktion einen zeitlich variablen Beitrag eines Sendesymbols des zweiten Signalanteils, der sich aufgrund einer Differenz von Trägerfrequenzen des ersten Signalanteils und des zweiten Signalanteils ergibt, zu berücksichtigen.

Durch die entsprechende Vorgehensweise kann wiederum eine Differenz von Trägerfrequenzen der beiden Signalanteile in sehr einfacher und effizienter Weise berücksichtigt werden.

Indem bei einer Bestimmung einer Wahrscheinlichkeit eines (möglichen) Sendesymbols des ersten Signalanteils verschiedene mögliche Überlagerungen (also "Störungen" durch den zweiten Signalanteil), die durch verschiedene Folgen von Sendesymbolen des zweiten Signalanteils herrühren, berücksichtigt werden, kann eine besonders zuverlässige Bestimmung der Wahrscheinlichkeit erzielt werden. Beispielsweise können für die verschiedenen möglichen Kombinationen bzw. Folgen von Sendesymbolen des zweiten Signalanteils, die einen Einfluss auf einen Abtastwert der ersten Folge von Abtastwerten, der für eine aktuelle Berechnung herangezogen wird, haben, Wahrscheinlichkeiten bestimmt werden, wobei eine Gesamtwahrscheinlichkeit für eine Folge bzw. Kombination von Sendesymbolen des zweiten Signalanteils unschwer durch eine Multiplikation von Wahrscheinlichkeiten der einzelnen Sendesymbole, die zu der Folge bzw. Kombination gehören, ermittelt werden kann. Eine Information, wie wahrscheinlich ein bestimmtes Sendesymbol des ersten Signalanteils in Anbetracht eines (einzelnen) Abtastwerts der ersten Folge von Abtastwerten und in Anbetracht eines bestimmten (Stör-) Beitrags des zweiten Signalanteils (der sich aufgrund einer bestimmten Folge von Sendesymbolen des zweiten Signalanteils ergibt) ist, kann dann beispielsweise mit der Wahrscheinlichkeit für die bestimmte Folge von Sendesymbolen des zweiten Signalanteils gewichtet werden. Insofern können beispielsweise gewichtete Wahrscheinlichkeiten für das Sendesymbol des ersten Signalanteils, die sich in Anbetracht verschiedener möglicher Folgen von Sendesymbolen des zweiten Signalanteils ergeben, kombiniert bzw. aufsummiert werden, um eine Wahrscheinlichkeit für ein gerade betrachtetes Sendesymbol des ersten Signalanteils zu bestimmen. Auf diese Weise können dann Wahrscheinlichkeiten für alle möglichen Sendesymbole des ersten Signalanteils in einem vorgegebenen Zeitschritt ermittelt werden. Auf diese Weise kann der Einfluss des zweiten Signalanteils auf die Abtastwerte der ersten Abtastung in effizienter Weise berücksichtigt werden, und es kann mit moderater Komplexität eine zuverlässige Abschätzung der Wahrscheinlichkeiten der Sendesymbole des ersten Signalanteils erfolgen. Die Wahrscheinlichkeiten für ein bestimmtes Sendesymbol, die sich in Anbetracht verschiedener möglicher Folgen von Sendesymbolen des zweiten Signalanteils ergeben, können hier als Wahrscheinlichkeitsbeiträge aufgefasst werden und können also - gewichtet entsprechend den Wahrscheinlichkeiten der verschiedenen Folgen von Sendesymbolen des zweiten Signalanteils - aufsummiert werden. Eine entsprechende Operation ist leicht durchführbar, und der Beitrag einer Kombination von Sendesymbolen des zweiten Signalanteils auf einen gerade betrachteten Abtastwert der ersten Folge von Abtastwerten kann bei Kenntnis der Abtastzeitpunkte sowie der Sendesymbol-Signalform der Sendesymbole des zweiten Signalanteils ohne größere Schwierigkeiten ermittelt werden. Insofern kann die entsprechende Berechnung effizient durchgeführt werden.

In entsprechender Weise kann die Berechnung auch für die Wahrscheinlichkeiten von Sendesymbolen des zweiten Signalanteils durchgeführt werden.

Bei einem Ausführungsbeispiel ist der Empfänger ausgelegt, um die Wahrscheinlichkeit $p_{1,m}[k]$ für ein Symbol mit Sendesymbolindex m des ersten Signalanteils gemäß

$$p_{1,m}[k] = c_{1,sbs} \sum_{p=0}^{M_2^{L_{dec}+1}-1} \Pr\{i_1[k] = i_{1,p}\} e^{-\frac{\left| y_1[k] - (v_1 a_{1,m} + i_{1,p}) \right|^2}{v_3^2}}$$

zu erhalten, wobei $c_{1,sbs}$ ein Normierungsfaktor ist, wobei p eine Laufvariable ist, die unterschiedliche Überlagerungen $i_{1,p}$, die von verschiedene Folgen von Sendesymbolen des zweiten Signalanteils herrühren, bezeichnet, wobei $M_2$ eine Anzahl von Konstellationspunkten (beispielsweise von verschiedenen möglichen Sendesymbolen) des zweiten Signalanteils ist, wobei $L_{dec}$ eine relevante Ausdehnung einer Intersymbolinterferenz zwischen Sendesymbolen des zweiten Signalanteils beschreibt. $\Pr\{i_1[k] = i_{1,p}\}$ beschreibt eine Wahrscheinlichkeit für das Vorliegen einer Folge von Sendesymbolen des zweiten Signalanteils, die zu der Überlagerung $i_{1,p}$ führen, und $y_1[k]$ ist ein Abtastwert der ersten Abtastung zu einem Zeitschritt k. $v_1$ ist ein Verstärkungsfaktor des ersten Signalanteils, $a_{1,m}$ ist ein (beispielsweise komplexwertiges) Sendesymbol (beispielsweise repräsentiert durch einen Konstellationspunkt) des ersten Signalanteils mit Sendesymbolindex (oder Konstellationspunktindex) m, oder $a_{1,m}$ beschreibt einen zeitvariablen Beitrag eines Sendesymbols des ersten Signalanteils mit einem Sendesymbolindex m zu dem Abtastwert $y_1[k]$, der sich aufgrund einer Differenz zwischen einer Trägerfrequenz des ersten Signalanteils und einer Trägerfrequenz des zweiten Signalanteils ergibt (also beispielsweise entsprechend $a_{1,m}[k]$ gemäß Gleichung (3.10) definiert ist). $i_{1,p}$ ist eine Überlagerung, die von einer Folge von Sendesymbolen des zweiten Signalanteils herrührt. $v_3$ beschreibt eine Rauschintensität.

Alternativ oder zusätzlich ist der Empfänger ausgelegt, um die Wahrscheinlichkeit $p_{2,m}[k]$ für ein Symbol mit Sendesymbolindex m des zweiten Signalanteils gemäß

$$p_{2,m}[k] = c_{2,\text{sbs}} \sum_{p=0}^{M_1^{L_{\text{dec}}+1}-1} \Pr\{i_2[k] = i_{2,p}\} e^{\frac{\left| y_2[k] - (v_2 a_{2,m} + i_{2,p}) \right|^2}{v_3^2}}$$

zu erhalten, wobei $c_{2,\text{sbs}}$ ein Normierungsfaktor ist, wobei p eine Laufvariable ist, die unterschiedliche Überlagerungen $i_{2,p}$, die von verschiedene Folgen von Sendesymbolen des ersten Signalanteils herrühren, bezeichnet, wobei $M_1$ eine Anzahl von Konstellationspunkten (beispielsweise von verschiedenen möglichen Sendesymbolen) des ersten Signalanteils ist, und wobei $L_{\text{dec}}$ eine relevante Ausdehnung einer Intersymbolinterferenz zwischen Sendesymbolen des ersten Signalanteils beschreibt. $\Pr\{i_2[k]=i_{2,p}\}$ beschreibt eine Wahrscheinlichkeit für das Vorliegen einer Folge von Sendesymbolen des ersten Signalanteils, die zu der Überlagerung $i_{2,p}$ führen, $y_2[k]$ ist ein Abtastwert der zweiten Abtastung zu einem Zeitschritt k, $v_2$ ist ein Verstärkungsfaktor des zweiten Signalanteils, und $a_{2,m}$ ist ein (beispielsweise komplexwertiges) Sendesymbol (beispielsweise repräsentiert durch einen Konstellationspunkt) des zweiten Signalanteils mit Sendesymbolindex (oder Konstellationspunktindex) m, oder $a_{2,m}$ beschreibt einen zeitvariablen Beitrag eines Sendesymbols des zweiten Signalanteils mit einem Sendesymbolindex m zu dem Abtastwert $y_2[k]$, der sich aufgrund einer Differenz zwischen einer Trägerfrequenz des zweiten Signalanteils und einer Trägerfrequenz des ersten Signalanteils ergibt (also beispielsweise entsprechend $a_{2,m}[k]$ gemäß Gleichung (3.11) definiert ist). $i_{2,p}$ ist eine Überlagerung, die von einer Folge von Sendesymbolen des ersten Signalanteils herrührt, und $v_3$ beschreibt eine Rauschintensität .

Die entsprechende Berechnung der Wahrscheinlichkeiten von Sendesymbolen des ersten Signalanteils und von Wahrscheinlichkeiten von Sendesymbolen des zweiten Signalanteils hat sich als sehr effizient herausgestellt und bringt in vielen Situationen trotz der vergleichsweise geringen Komplexität gute Ergebnisse. Im Übrigen sind die verschiedenen Summanden mit vergleichsweise geringem Aufwand berechenbar. Beispielsweise kann die Wahrscheinlichkeit $\Pr\{i_1[k]=i_{1,p}\}$, die angibt, wie wahrscheinlich es ist, dass Sendesymbole des zweiten Signalanteils einen Beitrag $i_{1,p}$ zu einem aktuell betrachteten Abtastwert $y_1[k]$ der ersten Folge von Abtastwerten liefern, bestimmt werden, indem angenommene, geschätzte oder berechnete Wahrscheinlichkeiten von Sendesymbolen des zweiten Signalanteils, die zu dem Wert $i_{1,p}$ beitragen, multipliziert werden. In anderen Worten, geht man davon aus, dass eine bestimmte Folge von Sendesymbolen des zweiten Signalanteils einen Beitrag $i_{1,p}$ zu dem Abtastwert $y_1[k]$ liefert, so kann man die Wahrscheinlichkeit dieser Folge von Sendesymbolen des zweiten Signalanteils unschwer abschätzen oder berechnen, wobei angenommene, abgeschätzte oder berechnete Wahrscheinlichkeiten für die einzelnen Sendesymbole des zweiten Signalanteils (beispielsweise über einen relevanten Zeitbereich) herangezogen werden können. Welche Beiträge $i_{1,p}$ verschiedene Folgen von Sendesymbolen des zweiten Signalanteils zu dem Abtastwert $y_1[k]$ liefern können, ist beispielsweise anhand einer Kenntnis der Abtastzeitpunkte der ersten Abtastung und der zweiten Abtastung bzw. basierend auf einer Kenntnis einer zeitlichen Verschiebung zwischen den Sendesymbolen des ersten Signalanteils und den Sendesymbolen des zweiten Signalanteils, sowie auch basierend auf einer Kenntnis der Sendesignal-Impulsform der Sendesymbole des zweiten Signalanteils ohne größere Probleme möglich. Diesbezüglich sei darauf hingewiesen, dass typischerweise mehrere zeitlich aufeinanderfolgende Sendesymbole des zweiten Signalanteils einen Beitrag zu einem einzigen Abtastwert $y_1[k]$ liefern, wobei dieser Beitrag sich als Summe der Teilbeiträge der einzelnen Sendesymbole ergibt.

Der Verstärkungsfaktor $v_1$, der eine Intensität des ersten Signalanteils beschreibt, und die Rauschintensität $v_3$ sind im Übrigen auch ohne weiteres bestimmbar oder abschätzbar.

Diesbezüglich sei im Übrigen darauf hingewiesen, dass die Summation optional verkürzt werden kann (zum Beispiel, indem eine Zahl der Summanden verringert wird), weil beispielsweise mehrere verschiedene Kombinationen von Sendesymbolen des zweiten Signalanteils zu ähnlichen oder gleichen (Stör-) Beiträgen $i_{1,p}$ führen.

Somit ist festzuhalten, dass die Bestimmung der Wahrscheinlichkeiten für Sendesymbole des ersten Signalanteils gemäß der oben erläuterten Gleichung in sehr effizienter Weise erfolgen kann, wobei einerseits die Eingangsgrößen der genannten Gleichung ohne grö-ßeren Aufwand bestimmbar sind, und andererseits auch die Gleichung ohne größere Probleme auswertbar ist.

Entsprechendes gilt auch für die Bestimmung der Wahrscheinlichkeiten von Sendesymbolen des zweiten Signalanteils, wobei die hierzu verwendete Gleichung in struktureller Hinsicht der zur Bestimmung der Wahrscheinlichkeiten der Sendesymbole des ersten Signalanteils verwendeten Gleichung entspricht.

Bei einem Ausführungsbeispiel ist der Empfänger ausgelegt, um (beispielsweise iterativ) basierend auf einer aktualisierten Schätzung der Wahrscheinlichkeiten von Sendesymbolen eines der beiden Signalanteile (beispielsweise des ersten bzw. des zweiten Signalanteils) eine verbesserte Schätzung der Wahrscheinlichkeiten von Sendesymbolen eines anderen der beiden Signalanteile (beispielsweise des zweiten bzw. des ersten Signalanteils) zu erhalten.

Durch die entsprechende iterative Vorgehensweise können die Wahrscheinlichkeiten von Sendesymbolen des ersten Signalanteils und bevorzugt auch die Wahrscheinlichkeiten von Sendesymbolen des zweiten Signalanteils immer weiter verbessert werden. Beispielsweise können bei einer erstmaligen Bestimmung von Wahrscheinlichkeiten von Sendesymbolen des ersten Signalanteils angenommene Wahrscheinlichkeiten von Sendesymbolen des zweiten Signalanteils verwendet werden (beispielsweise um Wahrscheinlichkeiten verschiedener Beiträge des zweiten Signalanteils zu einem vorgegebenen Abtastwert der ersten Folge von Abtastwerten zu bestimmen). Somit können beispielsweise Wahrscheinlichkeiten von Sendesymbolen des ersten Signalanteils bestimmt werden, und diese bestimmten Wahrscheinlichkeiten von Sendesymbolen des ersten Signalanteils können bei einer Bestimmung von Wahrscheinlichkeiten von Sendesymbolen des zweiten Signalanteils herangezogen werden, beispielsweise bei einer Bestimmung von Wahrscheinlichkeiten von Beiträgen des ersten Signalanteils zu einem bestimmten Abtastwert der zweiten Folge von Abtastwerten. Bei der erstmaligen Bestimmung von Wahrscheinlichkeiten von Sendesymbolen des zweiten Signalanteils muss also nicht auf angenommene Wahrscheinlichkeiten von Sendesymbolen des ersten Signalanteils zurückgegriffen werden, sondern es kann auf die in dem ersten Schritt durchgeführte Bestimmung von Wahrscheinlichkeiten von Sendesymbolen des ersten Signalanteils zurückgegriffen werden. Bei einer wiederholten Bestimmung von Wahrscheinlichkeiten von Sendesymbolen des ersten Signalanteils muss dann auch nicht mehr mit angenommenen Werten bzw. Startwerten für die Wahrscheinlichkeiten von Sendesymbolen des zweiten Signalanteils gearbeitet werden, sondern es können die vorher bestimmten bzw. berechneten Wahrscheinlichkeiten von Sendesymbolen des zweiten Signalanteils herangezogen werden. Somit ist es beispielsweise möglich, die Wahrscheinlichkeiten von Sendesymbolen des ersten Signalanteils in mehreren iterativen Schritten zu verbessern, wobei zwischen den einzelnen Berechnungsschritten für die Wahrscheinlichkeiten von Sendesymbolen des ersten Signalanteils jeweils verbesserte bzw. präzisierte Wahrscheinlichkeiten von Sendesymbolen des zweiten Signalanteils bestimmt werden (und umgekehrt). Insofern können ausgehend von einem Zustand, in dem sowohl Sendesymbole des ersten Signalanteils als auch Sendesymbole des zweiten Signalanteils unbekannt sind, immer bessere Schätzungen für die Wahrscheinlichkeiten der Sendesymbole des ersten Signalanteils und für die Wahrscheinlichkeiten von Sendesymbolen des zweiten Signalanteils erhalten werden, wobei eine verbesserte Schätzung der Wahrscheinlichkeiten der Sendesymbole eines der Signalanteile typischerweise auch zu einer Verbesserung der Schätzung der Wahrscheinlichkeiten der Sendesymbole des anderen der Signalanteile führt. Somit ist es möglich, in einer vergleichsweise geringen Zahl von Iterationsschritten gute Schätzwerte für die Wahrscheinlichkeiten der Sendesymbole beider Signalanteile zu erhalten.

Ein Ausführungsbeispiel gemäß der vorliegenden Erfindung schafft ein Verfahren zum Empfangen eines Kombinationssignals, das zwei separate Signalanteile aufweist, deren Impulse zueinander verschoben sind und/oder deren Trägerschwingungen eine Phasendifferenz aufweisen.

Das Verfahren umfasst ein Erhalten einer erste Serie von Abtastwerten (z.B. $y_1[k]$) unter Verwendung einer ersten Abtastung, wobei die erste Abtastung an eine Symbolphase des ersten Signalanteils angepasst ist (beispielsweise auf eine Symbolphase des ersten Signalanteils synchronisiert ist).

Das Verfahren umfasst ferner ein Erhalten einer zweiten Serie von Abtastwerten (z.B. $y_2[k]$) unter Verwendung einer zweiten Abtastung, wobei die zweite Abtastung an eine Symbolphase des zweiten Signalanteils angepasst ist (beispielsweise auf eine Symbolphase des zweiten Signalanteils synchronisiert ist).

Das Verfahren umfasst ferner ein Erhalten von Wahrscheinlichkeiten (z.B. $p_{1,m}[k]$) von Sendesymbolen des ersten Signalanteils und von Wahrscheinlichkeiten (z.B. $p_{2,m}[k]$) von Sendesymbolen des zweiten Signalanteils für eine Mehrzahl von Abtastzeitpunkten (k) basierend auf der ersten Serie von Abtastwerten und der zweiten Serie von Abtastwerten,
wobei basierend auf Abtastwerten (z.B. $y_1[k]$) der ersten Abtastung (also der auf den Symboltakt des ersten Signalanteils synchronisierten Abtastung) und geschätzten oder berechneten Wahrscheinlichkeiten (z.B. $p_{2,m}[k]$) für Symbole (z.B. $m=0 \ldots M_2-1$) des zweiten Signalanteils ohne Berücksichtigung (bzw. unter Vernachlässigung) einer Intersymbolinterferenz zwischen Sendesymbolen des ersten Signalanteils in den Abtastwerten der ersten Abtastung Wahrscheinlichkeiten (z.B. $p_{1,m}[k]$) für Symbole (z.B. $m=0\ldots M_1-1$) des ersten Signalanteils bestimmt werden, und wobei basierend auf Abtastwerten (z.B. $y_2[k]$) der zweiten Abtastung (also der auf den Symboltakt des zweiten Signalanteils synchronisierten Abtastung) und geschätzten oder berechneten Wahrscheinlichkeiten (z.B. $p_{1,m}[k]$) für Symbole (z.B. $m=0 \ldots M_1-1$) des ersten Signalanteils ohne Berücksichtigung einer Intersymbolinterferenz zwischen Sendesymbolen des zweiten Signalanteils in den Abtastwerten der zweiten Abtastung (zum Beispiel aktualisierte) Wahrscheinlichkeiten (z.B. $p_{2,m}[k]$) für Symbole (z.B. $m=0\ldots M_2-1$) des zweiten Signalanteils bestimmt werden.

Das Verfahren basiert auf denselben Überlegungen wie die oben beschriebene Vorrichtung. Das Verfahren kann im Übrigen um alle Merkmale, Funktionalitäten und Details ergänzt werden, die hierin im Hinblick auf die erfindungsgemäße Vorrichtung beschrieben bzw. offenbart sind. Das Verfahren kann um diese Merkmale, Funktionalitäten und Details sowohl einzeln als auch in Kombination ergänzt werden. Die Merkmale, Funktionalitäten und Details, die hiermit auf ein Verfahren beschrieben sind, können im Übrigen natürlich auch durch die beschriebenen Vorrichtungen realisiert werden.

Ein Ausführungsbeispiel schafft ein Computerprogramm mit einem Programmcode zur Durchführung des Verfahrens, wenn das Programm auf einem Computer abläuft.

Das Computerprogramm kann naturgemäß um alle Merkmale, Funktionalitäten und Details ergänzt werden, die hierin beschrieben sind.

Indem Wahrscheinlichkeiten für Symbole des ersten Signalanteils beispielsweise in analoger Weise erhalten werden wie die Wahrscheinlichkeiten für Symbole des zweiten Signalanteils, kann beispielsweise eine gleichmäßig hohe Zuverlässigkeit bei der Schätzung von Symbolen beider Signalanteile erreicht werden. Die Kenntnis über die Inter-Symbol-Interferenz kann auch im Hinblick auf die Bestimmung beider Signalanteile eingesetzt werden, ohne dass sich eine exzessive Komplexität ergibt.

Figurenkurzbeschreibung

Ausführungsbeispiele gemäß der vorliegenden Erfindung werden nachfolgend Bezug nehmend auf die beiliegenden Figuren näher erläutert.

Es zeigen:

Fig. 1 ein Blockschaltbild eines Empfängers, gemäß einem Ausführungsbeispiel der vorliegenden Erfindung;

Fig. 2a, 2b ein Flussdiagramm eines Konzepts zur Bestimmung von Wahrscheinlichkeiten von Sendesymbolen von zwei Signalanteilen, gemäß einem Ausführungsbeispiel der vorliegenden Erfindung;

Fig. 3 ein Blockschaltbild eines Empfängers gemäß einem weiteren Ausführungsbeispiel der vorliegenden Erfindung;

Fig. 4a, 4b ein Flussdiagramm eines Konzepts zur Bestimmung von Wahrscheinlichkeiten für Symbole zweier Signalanteile, gemäß einem Ausführungsbeispiel der vorliegenden Erfindung;

Fig. 5 ein Flussdiagramm eines Verfahrens gemäß einem Ausführungsbeispiel der vorliegenden Erfindung;

Fig. 6 ein Flussdiagramm eines Verfahrens gemäß einem Ausführungsbeispiel der vorliegenden Erfindung;

Fig. 7a, 7b eine schematische Darstellung von zwei verschiedenen 2-Nutzer-Empfängerkonzepten.

Detaillierte Beschreibung der Ausführungsbeispiele

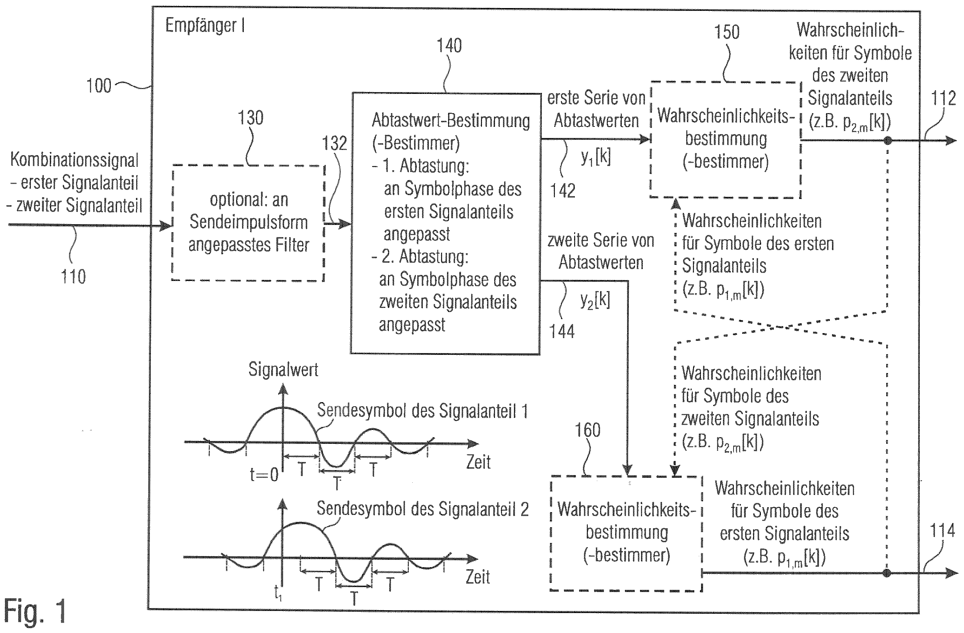

1. Empfänger gemäß Fig. 1

Fig. 1 zeigt ein Blockschaltbild eines Empfängers, gemäß einem Ausführungsbeispiel der vorliegenden Erfindung. Der Empfänger gemäß der Fig. 1 ist in seiner Gesamtheit mit 100 bezeichnet.

Der Empfänger 100 ist ausgelegt, um ein Kombinationssignal 110 zu empfangen und um basierend darauf eine Information 112 über Wahrscheinlichkeiten für Symbole des zweiten Signalanteils und eine Information 114 über Wahrscheinlichkeiten für Symbole des ersten Signalanteils zu liefern.

Dabei wird beispielsweise davon ausgegangen, dass das Kombinationssignal 110 zwei separate Signalanteile aufweist, deren Impulse zueinander verschoben sind und/oder deren Trägerschwingung eine Phasendifferenz aufweist. Die beiden Signalanteile, die in dem Kombinationssignal 110 enthalten sind, können beispielsweise von unterschiedlichen Sendern stammen, die beispielsweise gleichzeitig, also ohne Verwendung eines Zeitmultiplex oder Frequenzmultiplex oder Codemultiplex, in einem gleichen bzw. überlappenden Frequenzbereich senden.

Der Empfänger 100 umfasst optional ein an eine Sendeimpulsform angepasstes Filter 130, das beispielsweise das Kombinationssignal 110 empfängt und eine gefilterte Version 132 des Kombinationssignals 110 liefert. Das Filter 130 kann allerdings auch entfallen, so dass das Kombinationssignal 110 an die Stelle der gefilterten Version 132 des Kombinationssignals tritt.

Der Empfänger 100 umfasst ferner eine Abtastwertbestimmung bzw. einen Abtastwertbestimmer 140, der ausgelegt ist, um eine erste Serie 142 von Abtastwerten unter Verwendung einer ersten Abtastung zu erhalten, wobei die erste Abtastung an eine Symbolphase des ersten Signalanteils angepasst ist. Die Abtastwertbestimmung bzw. der Abtastwertbestimmer 140 ist ferner ausgelegt, um eine zweite Serie 144 von Abtastwerten unter Verwendung einer zweiten Abtastung zu erhalten, wobei die zweite Abtastung an eine Symbolphase des zweiten Signalanteils angepasst ist. Der Abtastwertbestimmer 140 empfängt zu diesem Zweck beispielsweise das Kombinationssignal 110 oder die gefilterte Version 132 des Kombinationssignals. Allerdings könnte der Abtastwertbestimmer 140 optional auch eine weiter vorverarbeitete Version des Kombinationssignals 110 empfangen. Eine derartige optionale Vorverarbeitung kann beispielsweise eine Filterung oder eine Frequenzumsetzung umfassen, oder auch jede andere Art von Vorverarbeitung, die typischerweise in einem Empfänger-Eingangsteil verwendet wird.

Diesbezüglich sei darauf hingewiesen, dass ein Eingangssignal der Abtastwertbestimmung 140 bzw. des Abtastwertbestimmers 140 (der beispielsweise zwei in einem Zeitversatz arbeitende Analog/Digital-Wandler umfassen kann, deren Abtastzeitpunkte entsprechend eingestellt bzw. eingeregelt werden) beispielsweise zwei überlagerte und zeitlich zueinander verschobene Signalanteile enthalten kann, von denen beispielsweise ein erster Signalanteil in einem ersten Zeitraster Inter-Symbol-Interferenz-frei abtastbar ist, und von denen beispielsweise ein zweiter Signalanteil in einem zweiten Zeitraster, das gegenüber dem ersten Zeitraster zeitlich verschoben ist, Inter-Symbol-Interferenz-frei abtastbar ist. Beispielsweise kann eine zu einem Sendesymbol gehörige Signalform des ersten Signalanteils zu einem Zeitpunkt t = 0 ein Maximum aufweisen und dann zu Zeiten T, 2T, 3T jeweils Nullstellen. Der erste Signalanteil kann beispielsweise aus jeweils um T verschobenen entsprechenden Signalformen bestehen. Hierbei ist ersichtlich, dass zu den Zeitpunkten T, 2T, 3T, usw. jeweils nur ein Anteil eines einzigen Sendesymbols des ersten Signalanteils zu dem Abtastwert beiträgt.

In ähnlicher Weise kann beispielsweise eine zu einem Sendesymbol gehörige Signalform des zweiten Signalanteils zu einem Zeitpunkt $t_1$ ein Maximum aufweisen und zu Zeitpunkten $t_1 + T$, $t_1 + 2T$, $t_1 + 3T$ Nullstellen aufweisen. Tastet man also den zweiten Signalanteil zu Zeiten $t_1$, $t_1 + T$, $t_1 + 2T$, $t_1 + 3T$, usw. ab, so umfassen entsprechende Abtastwerte jeweils nur einen Beitrag eines einzigen Sendesymbols des zweiten Signalanteils.

Geht man nun davon aus, dass in dem Eingangssignal der Abtastwertbestimmung 140 der erste Signalanteil und der zweite Signalanteil, beispielsweise viele Sendesymbole des ersten Signalanteils (zeitlich versetzt um ganzzahlige Vielfache von T) und viele Sendesymbole des zweiten Signalanteils (jeweils auch zeitversetzt um ganzzahlige Vielfache von T, aber zeitlich versetzt zu den Sendesymbolen des ersten Signalanteils), in überlagerter Form enthalten sind, so wird ersichtlich, dass hier ein nur schwer trennbares Signalgemisch entsteht. Es wird auch ersichtlich, dass beispielsweise bei Abtastung zum Zeitpunkt t = 0 (oder zu den Zeitpunkten t = k · T) ein Abtastwert beispielsweise einen Beitrag von nur einem einzigen Sendesymbol des ersten Signalanteils aber Beiträge von mehreren Sendesymbolen des zweiten Signalanteils aufweist. In ähnlicher Weise weist ein Abtastwert, der zu dem Zeitpunkt $t_1$ (oder zu den Zeitpunkten t = $t_1$ + k · T) abgetastet wird, nur einen Beitrag eines einzigen Sendesymbols des zweiten Signalanteils aber auch Beiträge mehrerer Sendesymbole des ersten Signalanteils auf (Inter-Symbol-Interferenz).

Die Abtastwertbestimmung 140 ist somit ausgelegt, um eine erste Serie 142 von Abtastwerten unter Verwendung einer ersten Abtastung zu erhalten, wobei die erste Abtastung an eine Symbolphase des ersten Signalanteils angepasst ist. Die erste Abtastung erfolgt beispielsweise zu den Zeitpunkten t = 0 + k · T, so dass der erste Signalanteil zumindest im Wesentlichen Inter-Symbol-Interferenz-frei abgetastet wird, und so dass der zweite Signalanteil Intersymbol-behaftet abgetastet wird (so dass beispielsweise auf einen der Abtastwerte nur ein einziges Sendesymbol des ersten Signalanteils einen (wesentlichen bzw. nicht-vernachlässigbaren) Einfluss hat, und so dass auf den Abtastwert mehrere Sendesymbole des zweiten Signalanteils einen (wesentlichen bzw. nicht-vernachlässigbaren) Einfluss haben).

Die Abtastwertbestimmung 140 ist ferner beispielsweise so ausgelegt, um eine zweite Serie 144 von Abtastwerten unter Verwendung einer zweiten Abtastung zu erhalten, wobei die zweite Abtastung an eine Symbolphase des zweiten Signalanteils angepasst ist. Beispielsweise kann die zweite Abtastung zu den Zeitpunkten t = $t_1$ + k · T erfolgen (wobei k eine natürliche Zahl ist). Damit wird beispielsweise der zweite Signalanteil zumindest im Wesentlichen Inter-Symbol-Interferenz-frei abgetastet, während hingegen der erste Signalanteil Inter-Symbol-Interferenz-behaftet abgetastet wird. Beispielsweise wird ein Abtastwert durch ein einziges Sendesymbol des zweiten Signalanteils aber durch mehrere Sendesymbole des ersten Signalanteils beeinflusst (bzw. wesentlich beeinflusst).

Es sei allerdings darauf hingewiesen, dass die erste Abtastung und die zweite Abtastung natürlich nicht notwendigerweise in idealer Weise erfolgen müssen. Vielmehr sind Toleranzen im Hinblick auf die Abtastzeitpunkte möglich, die beispielsweise +/-5% oder +/-10% oder +/-20% einer Abtast-Periodendauer T betragen können. Damit kann beispielsweise die erste Abtastung im Hinblick auf den ersten Signalanteil zumindest näherungsweise Inter-Symbol-Interferenz-frei sein, während im Hinblick auf den zweiten Signalanteil eine (nicht-vernachlässigbare) Inter-Symbol-Interferenz vorliegt. Beispielsweise kann die Inter-Symbol-Interferenz bei der Abtastung im Hinblick auf den ersten Signalanteil vernachlässigbar sein, beispielsweise dahin gehend, dass die Inter-Symbol-Interferenz im Hinblick auf den ersten Abtastwert kleiner als 5% oder kleiner als 10% oder kleiner als 20% eines durch ein aktuelles Sendesymbol verursachten Signalwerts ist. Entsprechendes kann auch im Hinblick auf die zweite Abtastung gelten.

Im Übrigen sei darauf hingewiesen, dass entsprechende Abtastzeitpunkte beispielsweise durch eine Analyse des Kombinationssignals 110 eingestellt bzw. eingeregelt werden können. Dabei wird beispielsweise auch eine Phasenverschiebung, die im Folgenden mit $\varphi_1 - \varphi_2$ bzw. $\varphi_2 - \varphi_1$ bezeichnet wird, bestimmbar.

Der Empfänger 100 umfasst ferner eine erste Wahrscheinlichkeitsbestimmung bzw. einen ersten Wahrscheinlichkeitsbestimmer 150, der ausgelegt ist, die erste Serie 142 von Abtastwerten zu erhalten und um basierend darauf Wahrscheinlichkeiten 112 für Symbole des zweiten Signalanteils zu erhalten. Der Empfänger 100 umfasst ferner eine zweite Wahrscheinlichkeitsbestimmung bzw. einen zweiten Wahrscheinlichkeitsbestimmer 160, der ausgelegt ist, um die zweite Serie 144 von Abtastwerten zu erhalten und basierend darauf Wahrscheinlichkeiten 114 für Symbole des ersten Signalanteils zu bestimmen. Insgesamt ist der Empfänger somit ausgelegt, um Wahrscheinlichkeiten von Sendesymbolen des ersten Signalanteils und Wahrscheinlichkeiten von Sendesymbolen des zweiten Signalanteils für eine Mehrzahl von Abtastzeitpunkten (beispielsweise bezeichnet mit k) basierend auf der ersten Serie 142 von Abtastwerten und der zweiten Serie 144 von Abtastwerten zu erhalten.

Die erste Wahrscheinlichkeitsbestimmung 150 ist beispielsweise ausgelegt, um basierend auf Abtastwerten der ersten Abtastung, also basierend auf Abtastwerten der ersten Serie 142 von Abtastwerten, und geschätzten oder berechneten Wahrscheinlichkeiten für Symbole des ersten Signalanteils unter Berücksichtigung einer Inter-Symbol-Interferenz zwischen Sendesymbolen des zweiten Signalanteils in den Abtastwerten der ersten Abtastung (bzw. der ersten Serie 142 von Abtastwerten) die Wahrscheinlichkeiten 112 für Symbole des zweiten Signalanteils zu bestimmen.

Ferner ist die zweite Wahrscheinlichkeitsbestimmung 160 beispielsweise ausgelegt, um basierend auf Abtastwerten der zweiten Abtastung (also basierend auf den Abtastwerten der zweiten Serie 144 von Abtastwerten) und geschätzten oder berechneten Wahrscheinlichkeiten für Symbole des zweiten Signalanteils unter Berücksichtigung einer Inter-Symbol-Interferenz zwischen Sendesymbolen des ersten Signalanteils in den Abtastwerten der zweiten Abtastung (also in der in den Abtastwerten der zweiten Serie 144 von Abtastwerten) Wahrscheinlichkeiten 114 für Symbole des ersten Signalanteils zu bestimmen.

Beispielsweise kann die erste Wahrscheinlichkeitsbestimmung eine Information über Wahrscheinlichkeiten für Symbole bzw. Sendesymbole des ersten Signalanteils auf verschiedene Weise erhalten. Die Wahrscheinlichkeiten der Symbole bzw. Sendesymbole des ersten Signalanteils können beispielsweise durch Vorgabewerte gebildet werden, z. B. am Anfang einer Auswertung, wenn empfängerseitig noch keine zusätzlichen Informationen vorhanden sind. Die Wahrscheinlichkeiten der Symbole bzw. Sendesymbole des ersten Signalanteils können aber auch von der zweiten Wahrscheinlichkeitsbestimmung 160 geliefert werden, wenn diese beispielsweise bereits durchgeführt wurde, wenn die erste Wahrscheinlichkeitsbestimmung stattfindet. In ähnlicher Weise kann die durch die zweite Wahrscheinlichkeitsbestimmung 160 verwendete Information über Wahrscheinlichkeiten für Symbole bzw. Sendesymbole des zweiten Signalanteils auf vorgegebenen Werten bzw. Anfangswerten basieren oder auf durch die erste Wahrscheinlichkeitsbestimmung 150 bestimmten Wahrscheinlichkeiten für Symbole bzw. Sendesymbole des zweiten Signalanteils 112.

In anderen Worten, die von den Wahrscheinlichkeitsbestimmungen 150, 160 verwendeten Wahrscheinlichkeiten für Symbole des jeweils anderen Signalanteils können entweder - beispielsweise als Anfangswerte - vorgegeben sein oder durch eine andere Vorrichtung bestimmt werden oder auch bei der jeweils anderen Wahrscheinlichkeitsbestimmung ermittelt werden. Insbesondere ist es auch möglich, das Verfahren iterativ durchzuführen, um so die Wahrscheinlichkeiten für Symbole bzw. Sendesymbole der Signalanteile abwechselnd zu verbessern.

Zusammenfassend ist somit festzuhalten, dass in dem Empfänger 100 zwei Serien 142, 144 von Abtastwerten im Rahmen einer Abtastwertbestimmung erzeugt werden, wobei eine erste Abtastung, bei der die erste Serie 142 von Abtastwerten erhalten wird, so eingestellt wird, dass der erste Signalanteil Inter-Symbol-Interferenz-frei bzw. Inter-Symbol-Interferenz-arm abgetastet wird, und wobei eine zweite Abtastung, bei der die zweite Serie 144 von Abtastwerten erhalten wird, so eingestellt wird, dass die zweite Serie 144 von Abtastwerten im Hinblick auf den zweiten Signalanteil Inter-Symbol-Interferenz-frei bzw. Inter-Symbol-Interferenz-arm erhalten wird. Basierend hierauf werden dann im Rahmen der ersten Wahrscheinlichkeitsbestimmung 150 Wahrscheinlichkeiten 112 für Symbole bzw. Sendesymbole des zweiten Signalanteils bestimmt, wobei sowohl angenommene oder vorher bestimmte Wahrscheinlichkeiten für Sendesymbole des ersten Signalanteils als auch Informationen über die Inter-Symbol-Interferenz zwischen den Symbolen des zweiten Signalanteils berücksichtigt werden. Beispielsweise kann anhand der Kenntnis der Abtastzeitpunkte der ersten Abtastung und der zweiten Abtastung bzw. anhand der Kenntnis über die zeitliche Verschiebung zwischen dem Sendesymboltakt des ersten Signalanteils und dem Sendesymboltakt des zweiten Signalanteils sowie beispielsweise auch basierend auf einer Kenntnis der Sendesymbol-Signalformen des ersten Signalanteils und des zweiten Signalanteils (die dem Empfänger 100 typischerweise bekannt sind), bestimmt werden, welche Inter-Symbol-Interferenz bestimmte (verschiedene) Folgen von Sendesymbolen des zweiten Signalanteils in der ersten Serie von Abtastwerten ergeben und welche Inter-Symbol-Interferenz bestimmte (verschiedene) Folgen von Sendesymbolen des ersten Signalanteils in einem Abtastwert der zweiten Serie 144 von Abtastwerten ergeben. Die Kenntnis der Inter-Symbol-Interferenz-Eigenschaften des ersten Signalanteils und des zweiten Signalanteils kann also sowohl bei der ersten Wahrscheinlichkeitsbestimmung 150 als auch bei der zweiten Wahrscheinlichkeitsbestimmung 160 ausgenutzt werden, um die Wahrscheinlichkeiten 112, 114 für die Symbole bzw. Sendesymbole des zweiten Signalanteils bzw. des ersten Signalanteils mit besonders hoher Zuverlässigkeit zu erhalten. Durch die oben erläuterte geeignete Wahl der Abtastzeitpunkte der ersten Abtastung bzw. der zweiten Abtastung wird im Übrigen erreicht, dass bei der ersten Wahrscheinlichkeitsbestimmung 150 eine Berücksichtigung einer Inter-Symbol-Interferenz zwischen Sendesymbolen des ersten Signalanteils unberücksichtigt bleiben kann, und dass bei der zweiten Wahrscheinlichkeitsbestimmung 160 eine Berücksichtigung der Inter-Symbol-Interferenz zwischen Sendesymbolen des zweiten Signalanteils unberücksichtigt bleiben kann. Dadurch wird eine Komplexität in einem beherrschbaren Rahmen gehalten.

Im Übrigen sei darauf hingewiesen, dass der Empfänger 100 um alle Merkmale, Funktionalitäten und Details ergänzt werden kann, die im Folgenden noch beschrieben werden. Die entsprechenden Merkmale, Funktionalitäten und Details können in den Empfänger 100 sowohl einzeln als auch in Kombination aufgenommen werden.

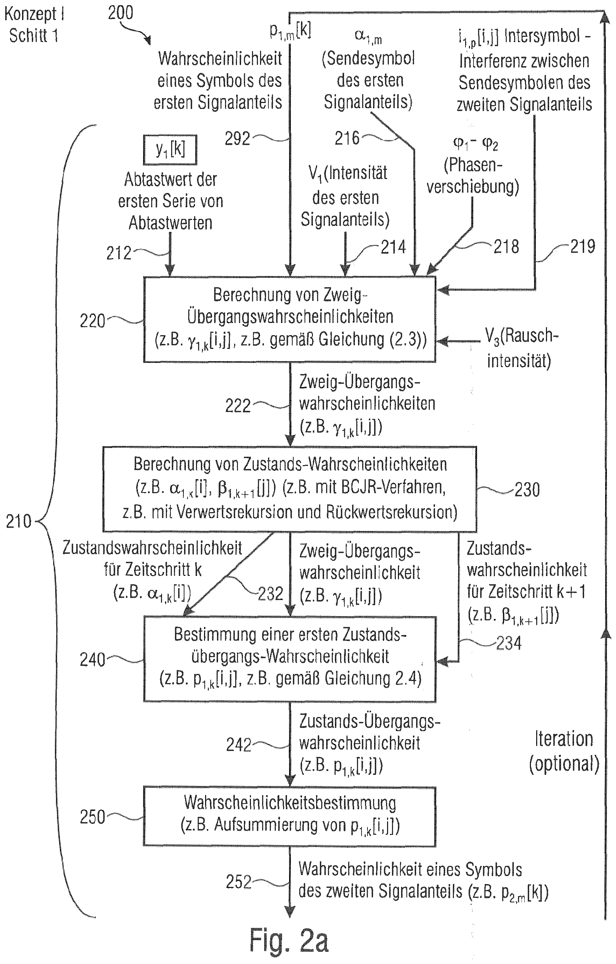

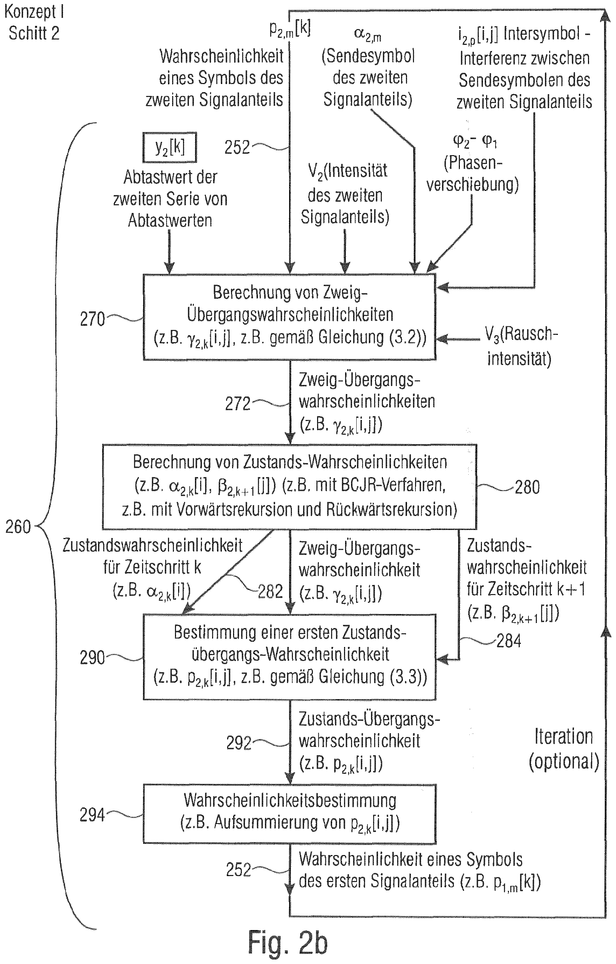

2. Konzept gemäß Figuren 2a und 2b

Fig. 2a und 2b zeigen ein Flussdiagramm eines Konzepts zur Bestimmung von Wahrscheinlichkeiten für Symbole bzw. Sendesymbole von zwei Signalanteilen. Das Konzept gemäß den Fig. 2a und 2b sind ihrer Gesamtheit mit 200 bezeichnet.

Im Übrigen ist festzuhalten, dass das Konzept 200 gemäß den Fig. 2a und 2b beispielsweise durch den Empfänger 100 realisiert werden kann. Beispielsweise können die wesentlichen Verarbeitungsschritte des Konzepts 200 durch die erste Wahrscheinlichkeitsbestimmung 150 und die zweite Wahrscheinlichkeitsbestimmung 160 ausgeführt werden. Die im Rahmen der Verarbeitung verwendeten Abtastwerte $y_1[k]$ und $y_2[k]$ können beispielsweise durch den Abtastwertbestimmer 140 erhalten werden.

Im Folgenden werden die Verarbeitungsschritte näher erläutert.

Ein erster Verarbeitungsabschnitt 210 umfasst eine Bestimmung einer Wahrscheinlichkeit 252 eines Symbols des zweiten Signalanteils basierend auf einer Wahrscheinlichkeit 292 eines Symbols bzw. Sendesymbols des ersten Signalanteils bzw. basierend auf Wahrscheinlichkeiten von mehreren Symbolen bzw. Sendesymbolen des ersten Signalanteils. Naturgemäß können im ersten Verarbeitungsabschnitt 210 auch Wahrscheinlichkeiten mehrerer Symbole bzw. Sendesymbole des zweiten Signalanteils bestimmt werden.

Insbesondere sei darauf hingewiesen, dass der erste Verarbeitungsabschnitt beispielsweise einen Abtastwert 212 (auch mit $y_1[k]$ bezeichnet) der ersten Serie 142 von Abtastwerten verwendet. Zusätzlich fließen in den ersten Verarbeitungsabschnitt 210 angenommene oder vorher bestimmte Wahrscheinlichkeiten von Symbolen bzw. Sendesymbolen des ersten Signalanteils (beispielsweise zu einem Zeitpunkt mit Zeitindex k) ein. Die Wahrscheinlichkeiten können beispielsweise als ein Anfangswert angenommen werden, oder können beispielsweise im Rahmen des zweiten Verarbeitungsabschnitts 260 bestimmt sein.

In dem ersten Verarbeitungsabschnitt 210 fließt eine Information 214 über eine Intensität des ersten Signalanteils (auch mit $v_1$ bezeichnet) ein. Ferner fließt in den ersten Verarbeitungsabschnitt 210 auch eine Information 216 über ein Sendesymbol des ersten Signalanteils bzw. über eine Mehrzahl von Sendesymbolen (zum Beispiel mit Index m) des ersten Signalanteils (auch mit $a_{1,m}$ bezeichnet) ein. In anderen Worten, die Information 216 über Sendesymbole des ersten Signalanteils beschreibt beispielsweise in Form eines komplexen Werts einen (erwarteten) Beitrag eines m-ten Sendesymbols des ersten Signalanteils zu dem aktuellen Abtastwert $y_1[k]$ der ersten Serie von Abtastwerten, wobei zu früheren Abtastzeitpunkten oder zu späteren Abtastzeitpunkten gehörende Sendesymbole des ersten Signalanteils unberücksichtigt bleiben, da von einer kleinen oder vernachlässigbaren Inter-Symbol-Interferenz zwischen Sendesymbolen des ersten Signalanteils in der ersten Serie von Abtastwerten ausgegangen wird. Der erste Verarbeitungsabschnitt 210 nutzt ferner eine Information über eine Phasenverschiebung zwischen Sendesymbolen des ersten Signalanteils und Sendesymbolen des zweiten Signalanteils, die beispielsweise mit 218 bzw. $\varphi_1 - \varphi_2$ bezeichnet ist. Der erste Verarbeitungsabschnitt 210 verwendet ferner eine Information über eine Inter-Symbol-Interferenz zwischen Sendesymbolen des zweiten Signalanteils in den Abtastwerten der ersten Serie 212 von Abtastwerten ($y_1[k]$). Die Information 219 über die Inter-Symbol-Interferenz ist auch mit $i_{1,p}[i,j]$ bezeichnet. Die Information 219 über die Inter-Symbol-Interferenz zwischen Sendesymbolen des zweiten Signalanteils kann beispielsweise für verschiedene Sequenzen von Sendesymbolen des zweiten Signalanteils anhand der dem Empfänger typischerweise bekannten Signalform eines Sendesymbols und anhand der Phasenlage der Sendesymbole des zweiten Signalanteils im Hinblick auf die Abtastzeitpunkte der ersten Abtastung berechnet werden. Beispielsweise können dabei alle Sequenzen von Sendesymbolen des zweiten Signalanteils berücksichtigt werden, die Auswirkungen auf den aktuellen Abtastwert $y_1[k]$ haben. Es kann also beispielsweise durch die Information 219 beschrieben werden, welchen Beitrag zu dem Abtastwert $y_1[k]$ verschiedene Sequenzen von Sendesymbolen des zweiten Signalanteils aufgrund der Inter-Symbol-Interferenz (also der Überlagerung von Sendesignalformen von Sendesymbolen des zweiten Signalanteils, die zu verschiedenen Zeitpunkten gesendet werden) liefern. Die verschiedenen Sequenzen von Sendesymbolen des zweiten Signalanteils werden beispielsweise durch die Indices i und j beschrieben, wobei i und j als Zustände in einem Zustandsautomaten, der die Erzeugung der Sequenzen von Sendesymbolen des zweiten Signalanteils beschreibt, verstanden werden können. Insofern kann der Übergang von einem Zustand i zu einem Zustand j als Zustandsübergang aufgefasst werden, der beispielsweise eine Sequenz von Sendesymbolen des zweiten Signalanteils charakterisiert.

Insgesamt ist festzuhalten, dass die Inter-Symbol-Interferenz-Werte $i_{1,p}[i,j]$ aufseiten des Empfängers basierend auf einer Kenntnis der Sendesignalform bzw. Empfangssignalform von Sendesymbolen des zweiten Signalanteils und basierend auf einer Kenntnis der Abtastzeitpunkte bestimmbar ist (und beispielsweise nicht für jeden Iterationsschritt bzw. für den Empfang jedes einzelnen Sendesymbols berechnet werden muss, sondern vielmehr nur einmal bestimmt werden muss, sobald die Abtastzeitpunkte näher bekannt sind, oder sogar vorbestimmt in einer Wertetabelle oder einem Speicherbereich bereitgestellt werden kann).

Der erste Verfahrensabschnitt 210 umfasst ein Berechnen 220 von Zweig-Übergangswahrscheinlichkeiten, z. B. $\gamma_{1,k}[i,j]$, das beispielsweise unter Verwendung der Gleichung (2.3) erfolgen kann. Somit liefert die Berechnung 220 Zweig-Übergangswahrscheinlichkeiten, beispielsweise $\gamma_{1,k}[i,j]$. Beispielsweise können die Zweig-Übergangswahrscheinlichkeiten für verschiedene Kombinationen der Indices bzw. Zustandsindices i und j berechnet werden. In die Berechnung 220 kann beispielsweise ein (aktueller) Abtastwert $y_1[k]$ der ersten Serie von Abtastwerten einfließen. Ferner können in der Berechnung 220 die vorher geschätzten oder bestimmten Wahrscheinlichkeiten $p_{1,m}[k]$ der Symbole des ersten Signalanteils (z. B. für den Abtastzeitpunkt k) berücksichtigt werden. Ferner können die Intensität $v_1$ des ersten Signalanteils, die dem Empfänger typischerweise bekannten (beispielsweise komplexwertigen) Sendesymbole des ersten Signalanteils $a_{1,m}$, die dem Empfänger typischerweise bekannte Phasenverschiebung zwischen der ersten Abtastung und der zweiten Abtastung und die durch den Empfänger ebenso bestimmbare Inter-Symbol-Interferenz zwischen Sendesymbolen des zweiten Signalanteils bei der Berechnung 220 berücksichtigt werden. Ferner kann durch die Berechnung 220 auch eine durch den Empfänger bestimmbare Intensität eines Rauschens bzw. ein durch den Empfänger bestimmbares Signal-zu-Rausch-Verhältnis berücksichtigt werden. Für Details im Hinblick auf eine mögliche Vorgehensweise wird beispielsweise auf die unten stehenden Ausführungen zur Gleichung (2.3) verwiesen.

Durch die Berechnung 220 werden somit Zweig-Übergangswahrscheinlichkeiten, z. B. $\gamma_{1,k}[i,j]$ erhalten, die bei einer Berechnung 230 von Zustands-Wahrscheinlichkeiten (z. B. $\alpha_{1,k}[i]$ und $\beta_{1,k+1}[j]$ verwendet werden können. Die Berechnung 230 von Zustandswahrscheinlichkeiten kann beispielsweise unter Verwendung eines Verfahrens mit einer Vorwärtsrekursion und einer Rückwärtsrekursion erfolgen, wobei von vorher bestimmten oder angenommenen Anfangs- und Endwahrscheinlichkeiten ausgegangen werden kann. Beispielsweise kann ein sogenanntes BCJR-Verfahren hierzu eingesetzt werden, das dem Fachmann geläufig ist. Alternativ dazu können auch andere Trellis-Decodierverfahren eingesetzt werden, die dem Fachmann ebenso geläufig sind.

Somit werden bei der Berechnung 230 beispielsweise Zustands-Wahrscheinlichkeiten für den Zeitschritt k, z. B. $\alpha_{1,k}[i]$ und auch Zustands-Wahrscheinlichkeiten für einen Zeitschritt k+1, z. B. $\beta_{1,k+1}[j]$ erhalten, die beispielsweise zusammen mit den Zweig-Übergangswahrscheinlichkeiten z. B. $\gamma_{1,k}[i,j]$ bei einer Bestimmung 240 der ersten Zustands-Wahrscheinlichkeiten, z. B. $p_{1,k}[i,j]$ verwendet werden können. Diese Bestimmung der Zustandsübergangswahrscheinlichkeiten $p_{1,k}[i,j]$, die beispielsweise für verschiedene Kombinationen von i und j erfolgen kann oder die beispielsweise sogar für alle sinnvollen Kombinationen von i und j erfolgen kann, kann beispielsweise unter Verwendung der Gleichung (2.4), die im Folgenden noch erläutert wird, erfolgen.

Die Zustandsübergangswahrscheinlichkeiten $p_{1,k}[i,j]$ können beispielsweise bei einer Wahrscheinlichkeitsbestimmung 250 verwendet werden, um Wahrscheinlichkeiten von Symbolen bzw. Sendesymbolen des zweiten Signalanteils zum Zeitpunkt k (z. B. $p_{2,m}[k]$) zu bestimmen. Hierzu kann beispielsweise eine geeignete Aufsummierung der Werte von $p_{1,k}[i,j]$ erfolgen.

Zusammenfassend ist somit festzuhalten, dass in dem ersten Verfahrensabschnitt 210 Wahrscheinlichkeiten eines Symbols des zweiten Signalanteils bzw. Wahrscheinlichkeiten verschiedener Symbole des zweiten Signalanteils bzw. Wahrscheinlichkeiten aller möglichen Symbole des zweiten Signalanteils basierend auf einem (aktuellen) Abtastwert der ersten Serie von Abtastwerten und auch basierend auf angenommenen oder vorher bestimmten Wahrscheinlichkeiten von Symbolen des ersten Signalanteils bestimmt werden können. Eine bewusst in Kauf genommene Inter-Symbol-Interferenz zwischen Sendesymbolen des zweiten Signalanteils wird beispielsweise durch die Berechnung von Zweig-Übergangswahrscheinlichkeiten, durch die Ableitung von Zustands-Wahrscheinlichkeiten und durch die Bestimmung von Zustandsübergangswahrscheinlichkeiten in effizienter Weise ausgenutzt, wobei ein Trellis-Decodierverfahren oder BCJR-Verfahren eingesetzt werden kann, um die Inter-Symbol-Interferenz zwischen den Sendesymbolen des zweiten Signalanteils in effizienter Weise zu berücksichtigen.

Der zweite Verfahrensabschnitt 260 funktioniert in ähnlicher Weise, wobei hierbei basierend auf angenommenen oder vorher bestimmten Wahrscheinlichkeiten von Symbolen bzw. Sendesymbolen des zweiten Signalanteils (z. B. $p_{2,m}[k]$) und unter Verwendung eines Abtastwerts der zweiten Serie von Abtastwerten (z. B. $y_2[k]$) Wahrscheinlichkeiten von Symbolen bzw. Sendesymbolen des ersten Signalanteils bestimmt werden. Wie aus der Fig. 2b ersichtlich ist, umfasst der zweite Verfahrensabschnitt 260 ein Berechnen 270 von Zweig-Übergangswahrscheinlichkeiten (z. B. $\gamma_{2,k}[i,j]$). Die Berechnung 270 von Zweig-Übergangswahrscheinlichkeiten kann beispielsweise entsprechend der Gleichung (3.2), die im Folgenden noch beschrieben wird, erfolgen. Bei der Berechnung 270 von Zweig-Übergangswahrscheinlichkeiten kann beispielsweise ein (aktueller) Abtastwert $y_2[k]$ der zweiten Serie von Abtastwerten berücksichtigt werden. Ferner können bei der Berechnung 270 Wahrscheinlichkeiten von Symbolen bzw. Sendesymbolen des zweiten Signalanteils (z. B. $p_{2,m}[k]$) berücksichtigt werden. Ferner kann bei der Berechnung 270 eine durch den Empfänger bestimmte Intensität des zweiten Signalanteils ($v_2$) (die absolut oder relativ, beispielsweise in Relation zu einer Intensität des ersten Signalanteils, oder in Relation zu einem Rauschen definiert sein kann) berücksichtigt werden. Ferner wird bei der Berechnung 270 von Zweig-Übergangswahrscheinlichkeiten typischerweise eine empfängerseitige Kenntnis der Sendesymbole bzw. der Empfangssymbole (beispielsweise in Form einer komplexwertigen Darstellung) berücksichtigt (z. B. mit $a_{2,m}$ bezeichnet). Weiterhin berücksichtigt die Berechnung 270 bevorzugt eine Phasenverschiebung zwischen der ersten Abtastung und der zweiten Abtastung. Weiterhin berücksichtigt die Berechnung 270 eine Information über Inter-Symbol-Interferenz zwischen Sendesymbolen des ersten Signalanteils in den Abtastwerten der zweiten Serie von Abtastwerten. Eine Information über die Inter-Symbol-Interferenz (z. B. $i_{2,p}[i,j]$) kann beispielsweise durch den Empfänger auf der Basis einer Kenntnis einer Sendesignalform bzw. Empfangssignalform der Sendesymbole des ersten Signalanteils sowie auch auf der Basis einer Kenntnis der Abtastphase der zweiten Abtastung erhalten werden. Es kann also durch den Empfänger beispielsweise bestimmt werden, welchen Beitrag verschiedene Sequenzen (beispielsweise definiert durch i und j) von Sendesymbolen des ersten Signalanteils zu dem (aktuellen) Abtastwert $y_2[k]$ der zweiten Serie von Abtastwerten liefern. Dabei kann der Empfänger insbesondere berücksichtigen, dass mehrere Sendesymbole des ersten Signalanteils einen signifikanten (nicht-vernachlässigbaren) Beitrag zu dem Abtastwert $y_2[k]$ liefern, da ja die zweite Serie von Abtastwerten im Hinblick auf die Sendesymbole des ersten Signalanteils nicht Inter-Symbol-Interferenz-frei abgetastet ist. Auf der anderen Seite kann bei der Berechnung von Zweig-Übergangswahrscheinlichkeiten insbesondere davon ausgegangen werden, dass nur ein Sendesymbol des zweiten Signalanteils einen signifikanten Beitrag zu dem aktuellen Abtastwert $y_2[k]$ liefert, während beispielsweise bei der Berechnung 270 Beiträge von weiteren (beispielsweise früher oder später gesendeten) Sendesymbolen des zweiten Signalanteils zu dem Abtastwert $y_2[k]$ vernachlässigt werden können. Entsprechend können durch die Berechnung 270 Zweig-Übergangswahrscheinlichkeiten (z. B. $\gamma_{2,k}[i,j]$) erhalten werden, die in eine Berechnung 280 von Zustands-Wahrscheinlichkeiten (z. B. $\alpha_{2,k}[i]$ und $\beta_{2,k+1}[j]$) einfließen.

Durch die Berechnung 280 werden dann beispielsweise Zustands-Wahrscheinlichkeiten für den Zeitschritt k (z. B. $\alpha_{2,k}[i]$) und Zustands-Wahrscheinlichkeiten für den Zeitschritt k+1 (z. B. $\beta_{2,k+1}[j]$) erhalten. Die Zustands-Wahrscheinlichkeiten für den Zeitschritt k sowie die Zustands-Wahrscheinlichkeiten für den Zeitschritt k+1 können dann zusammen mit der Zweig-Übergangswahrscheinlichkeit bei einer Bestimmung 290 von Zustandsübergangswahrscheinlichkeiten (z. B. $p_{2,k}[i,j]$) verwendet werden.

Diese Bestimmung 290 der ersten Zustandsübergangswahrscheinlichkeiten 292 kann beispielsweise unter Verwendung der Gleichung (3.3), die im Folgenden noch erläutert wird, erfolgen. Somit können die Zustandsübergangswahrscheinlichkeiten $p_{2,k}[i,j]$ für verschiedene Zustandsübergänge von Zustand i nach Zustand j erhalten werden.

Die Zustandsübergangswahrscheinlichkeiten 291 können dann in einer Wahrscheinlichkeitsbestimmung 294 verwendet werden, um beispielsweise Wahrscheinlichkeiten von Symbolen des ersten Signalanteils 292 (z. B. $p_{1,m}[k]$) zu berechnen. Die Bestimmung der Wahrscheinlichkeiten der Symbole des ersten Signalanteils kann beispielsweise durch eine geeignete Aufsummierung von Zustandsübergangswahrscheinlichkeiten $p_{2,k}[i,j]$ erfolgen, wobei beispielsweise die Zustandsübergangswahrscheinlichkeiten derjenigen Zustände, die zu einem bestimmten Sendesymbol (z.B. $a_{1,m}$) gehören, aufsummiert werden können.

Zusammenfassend ist also festzuhalten, dass die Berechnung 270 im Wesentlichen der Berechnung 220 entspricht, dass die Berechnung 280 im Wesentlichen der Berechnung 230 entspricht, dass die Bestimmung 290 im Wesentlichen der Bestimmung 240 entspricht und dass die Wahrscheinlichkeitsbestimmung 294 im Wesentlichen der Wahrscheinlichkeitsbestimmung 250 entspricht, wobei jeweils an den entsprechenden Signalanteil angepasste Größen verwendet werden.

Weiterhin ist im Hinblick auf das Konzept 200 festzuhalten, dass das Konzept beispielsweise mit dem ersten Verfahrensabschnitt 210 oder mit dem zweiten Verfahrensabschnitt 260 beginnen kann, wobei der jeweils andere Verfahrensabschnitt im Anschluss daran ausgeführt wird. Das Verfahren kann im Übrigen auch iterativ erfolgen, wobei die beiden Verfahrensabschnitte 210, 260 beispielsweise mehrmals hintereinander und abwechselnd durchgeführt werden. Auf diesem Weg kann eine iterative Verbesserung der Bestimmung bzw. Schätzung der Wahrscheinlichkeiten der Symbole der beiden Signalanteile erfolgen. Es kann also beispielsweise die bei der Wahrscheinlichkeitsbestimmung 294 bestimmte Wahrscheinlichkeit von Sendesymbolen des ersten Signalanteils bei der Berechnung 220 als Eingangsgröße verwendet werden, und es können die bei der Wahrscheinlichkeitsbestimmung 250 erhaltenen Wahrscheinlichkeiten von Sendesymbolen des zweiten Signalanteils bei der Berechnung 270 als Eingangsgröße verwendet werden.

Weitere Details im Hinblick auf das Konzept 200 werden im Übrigen später noch beschrieben. Insbesondere sei auf die Ausführungen zu den Formeln (2.3), (2.4), (3.2) und (3.3) sowie auch auf die übrigen begleitenden Erläuterungen verwiesen.

Ferner ist festzuhalten, dass das Konzept 200 gemäß der Fig. 2 um alle Merkmale, Funktionalitäten und Details ergänzt werden kann, die hierin beschrieben sind, und zwar sowohl einzeln als auch in Kombination.

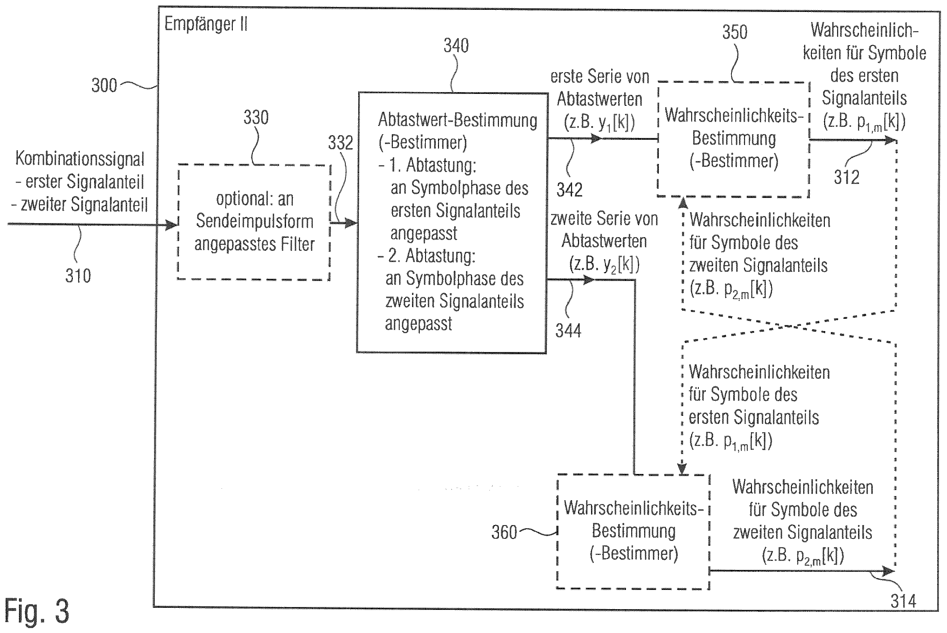

### 3. Empfänger gemäß Fig. 3

Fig. 3 zeigt ein Blockschaltbild eines Empfängers 300 gemäß einem Ausführungsbeispiel der vorliegenden Erfindung.

Der Empfänger 300 ist ausgelegt, um ein Kombinationssignal 310 zu empfangen, das beispielsweise einen ersten Signalanteil und einen zweiten Signalanteil aufweist. Der Empfänger 300 ist ferner ausgelegt, um Wahrscheinlichkeiten 312 für Symbole des ersten Signalanteils zu erhalten, und um Wahrscheinlichkeiten 314 für Symbole des zweiten Signalanteils zu erhalten. Der Empfänger 300 umfasst optional ein an eine Sendeimpulsform angepasstes Filter 330, das beispielsweise das Kombinationssignal 110 empfängt und ein gefiltertes Signal 332 liefert. Das Filter 330 kann beispielsweise dem Filter 130 des Empfängers 100 entsprechen, und das gefilterte Signal 332 kann beispielsweise dem gefilterten Signal 132 entsprechen. Die übrigen Ausführungen im Hinblick auf die mögliche Vorverarbeitung des Kombinationssignals 110, die im Hinblick auf den Empfänger 100 erläutert wurden, gelten im Übrigen für den Empfänger 300 sinngemäß.

Der Empfänger 300 umfasst ferner eine Abtastwertbestimmung 340, die beispielsweise der Abtastwertbestimmung 140 des Empfängers 100 entspricht. Die Abtastwertbestimmung bzw. der Abtastwertbestimmer 340 liefert beispielsweise eine erste Serie 342 von Abtastwerten (z. B. $y_1[k]$) sowie eine zweite Serie 344 von Abtastwerten ($y_2[k]$). Die erste Serie 342 von Abtastwerten entspricht beispielsweise der ersten Serie 142 von Abtastwerten, und die zweite Serie 344 von Abtastwerten entspricht beispielsweise der zweiten Serie 144 von Abtastwerten, so dass die obigen Ausführungen, die im Hinblick auf die Serien 142, 144 von Abtastwerten gemacht wurden, ebenso gelten.

Zusammenfassend ist somit festzuhalten, dass der Empfänger 300 ausgelegt ist, um ein Kombinationssignal 310 zu erhalten, das zwei separate Signalanteile aufweist, deren Impulse zueinander verschoben sind und/oder deren Trägerschwingung eine Phasendifferenz aufweisen. Der Empfänger 300 weist beispielsweise (aber nicht notwendigerweise) ein an eine Sendeimpulsform der Impulse zumindest eines der Signalanteile angepasstes Filter auf. Der Empfänger ist ferner ausgelegt, um beispielsweise durch die Abtastwertbestimmung 340 eine erste Serie 342 von Abtastwerten unter Verwendung einer ersten Abtastung zu erhalten, wobei die erste Abtastung an eine Symbolphase des ersten Signalanteils angepasst ist (beispielsweise auf eine Symbolphase des ersten Signalanteils synchronisiert ist). Der Empfänger ist ferner ausgelegt, um beispielsweise durch die Abtastwertbestimmung 340 eine zweite Serie 344 von Abtastwerten unter Verwendung einer zweiten Abtastung zu erhalten, wobei die zweite Abtastung an eine Symbolphase des zweiten Signalanteils angepasst ist (beispielsweise auf eine Symbolphase des zweiten Signalanteils synchronisiert ist).

Der Empfänger 300 umfasst ferner eine erste Wahrscheinlichkeitsbestimmung 350, die ausgelegt ist, um basierend auf Abtastwerten der ersten Abtastung (bzw. der ersten Serie 342 von Abtastwerten) und geschätzten oder berechneten Wahrscheinlichkeiten für Symbole des zweiten Signalanteils ohne Berücksichtigung (bzw. unter Vernachlässigung) einer Inter-Symbol-Interferenz zwischen Sendesymbolen des ersten Signalanteils in den Abtastwerten der ersten Abtastung Wahrscheinlichkeiten für Symbole des ersten Signalanteils zu bestimmen. Der Empfänger umfasst ferner eine zweite Wahrscheinlichkeitsbestimmung 360, die ausgelegt ist, um basierend auf Abtastwerten der zweiten Abtastung (bzw. der zweiten Serie 344 von Abtastwerten) und geschätzten oder berechneten Wahrscheinlichkeiten für Symbole des ersten Signalanteils ohne Berücksichtigung einer Inter-Symbol-Interferenz zwischen Sendesymbolen des zweiten Signalanteils in den Abtastwerten der zweiten Abtastung (z. B. aktualisierte) Wahrscheinlichkeiten für Symbole des zweiten Signalanteils zu bestimmen. Der Empfänger ist somit insgesamt ausgelegt, um Wahrscheinlichkeiten 312 der Sendesymbole des ersten Signalanteils und Wahrscheinlichkeiten 314 der Sendesymbole des zweiten Signalanteils für eine Mehrzahl von Abtastzeitpunkten basierend auf der ersten Serie 342 von Abtastwerten und der zweiten Serie 344 von Abtastwerten zu erhalten.

Im Hinblick auf die Funktionalität des Empfängers 300 sei darauf hingewiesen, dass Wahrscheinlichkeiten für Symbole bzw. Sendesymbole des zweiten Signalanteils, die beispielsweise auf einer Annahme basieren oder vorher bestimmt wurden, bei der Bestimmung der Wahrscheinlichkeiten 312 für Symbole des ersten Signalanteils berücksichtigt werden. Es wird also beispielsweise berücksichtigt, welchen Beitrag bzw. Störbeitrag Sendesymbole des zweiten Signalanteils auf einen (aktuellen) Abtastwert (z. B. $y_1[k]$) der ersten Serie von Abtastwerten haben (bzw. mit einer bestimmten Wahrscheinlichkeit haben), wenn die Wahrscheinlichkeiten für die Symbole bzw. Sendesymbole des ersten Signalanteils bestimmt werden. Dabei wird auch der Einfluss mehrerer zeitlich nacheinander gesendeter Sendesymbole des zweiten Signalanteils berücksichtigt, da diese typischerweise alle einen Einfluss auf einen aktuellen Abtastwert der ersten Serie von Abtastwerten haben. Da allerdings die Sendesymbole des zweiten Signalanteils bei der Bestimmung von Wahrscheinlichkeiten für Symbole des ersten Signalanteils nur als "Störung" bzw. "Störbeitrag" berücksichtigt werden, und da ferner aufgrund der ersten Abtastung davon ausgegangen wird, dass in der ersten Serie 342 von Abtastwerten keine bzw. keine wesentliche Inter-Symbol-Interferenz zwischen Symbolen des ersten Signalanteils besteht, ist die Wahrscheinlichkeitsbestimmung 350 mit vergleichsweise geringer Komplexität durchführbar.

Ähnlich ist es für die Wahrscheinlichkeitsbestimmung 360. Da bei der Bestimmung der Wahrscheinlichkeiten für Symbole des zweiten Signalanteils die Symbole des ersten Signalanteils lediglich als Störung bzw. als Störbeitrag zu dem aktuellen Abtastwert (z. B. $y_2[k]$) betrachtet werden, und da bei der Wahrscheinlichkeitsbestimmung 360 ferner davon ausgegangen wird, dass keine bzw. keine wesentliche Inter-Symbol-Interferenz zwischen Sendesymbolen des zweiten Signalanteils in der zweiten Serie 344 von Abtastwerten besteht, ist die Komplexität der Wahrscheinlichkeitsbestimmung 360 vergleichsweise gering.

Im Übrigen sei darauf hingewiesen, dass bei der Wahrscheinlichkeitsbestimmung 350, also bei der Bestimmung der Wahrscheinlichkeiten der Symbole des ersten Signalanteils, geschätzte oder vorher berechnete Wahrscheinlichkeiten für Symbole des zweiten Signalanteils einfließen. In ähnlicher Weise fließen bei der Wahrscheinlichkeitsbestimmung 360, also bei der Bestimmung von Wahrscheinlichkeiten für Symbole des zweiten Signalanteils, geschätzte oder vorher bestimmte Wahrscheinlichkeiten für Symbole des ersten Signalanteils mit ein. Die Wahrscheinlichkeitsbestimmung 350 und die Wahrscheinlichkeitsbestimmung 360 können hierbei auch nacheinander bzw. iterativ abwechselnd durchgeführt werden, so dass die entsprechenden Wahrscheinlichkeiten für Symbole der beiden Signalanteile jeweils verbessert werden. In einem ersten Iterationsschritt können beispielsweise angenommene Wahrscheinlichkeiten verwendet werden, während in den folgenden Iterationsschritten zuvor bestimmte Wahrscheinlichkeiten verwendet werden können.

Zusammenfassend ist somit festzuhalten, dass der Empfänger 300 in besonders effizienter Weise die Wahrscheinlichkeiten für Symbole der beiden Signalanteile bestimmen kann. Indem bei der Abtastwertbestimmung 340 zwei Serien 342, 344 von Abtastwerten erhalten werden, und indem die Wahrscheinlichkeit für Symbole des ersten Signalanteils basierend auf der ersten Serie von Abtastwerten, die an die Symbolphase des ersten Signalanteils angepasst abgetastet sind, erhalten werden, und indem die Wahrscheinlichkeiten für Symbole des zweiten Signalanteils basierend auf der zweiten Serie von Abtastwerten, die an die Symbolphase des zweiten Signalanteils angepasst abgetastet sind, erhalten werden, können die Wahrscheinlichkeiten für die Symbole der beiden Signalanteile in sehr effizienter Weise erhalten werden. Zwar wird Inter-Symbol-Interferenz hier bevorzugt nicht Schritt-für-Schritt ausgewertet, sondern lediglich zusammengefasst als Störbeitrag zu den Abtastwerten berücksichtigt, es hat sich aber gezeigt, dass dennoch in vielen Situationen mit geringem Aufwand zuverlässige Schätzwerte für die Wahrscheinlichkeiten der Symbole der Signalanteile erhalten werden können.

Weitere optionale Details werden im Übrigen im Folgenden noch erläutert.

Insbesondere kann der Empfänger 300 optional um alle Merkmale, Funktionalitäten und Details ergänzt werden, die hierin beschrieben sind, und zwar sowohl einzeln als auch in Kombination.

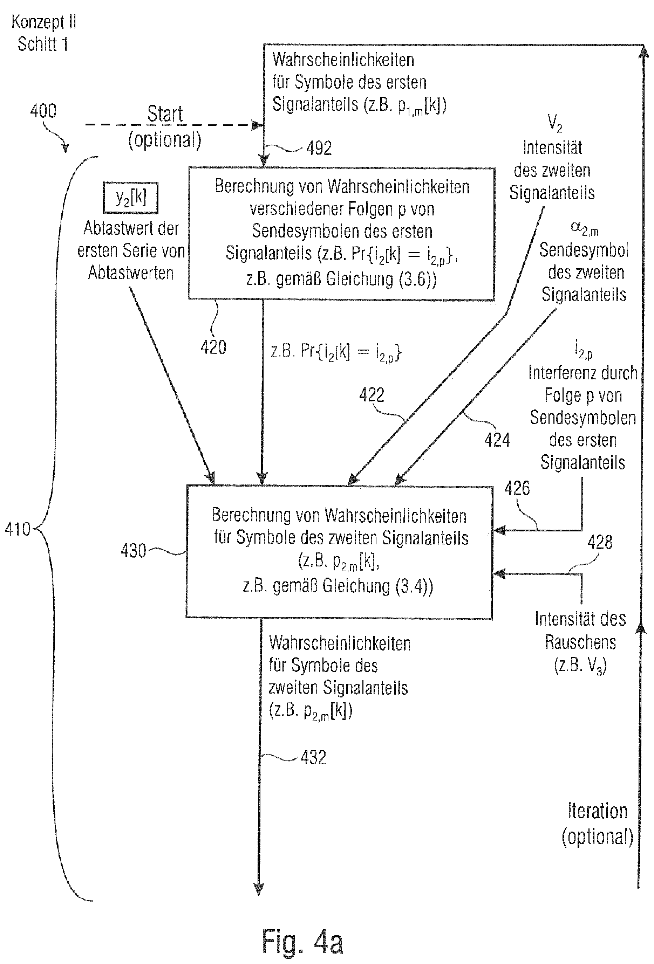

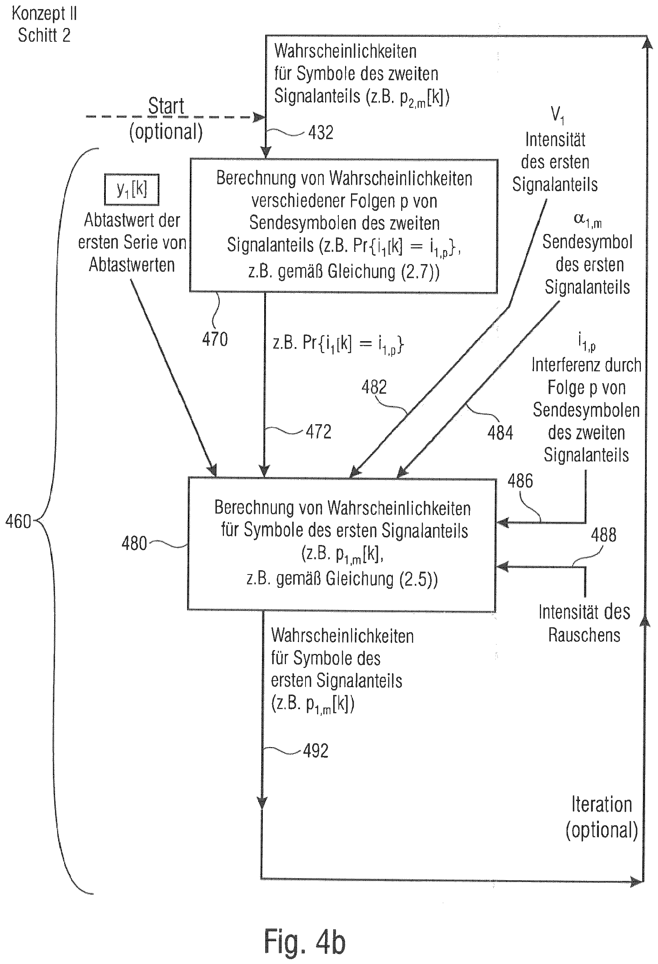

## 4. Konzept gemäß Figuren 4a und 4b

Fig. 4a und 4b zeigen ein Flussdiagramm eines Konzepts zur Bestimmung von Wahrscheinlichkeiten für Symbole eines ersten Signalanteils und von Wahrscheinlichkeiten für Symbole eines zweiten Signalanteils basierend auf Abtastwerten eines Kombinationssignals bzw. eines vorverarbeiteten (z. B. in signalangepasster Weise gefilterten) Kombinationssignals. Das Konzept gemäß den Fig. 4a und 4b ist in seiner Gesamtheit mit 400 bezeichnet.

Das Konzept 400 umfasst einen ersten Verfahrensabschnitt 410 sowie einen zweiten Verfahrensabschnitt 460.

Im ersten Verfahrensabschnitt 410 werden beispielsweise basierend auf angenommenen oder vorher bestimmten Wahrscheinlichkeiten 492 für Symbole eines ersten Signalanteils (z. B. $p_{1,m}[k]$) und auch basierend auf einem (aktuellen) Abtastwert der zweiten Serie von Abtastwerten (z. B. $y_2[k]$) Wahrscheinlichkeiten 432 für Symbole des zweiten Signalanteils (z. B. $p_{2,m}[k]$) bestimmt.

Das Konzept 400 umfasst ferner einen zweiten Verfahrensabschnitt 460, in dem beispielsweise basierend auf (angenommenen oder vorher bestimmten) Wahrscheinlichkeiten für Symbole des zweiten Signalanteils (z. B. $p_{2,m}[k]$) und auch auf einem (aktuellen) Abtastwert der ersten Serie von Abtastwerten (z. B. $y_1[k]$) Wahrscheinlichkeiten 492 für Symbole des ersten Signalanteils (z. B. $p_{1,m}[k]$) bestimmt werden.

Diesbezüglich sei darauf hingewiesen, dass je nach den Gegebenheiten erst der erste Verfahrensabschnitt 410 und dann der zweite Verfahrensabschnitt 460 ausgeführt werden kann. Alternativ dazu kann auch zuerst der zweite Verfahrensabschnitt 460 und dann der erste Verfahrensabschnitt 410 ausgeführt werden. Weiterhin können der erste Verfahrensabschnitt 410 und der zweite Verfahrensabschnitt 460 beispielsweise abwechselnd ausgeführt werden, um z. B. die zu einem Zeitpunkt (z. B. "k") gehörigen Wahrscheinlichkeiten für Symbole des ersten Signalanteils und des zweiten Signalanteils iterativ zu verbessern. Ob hier beide Verfahrensabschnitte 410, 460 gleich oft durchlaufen werden, oder ob ein Verfahrensabschnitt öfter als der andere durchlaufen wird, ist grundsätzlich unerheblich.

Im Folgenden wird auf den ersten Verfahrensabschnitt eingegangen. Die entsprechenden Ausführungen gelten aber auch im Hinblick auf den zweiten Verfahrensabschnitt in entsprechender Weise.

Der erste Verfahrensabschnitt 410 umfasst beispielsweise eine Bestimmung 420 von Wahrscheinlichkeiten verschiedener Folgen p (wobei p ein Index der Folgen ist) von Sendesymbolen des ersten Signalanteils. Beispielsweise kann die Wahrscheinlichkeit $Pr\{i_2[k] = i_{2,p}\}$ bestimmt werden. Die entsprechende Wahrscheinlichkeit beschreibt beispielsweise die Wahrscheinlichkeit, dass die Folge p von Sendesymbolen des ersten Signalanteils vorliegt, die einen Interferenzwert $i_{2,p}$ in dem Abtastwert $y_2[k]$ der zweiten Serie von Abtastwerten erzeugt. Dazu wird beispielsweise auf der Basis der Kenntnis der Sendesignalform bzw. der Empfangssignalform, die durch Sendesymbole des ersten Signalanteils herrührt, bestimmt, welche Folge von Sendesymbolen des ersten Signalanteils bzw. welche Folgen von Sendesymbolen des ersten Signalanteils ein (Stör-)Beitrag $i_{2,p}$ zu dem Abtastwert $y_2[k]$ liefert bzw. liefern. Dann wird die Wahrscheinlichkeit der entsprechenden Folge von Sendesymbolen des ersten Signalanteils bestimmt, oder es werden beispielsweise Wahrscheinlichkeiten mehrerer Folgen von Sendesymbolen des ersten Signalanteils, die alle zu dem (Stör-)Beitrag $i_{2,p}$ führen, aufsummiert. Führt beispielsweise nur eine Folge (aus einer Mehrzahl von möglichen Folgen bzw. aus einer Gesamtmenge von möglichen Folgen) von Sendesymbolen des ersten Signalanteils zu dem (Stör-)Beitrag $i_{2,p}$, so kann die Wahrscheinlichkeit dieser Folge von Sendesymbolen des ersten Signalanteils ohne weiteres basierend auf den Wahrscheinlichkeiten für Sendesymbole des ersten Signalanteils (492) berechnet werden, und zwar beispielsweise gemäß Gleichung (3.6). In anderen Worten, wird durch den Empfänger bestimmt, dass eine bestimmte Folge von Sendesymbolen des ersten Signalanteils zu dem (Stör-)Beitrag $i_{2,p}$ zu dem Abtastwert $y_2[k]$ führt, so kann die Wahrscheinlichkeit dieser Folge von Sendesymbolen des ersten Signalanteils beispielsweise durch Multiplikation der Wahrscheinlichkeiten der zu der betreffenden Folge gehörenden Sendesymbole des ersten Signalanteils bestimmt werden. Führen hingegen mehrere verschiedene Folgen von Sendesymbolen des ersten Signalanteils zu einem gleichen oder einem sehr ähnlichen (Stör-)Beitrag zu dem Abtastwert $y_2[k]$, so können die Wahrscheinlichkeiten dieser einzelnen Folgen wiederum durch Multiplikation der Wahrscheinlichkeiten der zu den jeweiligen Folgen gehörigen Sendesymbole erhalten werden, und die Wahrscheinlichkeiten für die jeweiligen Folgen können dann aufaddiert werden, um eine Gesamtwahrscheinlichkeit für den jeweiligen (Stör-)Beitrag $i_{2,p}$ zu erhalten.

Im Übrigen kann auch ermittelt werden, wie viele verschiedene (Stör-)Beiträge $i_{2,p}$ es gibt, was von der Signalkonstellation und auch von der Länge der Inter-Symbol-Interferenz der Sendesymbole des ersten Signalanteils bzw. der zeitlichen Ausdehnung des Sendesignalverlaufs bzw. des Empfangssignalverlaufs, der zu den Sendesymbolen des ersten Signalanteils gehört, abhängen kann. Die in der Gleichung (3.4) angegebene Anzahl von $M_1^{L_{dec}+1}$ sollte hier als Beispiel verstanden werden. Im Übrigen sei darauf hingewiesen, dass verschiedene Folgen von Sendesymbolen zu dem gleichen oder einem sehr ähnlichen (Stör-)Beitrag $i_{2,p}$ führen können, so dass diese Folgen beispielsweise zusammengefasst bzw. "geclustert" werden können.

Zusammenfassend ist somit festzuhalten, dass in dem Schritt 420 beispielsweise die Wahrscheinlichkeiten verschiedener Folgen von Sendesymbolen des ersten Signalanteils bestimmt werden können, oder alternativ auch die Wahrscheinlichkeiten von verschiedenen Werten eines (Stör-)Beitrags) $i_{2,p}$. Wird für jede Folge von Sendesymbolen ein verschiedener (Stör-)Beitrag $i_{2,p}$ geliefert, so sind die beiden Berechnungen identisch. Werden hingegen durch verschiedene Folgen von Sendesymbolen des ersten Signalanteils gleiche bzw. fast gleiche (Stör-)Beiträge $i_{2,p}$ erreicht, so kann beispielsweise die Zahl der unterschiedlichen (Stör-)Beiträge $i_{2,p}$ kleiner als die Zahl von unterschiedlichen Folgen von Sendesymbolen des ersten Signalanteils sein.

Zusammenfassend ist festzuhalten, dass der Schritt 420 sowohl eine Bestimmung von Wahrscheinlichkeiten verschiedener Folgen p von Sendesymbolen des ersten Signalanteils als auch, alternativ, eine Bestimmung von Wahrscheinlichkeiten verschiedener (Stör-)Beiträge $i_{2,p}$ (die sich aufgrund der verschiedenen Folgen von Sendesymbolen des ersten Signalanteils ergeben) umfassen kann. Somit wird in dem Schritt 420 beispielsweise eine Wahrscheinlichkeit verschiedener Folgen p von Sendesymbolen des ersten Signalanteils oder eine Wahrscheinlichkeit verschiedener (Stör-)Beiträge $i_{2,p}$ erhalten.

Der erste Verfahrensabschnitt 410 umfasst auch eine Berechnung 430 von Wahrscheinlichkeiten für Symbole des zweiten Signalanteils (z. B. $p_{2,m}[k]$). Die Berechnung kann beispielsweise unter Verwendung der Gleichung (3.4) erfolgen. Diesbezüglich sei darauf hingewiesen, dass die in der Gleichung (3.4) gezeigte Summation beispielsweise über alle verschiedenen Folgen p von Sendesymbolen des ersten Signalanteils (die zu einem (Stör-) Beitrag $i_{2,p} \neq 0$ beitragen) erfolgen kann (wobei dann bevorzugt die Wahrscheinlichkeiten der verschiedenen Folgen p berücksichtigt werden). Die Summation kann alternativ über alle verschiedenen (Stör-)Beiträge $i_{2,p}$ erfolgen, wobei dann beispielsweise die Wahrscheinlichkeit, dass ein entsprechender (Stör-)Beitrag $i_{2,p}$ durch die Sendesymbole des ersten Signalanteils erzeugt wird, berücksichtigt werden kann.

Weiterhin sei darauf hingewiesen, dass bei der Berechnung 430 von Wahrscheinlichkeiten für Symbole des zweiten Signalanteils ein (aktueller) Abtastwert (z. B. $y_2[k]$) der zweiten Serie von Abtastwerten berücksichtigt werden kann. Ferner kann beispielsweise eine Intensität 422 (z. B. $v_2$) des zweiten Signalanteils, die durch den Empfänger geschätzt oder bestimmt werden kann, berücksichtigt werden. Die Intensität $v_2$ des zweiten Signalanteils kann beispielsweise absolut oder auch relativ (z. B. in Bezug auf den ersten Signalanteil oder in Bezug auf ein Rauschen, z. B. in Form eines Signal-zu-Rausch-Verhältnisses) bestimmt werden. Ferner werden bei der Berechnung 430 typischerweise dem Empfänger bekannte (z. B. komplexwertige) Sendesymbole des zweiten Signalanteils (z. B. $a_{2,m}$) berücksichtigt. Ferner wird bei der Berechnung 430 auch eine Interferenz durch die Folgen p von Sendesymbolen des ersten Signalanteils (z. B. $i_{2,p}$; auch als "(Stör-)Beitrag von Sendesymbolen des ersten Signalanteils zu dem Abtastwert $y_2[k]$" bezeichnet) berücksichtigt.

Wie erwähnt, kann die Berechnung 430 von Wahrscheinlichkeiten für Symbole des zweiten Signalanteils beispielsweise unter Verwendung der Gleichung (3.4) erfolgen. Hierbei kann auch eine Intensität des Rauschens (z. B. $v_3$) bzw. ein Signal-zu-Rausch-Verhältnis berücksichtigt werden.

Insgesamt wird beispielsweise im Rahmen der Berechnung also bestimmt, wie wahrscheinlich die verschiedenen Symbole des zweiten Signalanteils sind, wobei beispielsweise Teil-Wahrscheinlichkeiten unter der Annahme verschiedener (Stör-) Beiträge $i_{2,p}$ aufsummiert werden. Beispielsweise wird dabei überprüft, wie wahrscheinlich ein Sendesymbol $a_{2,m}$ in Anbetracht des Abtastwerts $y_2[k]$, der Interferenz $i_{2,p}$, der Intensität des zweiten Signalanteils (z. B. $v_2$) und der Intensität des Rauschens (z. B. $v_3$) ist, wobei beispielsweise von einer Gaußschen Verteilung des Rauschens ausgegangen wird.

Die in dem Schritt 430 bestimmten Wahrscheinlichkeiten 232 für Symbole des zweiten Signalanteils (z. B. $p_{2,m}[k]$) können dann beispielsweise ausgegeben oder auch in dem zweiten Verfahrensabschnitt 460 verwendet werden.

Der zweite Verfahrensabschnitt 460 läuft im Wesentlichen parallel zu dem ersten Verfahrensabschnitt 410, so dass die obigen Ausführungen - sinngemäß angepasst - ebenfalls gelten.

In dem zweiten Verfahrensabschnitt 460 werden basierend auf Wahrscheinlichkeiten 432 für Symbole des zweiten Signalanteils (z. B. $p_{2,m}[k]$) und auch basierend auf einem (aktuellen) Abtastwert (z. B. $y_1[k]$) der ersten Serie von Abtastwerten Wahrscheinlichkeiten 492 für Symbole des ersten Signalanteils (z. B. $p_{1,m}[k]$) bestimmt.

Der zweite Verfahrensabschnitt 460 umfasst eine Bestimmung 470 von Wahrscheinlichkeiten verschiedener Folgen von Sendesymbolen des zweiten Signalanteils (z. B. $\Pr\{i_1[k] = i_{1,p}\}$), die beispielsweise basierend auf der Information 432 über Wahrscheinlichkeiten für Symbole des zweiten Signalanteils erfolgen kann. Gleichwertig zu der Bestimmung von Wahrscheinlichkeiten verschiedener Folgen von Sendesymbolen des zweiten Signalanteils kann auch eine Bestimmung von Wahrscheinlichkeiten verschiedener (Stör-)Beiträge des zweiten Signalanteils (z. B. $i_{1,p}$) zu dem aktuellen Abtastwert $y_1[k]$ bestimmt werden. Diesbezüglich gelten die obigen Ausführungen, die zu der Bestimmung 420 gemacht wurden, in einer entsprechenden Weise. Beispielsweise kann die Bestimmung 470 unter Verwendung der Gleichung (2.7) erfolgen, bzw. unter Verwendung einer der Gleichung (2.7) entsprechenden, an die jeweilige Symbolfolge angepassten Gleichung. In anderen Worten, es können Wahrscheinlichkeiten von Sendesymbolen des zweiten Signalanteils, die zu einer gerade betrachteten Folge von Sendesymbolen des zweiten Signalanteils gehören, multipliziert werden. Optional können Wahrscheinlichkeiten verschiedener Folgen von Sendesymbolen des zweiten Signalanteils, die zu dem gleichen (Stör-)Beitrag $i_{1,p}$ führen, aufsummiert werden, wenn beispielsweise die Wahrscheinlichkeiten verschiedener (Stör-)Beiträge bestimmt werden sollen.

Somit werden durch die Bestimmung 470 beispielsweise Wahrscheinlichkeiten 472 verschiedener Folgen von Sendesymbolen des zweiten Signalanteils bzw. Wahrscheinlichkeiten verschiedener (Stör-)Beiträge $i_{1,p}$ bestimmt.

Der zweite Verfahrensabschnitt 460 umfasst ferner ein Berechnen 480 von Wahrscheinlichkeiten für Symbole des ersten Signalanteils (z. B. $p_{1,m}[k]$). Diese Berechnung 480 kann beispielsweise unter Verwendung der Gleichung (2.5) erfolgen. In die Berechnung der Wahrscheinlichkeiten für Symbole des ersten Signalanteils kann beispielsweise ein aktueller Abtastwert $y_1[k]$ der ersten Serie von Abtastwerten einfließen. Ferner können die im Schritt 470 bestimmten Wahrscheinlichkeiten verschiedener Folgen von Sendesymbolen des zweiten Signalanteils bzw. die im Schritt 470 bestimmten Wahrscheinlichkeiten verschiedener (Stör-)Beiträge $i_{1,p}$ bei der Berechnung 480 von Wahrscheinlichkeiten für Symbole des ersten Signalanteils berücksichtigt werden. Ferner kann eine Information 482 über eine Intensität des ersten Signalanteils (z. B. $v_1$) in die Berechnung 480 miteinfließen, wobei die Information 482 über die Intensität des ersten Signalanteils beispielsweise absolut oder relativ (z. B. in Bezug auf den zweiten Signalanteil oder in Bezug auf ein Rauschen) durch den Empfänger bestimmt werden kann. Ferner fließt in die Berechnung 480 typischerweise eine dem Empfänger bekannte Information über die Sendesymbole des ersten Signalanteils ($a_{1,m}$) ein, die auch mit 484 bezeichnet ist. Die Information 484 kann beispielsweise beschreiben, welchen (beispielsweise komplexen) Abtastwert die verschiedenen Sendesymbole des ersten Signalanteils (mit Index m) in der Abwesenheit von Inter-Symbol-Interferenz zwischen Sendesymbolen des ersten Signalanteils, in der Abwesenheit des (Stör-)Beitrags $i_{1,p}$ und in Abwesenheit eines Rauschens (sowie in Abwesenheit sonstiger Störungen) zur Folge hätten. Mit anderen Worten, die Information 484 beschreibt die idealen Sendesymbole bzw. die durch die verschiedenen Sendesymbole im Idealfall hervorgerufenen Empfangssymbole. Ferner berücksichtigt die Berechnung 480 die Interferenz (bzw. den (Stör-)Beitrag) $i_{1,p}$, der sich durch die verschiedenen Folgen p von Sendesymbolen des zweiten Signalanteils ergibt. Der entsprechende Beitrag ist auch mit 486 bezeichnet. Ferner wird auch eine Intensität 488 des Rauschens, die beispielsweise durch den Empfänger bestimmt werden kann, bei der Berechnung 480 berücksichtigt.

Somit werden bei der Berechnung 480 insgesamt Wahrscheinlichkeiten für Sendesymbole des ersten Signalanteils (z. B. $p_{1,m}[k]$) erhalten, die auch mit 492 bezeichnet sind. Die Wahrscheinlichkeiten 492 können beispielsweise ausgegeben werden, oder können in dem ersten Verfahrensabschnitt 410 für die Bestimmung 420 verwendet bzw. wiederverwendet werden.

Wie bereits im Hinblick auf die Berechnung 420 erwähnt, kann bei der Berechnung 480 beispielsweise bestimmt werden, wie wahrscheinlich es in Anbetracht des aktuellen Abtastwerts $y_1[k]$ der ersten Serie von Abtastwerten ist, dass ein bestimmtes Sendesymbol (mit Index m) in einem Zeitschritt k gesendet wurde, wenn man die Interferenz $i_{1,p}$ durch verschiedene mögliche Folgen p von Sendesymbolen des zweiten Signalanteils sowie eine Intensität des Rauschens und auch eine geschätzte Intensität des ersten Signalanteils berücksichtigt, aber Inter-Symbol-Interferenz zwischen Sendesymbolen des ersten Signalanteils unberücksichtigt lässt.

Zusammenfassend ist somit festzuhalten, dass bei dem Konzept 400 sowohl Wahrscheinlichkeiten für Sendesymbole des ersten Signalanteils als auch Wahrscheinlichkeiten für Sendesymbole des zweiten Signalanteils in sehr effizienter Weise bestimmt werden können. Eine effiziente Bestimmung ist verwirklicht, indem zwei Serien von Abtastwerten erhalten werden, und indem von einer Berücksichtigung von Details einer Inter-Symbol-Interferenz abgesehen wird.

Weitere Erläuterungen finden sich noch im Folgenden.

Das Konzept 400 gemäß Fig. 4 kann optional um alle Merkmale, Funktionalitäten und Details ergänzt werden, die hierin beschrieben sind. Insbesondere können die im Folgenden beschriebenen Formeln eingesetzt werden, um die verschiedenen Verfahrensschritte auszuführen. Alternativ dazu können aber auch modifizierte Formeln verwendet werden, die die entsprechende Funktionalität erzielen. Im Übrigen sei darauf hingewiesen, dass das Konzept 400 um die hierin beschriebenen Merkmale, Funktionalitäten und Details sowohl einzeln auch als in Kombination ergänzt werden kann.

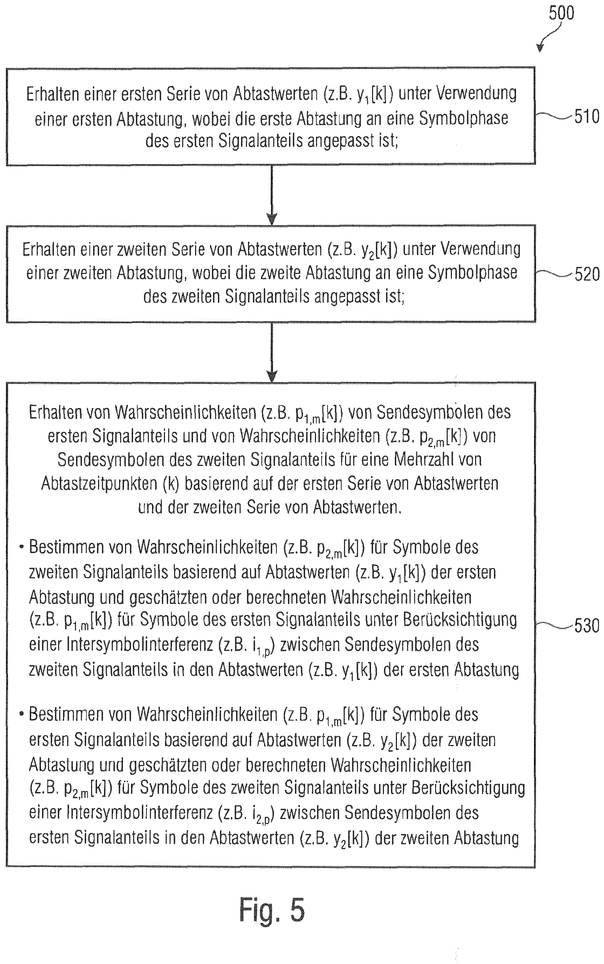

## 5. Verfahren gemäß Fig. 5

Fig. 5 zeigt ein Flussdiagramm eines Verfahrens 500 zum Empfangen eines Kombinationssignals, das zwei separate Signalanteile aufweist, deren Impulse zueinander verschoben sind und/oder deren Trägerschwingungen eine Phasendifferenz aufweisen.

Das Verfahren umfasst ein Erhalten 510 einer ersten Serie von Abtastwerten unter Verwendung einer ersten Abtastung, wobei die erste Abtastung an eine Symbolphase des ersten Signalanteils angepasst ist.

Das Verfahren umfasst ferner ein Erhalten 520 einer zweiten Serie von Abtastwerten unter Verwendung einer zweiten Abtastung, wobei die zweite Abtastung an eine Symbolphase des zweiten Signalanteils angepasst ist. Die Abtastungen können beispielsweise parallel oder nacheinander durchgeführt werden. Das Erhalten 510 der erste Serie von Abtastwerten und das Erhalten 520 der zweiten Serie von Abtastwerten kann beispielsweise parallel oder auch nacheinander erfolgen.

Das Verfahren 500 umfasst ferner ein Erhalten 530 von Wahrscheinlichkeiten von Sendesymbolen des ersten Signalanteils und von Wahrscheinlichkeiten von Sendesymbolen des zweiten Signalanteils für eine Mehrzahl von Abtastzeitpunkten basierend auf der ersten Serie von Abtastwerten und der zweiten Serie von Abtastwerten. Das Erhalten 530 von Wahrscheinlichkeiten kann beispielsweise ein Bestimmen von Wahrscheinlichkeiten für Symbole des zweiten Signalanteils basierend auf Abtastwerten der ersten Abtastung und geschätzten oder berechneten Wahrscheinlichkeiten für Symbole des ersten Signalanteils unter Berücksichtigung einer Inter-Symbol-Interferenz zwischen Sendesymbolen des zweiten Signalanteils in den Abtastwerten der ersten Abtastung umfassen. Das Erhalten 530 von Wahrscheinlichkeiten kann ferner ein Bestimmen von Wahrscheinlichkeiten der Symbole des ersten Signalanteils basieren auf Abtastwerten der zweiten Abtastung und geschätzten oder berechneten Wahrscheinlichkeiten für Symbole des zweiten Signalanteils unter Berücksichtigung einer Inter-Symbol-Interferenz zwischen Sendesymbolen des ersten Signalanteils in den Abtastwerten der zweiten Abtastung umfassen.

Das Verfahren 500 kann optional um alle Merkmale, Funktionalitäten und Details ergänzt werden, die hierin beschrieben sind, und zwar sowohl einzeln als auch in Kombination. Insbesondere kann das Verfahren 500 auch um alle Merkmale, Funktionalitäten und Details ergänzt werden, die hierin in Bezug auf die erfindungsgemäßen Vorrichtungen beschrieben sind.

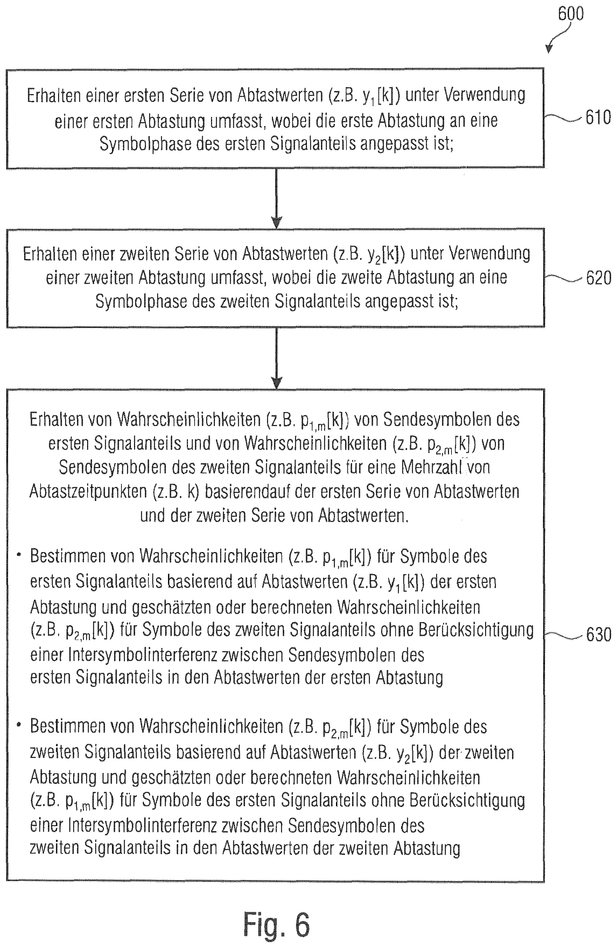

## 6. Verfahren gemäß Fig. 6

Fig. 6 zeigt ein Flussdiagramm eines Verfahrens 600 zum Empfangen eines Kombinationssignals, das zwei separate Signalanteile aufweist, deren Impulse zueinander verschoben sind und/oder deren Trägerschwingung eine Phasendifferenz aufweisen. Das Verfahren umfasst ein Erhalten 610 einer ersten Serie von Abtastwerten unter Verwendung einer ersten Abtastung, wobei die erste Abtastung an eine Symbolphase des ersten Signalanteils angepasst ist. Das Verfahren 600 umfasst ferner ein Erhalten 620 einer zweiten Serie von Abtastwerten unter Verwendung einer zweiten Abtastung, wobei die zweite Abtastung an eine Symbolphase des zweite Signalanteils angepasst ist. Das Erhalten 610 der ersten Serie von Abtastwerten und das Erhalten 620 der zweiten Serie von Abtastwerten können beispielsweise parallel oder nacheinander ausgeführt werden.

Das Verfahren 600 umfasst ferner ein Erhalten 630 von Wahrscheinlichkeiten von Sendesymbolen des ersten Signalanteils und von Wahrscheinlichkeiten von Sendesymbolen des zweiten Signalanteils für eine Mehrzahl von Abtastzeitpunkten basierend auf der ersten Serie von Abtastwerten und der zweiten Serie von Abtastwerten. Das Erhalten 630 von Wahrscheinlichkeiten umfasst beispielsweise ein Bestimmen von Wahrscheinlichkeiten für Symbole des ersten Signalanteils basierend auf Abtastwerten der ersten Abtastung und geschätzten oder berechneten Wahrscheinlichkeiten für Symbole des zweiten Signalanteils ohne Berücksichtigung einer Inter-Symbol-Interferenz zwischen Sendesymbolen des ersten Signalanteils in den Abtastwerten der ersten Abtastung. Das Erhalten 630 von Wahrscheinlichkeiten umfasst ferner ein Bestimmen von Wahrscheinlichkeiten für Symbole des zweiten Signalanteils basierend auf Abtastwerten der zweiten Abtastung und geschätzten oder berechneten Wahrscheinlichkeiten für Symbole des ersten Signalanteils ohne Berücksichtigung einer Inter-Symbol-Interferenz zwischen Sendesymbolen des zweiten Signalanteils in den Abtastwerten der zweiten Abtastung.

Das Verfahren 600 kann um alle Merkmale, Details und Funktionalitäten ergänzt werden, die hierin beschrieben sind, und zwar sowohl einzeln als auch in Kombination. Insbesondere kann das Verfahren 600 auch um alle Merkmale, Funktionalitäten und Details ergänzt werden, die hierin in Bezug auf die erfindungsgemäßen Vorrichtungen beschrieben sind.

7. Weitere Ausführungsbeispiele

im Folgenden werden weitere Ausführungsbeispiele beschrieben. Insbesondere wird ein technisches Umfeld und ein Hintergrund erläutert. Außerdem wird eine iterative Trennung nach den nicht-vorveröffentlichten deutschen Patentanmeldungen 10 2018 202 648 und 10 2018 202 649 (Referenzen [1] und [2]) beschrieben. Dabei werden Empfängerkonzepte für einen optimierten 2-Nutzer-Empfänger beschrieben. Es wird auf eine Ausgangslage und eine Vorverarbeitung eingegangen. Weiterhin wird eine iterative Trennung mit Hilfe eines modifizierten BCJR-Algorithmus beschrieben. Diesbezüglich wird beispielsweise ein erster Schritt (Schritt 1) und ein zweiter Schritt (Schritt 2) beschrieben.
Weiterhin werden Vorschläge für Erweiterungen bzw. Veränderungen gemäß Aspekten der Erfindung erläutert. So wird eine Erweiterung bzw. Veränderung auf eine zweifache Inter-Symbol-Interferenz-Ausnutzung (ISI-Ausnutzung) beschrieben. Ferner wird eine Erweiterung bzw. Veränderung auf eine zweifache, komplexitätsreduzierte Verarbeitung ohne BCJR beschrieben. Weiterhin wird eine Erweiterung bzw. Veränderung auf voneinander verschiedene Trägerfrequenzen beschrieben.
Weiterhin werden einige Ausführungsbeispiele dargelegt.

7.1 Technisches Umfeld und Hintergrund

Im Hinblick auf das technische Umfeld wird beispielsweise auf die nicht-vorveröffentlichten deutschen Patentanmeldungen 10 2018 202 647, 10 2018 202 648 und 10 2018 202 649 verwiesen.

7.2. Iterative Trennung nach den nicht-vorveröffentlichten deutschen Patentanmeldungen 10 2018 202 648 und 10 2018 202 649 (Referenzen [1] und f21).

7.2.1 Empfängerkonzepte für einen optimierten Zwei-Nutzer-Empfänger

Im Folgenden werden Empfängerkonzepte für einen optimierten Zwei-Nutzer-Empfänger beschrieben, die bei Ausführungsbeispielen gemäß der vorliegenden Erfindung, beispielsweise in modifizierter Form, eingesetzt werden können.

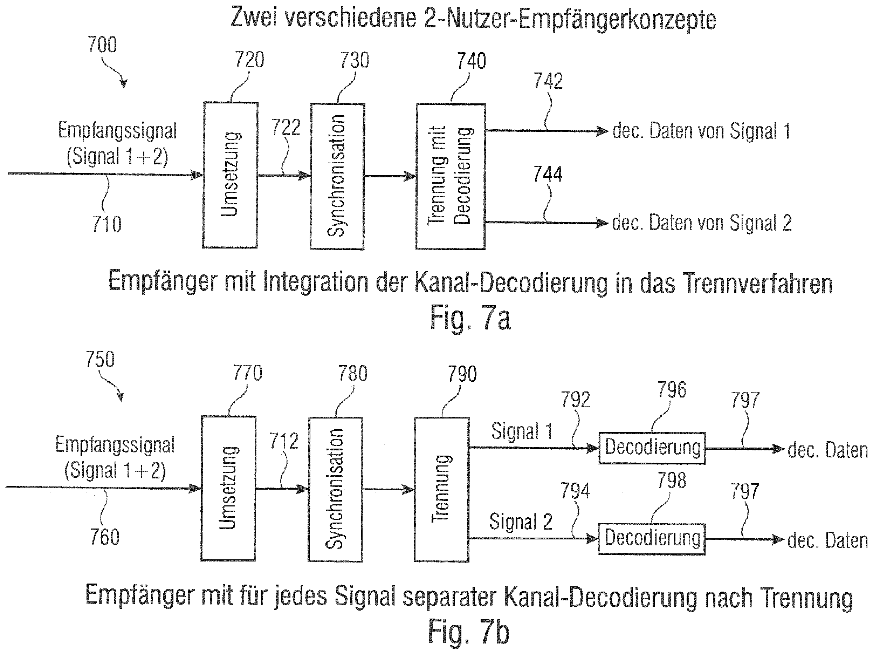

Fig. 7a zeigt eine schematische Darstellung eines Empfängers mit einer Integration der Kanal-Decodierung in das Trennverfahren. Der Empfänger gemäß der Fig. 7a ist in seiner Gesamtheit mit 700 bezeichnet. Der Empfänger 700 empfängt ein Empfangssignal 710, das beispielsweise ein erstes Signal (Signal 1) und ein zweites Signal (Signal 2) bzw. einen ersten Signalanteil und einen zweiten Signalanteil aufweist.
Der Empfänger 700 umfasst eine Empfangssignalumsetzung 720, die beispielsweise ausgelegt ist, um das Empfangssignal 710 in einer Frequenz umzusetzen, beispielsweise in einen Zwischenfrequenzbereich oder in ein Basisband. Die Umsetzung 720 kann beispielsweise ein komplexwertiges Ausgangssignal mit einer In-Phase-Komponente und einer Quadratur-Komponente erzeugen. Ein Ausgangssignal der Umsetzung 720 ist mit 722 bezeichnet.
Der Empfänger 700 umfasst ferner eine Synchronisation 730, die beispielsweise das Empfangssignal 710 bzw. das umgesetzte Empfangssignal 722 analysieren kann und beispielsweise einen oder mehrere Parameter des Empfangssignals bzw. des umgesetzten Signals 722 bestimmen kann. Beispielsweise kann die Synchronisation 730 eine Trägerfrequenz, eine Trägerphase, eine Symboldauer oder eine Symbolphase bestimmen und beispielsweise eine Abtastung bzw. mehrere Abtastungen entsprechend steuern bzw. auf das Empfangssignal 710 oder das umgesetzte Empfangssignal 722 synchronisieren.
Der Empfänger 700 umfasst ferner eine Trennung mit Decodierung 740. Die Trennung und Decodierung kann beispielsweise decodierte Daten 742 des ersten Signals (z. B. Signal 1) bzw. des ersten Signalanteils und decodierte Daten 744 des zweiten Signals (z. B. Signal 2) bzw. des zweiten Signalanteils auf der Basis des Empfangssignals bzw. des umgesetzten Empfangssignals 722 bzw. auf der Basis von Abtastwerten, die auf dem Empfangssignal 710 bzw. dem umgesetzten Empfangssignal 722 basieren, bestimmen.
Weitere Details werden im Folgenden noch erläutert.
Fig. 7b zeigt eine schematische Darstellung eines Empfängers mit für jedes Signal separater Kanal-Decodierung nach der Trennung. Der Empfänger gemäß der Fig. 7b ist in seiner Gesamtheit mit 750 bezeichnet. Der Empfänger 750 ist ausgelegt, ein Empfangssignal 760 zu empfangen, das beispielsweise dem Empfangssignal 710 entspricht. Der Empfänger 750 umfasst ferner eine Umsetzung 770, die beispielsweise der Umsetzung 720 des Empfängers 700 entspricht. Der Empfänger 750 umfasst ferner eine Synchronisation 780, die beispielsweise der Synchronisation 730 des Empfängers 700 entspricht. Der Empfänger 750 umfasst ferner eine Trennung 790, die ausgelegt ist, um beispielsweise ein erstes Signal (beispielsweise Signal 1) bzw. einen ersten Signalanteil 792 und ein zweites Signal (z. B. Signal 2) bzw. einen zweiten Signalanteil 794 zu erhalten. beispielsweise kann die Trennung 790 das erste Signal 792 und das zweite Signal 794 auf der Basis des Empfangssignals bzw. des umgesetzten Empfangssignals 772 bzw. auf der Basis von Abtastwerten, die auf dem Empfangssignal 760 oder auf dem umgesetzten Empfangssignal 772 basieren, erhalten.

Der Empfänger 750 umfasst ferner eine erste Decodierung 796, die beispielsweise ausgelegt ist, um basierend auf dem ersten Signal 792 erste decodierte Daten 794 zu erhalten. Der Empfänger 750 umfasst ferner eine zweite Decodierung 798, die ausgelegt ist, um basierend auf dem zweiten Signal bzw. Signalanteil 794 zweite decodierte Daten 797 zu erhalten.

Weitere Details werden im Folgenden noch erläutert.

Zusammenfassend ist somit festzuhalten, dass die Fig. 7a und 7b zwei Empfängerkonzepte für einen Zwei-Nutzer-Empfänger beschreiben. In beiden Empfängerkonzepten wird ein Mehrträgersignal (z. B. das Empfangssignal 710 bzw. 760) nach dem Empfang in das äquivalente komplexe Basisband umgesetzt (Block Umsetzung 720, 770 in Fig. 7a und 7b) und es werden die Parameter bzw. Modulationsparameter (z. B. Trägerfrequenz und/oder Trägerphase und/oder Symboldauer und/oder Symbolphase und/oder Modulationsverfahren und/oder Signalleistung) geschätzt (z. B. in dem Block "Synchronisation" 730, 780). In der Verarbeitung danach unterscheiden sich die Konzepte voneinander.

Bei dem ersten Konzept gemäß Fig. 7a erfolgt eine Kanaldecodierung im Trennungsvorgang (beispielsweise in dem Block "Trennung mit Decodierung" 740 in Fig. 7a). Am Ausgang liegen die decodierten Daten 742, 744 von beiden Signalen bzw. Signalanteilen getrennt voneinander an.

Bei dem zweiten Konzept gemäß Fig. 7b wird die Kanalcodierung für das Trennverfahren nicht ausgenutzt, so dass nach der Trennung (Block "Trennung" 790) aus den Zuverlässigkeitsinformationen der Kanalbits (beispielsweise des ersten Signals 792 und des zweiten Signals 794) mittels Kanaldecodierung (z. B. durch die erste Decodierung 796 und die zweite Decodierung 798) die decodierten Daten berechnet werden. Hierbei sollte (oder muss in manchen Fällen) am Sender verwendetes Kanalcodierungsverfahren bekannt sein.

Als Trennverfahren wird ein iteratives Verfahren vorgeschlagen, welches in den nachfolgenden Abschnitten beschrieben wird.

Zusammenfassend ist somit zu sagen, dass die Funktionalitäten bzw. Funktionsblöcke, wie sie in den Fig. 7a und 7b gezeigt sind, beispielsweise in den Empfängern 100 und 300 gemäß den Figuren 1 und 3 einzeln oder in Kombination aufgenommen werden können. Beispielsweise kann die Umsetzung 720, 770 im Rahmen einer Vorverarbeitung in den Empfängern 100, 300 eingesetzt werden. Ebenso kann die Synchronisation 730, 780 in den Empfängern 100, 300 eingesetzt werden, und kann beispielsweise die Abtastwertbestimmung 140, 340 geeignet ansteuern bzw. auf einen Sendesymboltakt oder auf eine Sendesymbolphase synchronisieren. Ferner können beispielsweise die Wahrscheinlichkeitsbestimmungen 150, 160 der Trennung 790 (oder auch der Trennung 740) entsprechen. Alternativ können beispielsweise die Wahrscheinlichkeitsbestimmungen 350, 360 der Trennung 790 (oder auch der Trennung 740) entsprechen.

Im Übrigen sei darauf hingewiesen, dass die hierin beschriebenen Konzepte zur Bestimmung von Wahrscheinlichkeiten von Sendesymbolen zweier Signalanteile beispielsweise im Rahmen der Trennung 740 und/oder im Rahmen der Trennung 790 eingesetzt werden können.

Beispielsweise kann das Konzept 200 gemäß der Fig. 2 im Rahmen der Trennung 740 und im Rahmen der Trennung 790 eingesetzt werden. Alternativ dazu kann auch das Konzept 400 gemäß der Fig. 4 im Rahmen der Trennung 740 oder im Rahmen der Trennung 790 eingesetzt werden.

In anderen Worten, die Empfängerkonzepte, die anhand der Fig. 7a und 7b beschrieben sind, können optional um alle Merkmale, Funktionalitäten und Details ergänzt werden, die hierin beschrieben sind, und zwar sowohl einzeln als auch in Kombination. Insbesondere können auch die im Folgenden beschriebenen Konzepte die Bestimmung von Wahrscheinlichkeiten von Sendesymbolen bzw. zur Signaltrennung in den Empfängern 700, 750 eingesetzt werden.

### 7.2.2 Ausgangslage

Im Folgenden werden einige Bedingungen beschrieben, die bei Ausführungsbeispielen der Erfindung erfüllt sein sollten.

Es wird von folgenden Bedingungen ausgegangen:

- es werden zwei sich im Frequenzbereich überlagernde, in dem Beobachtungszeitrahmen kontinuierlich-gesendete Signale empfangen. Diese Signale bzw. Signalanteile sind beispielsweise in dem Kombinationssignal 110 bzw. dem Kombinationssignal 310 bzw. in dem Empfangssignal 710 bzw. in dem Empfangssignal 760 enthalten.

- Beide Signale (bzw. Signalanteile) verwenden digitale Pulsamplituden-Modulation (PAM), was Amplitudenumtastung (amplitude-shift-keying, ASK), Phasenumtastung (phase-shift-keying, PSK) und Quadratur-Amplituden-Modulation (quadratureamplitude-modulation, QAM) sowie alle Mischformen und differenzielle Vorcodierung miteinschließt.

- Für die Pulsformung werden senderseitig, wie allgemein üblich, Wurzel-Nyquist-Impulse (square-root-Nyquist-Impulse), wie z. B. root-raised cosine, RRC-Impulse (Wurzel-angehobener-Cosinus-Impulse) verwendet.

- Symbolraten und Trägerfrequenzen beider Signale (bzw. Signalanteile) sind näherungsweise identisch.

Es sei nun darauf hingewiesen, dass die genannten Bedingungen nicht notwendigerweise erfüllt sein müssen. Vielmehr kann in manchen Fällen von einer oder von mehreren oder von allen oben genannten Bedingungen abgewichen werden.

### 7.2.3 Vorverarbeitung

Im Folgenden wird eine mögliche Vorverarbeitung beschrieben, die beispielsweise bei Ausgangsbeispielen gemäß der vorliegenden Erfindung eingesetzt werden kann. Das Empfangssignal wird beispielsweise zuerst in das äquivalente komplexe Basisband umgesetzt. Dies kann beispielsweise im Rahmen eine Vorverarbeitung in den Empfängern 100 oder 300 erfolgen, oder im Rahmen der Umsetzung 720 oder der Umsetzung 770. Beispielsweise wird das Signal mit der geschätzten Trägerfrequenz ins Basisband verschoben.

Nach Schätzung der Symbolrate durchläuft das Signal beispielsweise ein signalangepasstes Filter bzw. "matched-Filter" (d. h. passend zum Sendefilter für maximale Rauschbegrenzung) und es wird im Symboltakt abgetastet. Die Filterung kann beispielsweise durch das an die Sendeimpulsform angepasste Filter 130 oder durch das an die Sendeimpulsform angepasste Filter 330 erfolgen, und die Abtastung kann beispielsweise durch die Abtastwertbestimmung 140 oder die Abtastwertbestimmung 340 erfolgen. Die Schätzung der Symbolrate kann beispielsweise durch die Synchronisation 730 oder die Synchronisation 780 erfolgen, und die Filterung und Abtastung kann beispielsweise im Rahmen der Trennung 740 oder der Trennung 790 erfolgen.

Die Symbolphase wird so gewählt, dass ein Signal, nachfolgend als Signal 1 (oder erstes Signal, oder erster Signalanteil) bezeichnet, zu den optimalen Zeitpunkten abgetastet wird, d. h. Inter-Symbol-Interferenz(ISI)-frei ist. In diesem Fall ist das Signal 2 (bzw. das zweite Signal, oder der zweite Signalanteil) meist nicht für den richtigen Zeitpunkt abgetastet, so dass Inter-Symbol-Interferenz (ISI) entsteht. Außerdem wird das Signal beispielsweise mit der geschätzten Trägerphase von Signal 2 synchronisiert. Am Ausgang der Synchronisation liegt im Zeitschritt k nun beispielsweise das folgende zeitdiskrete Signal $y_1[k]$ an:

$$y_1[k] = a_1[k]\nu_1 e^{j(\varphi_1-\varphi_2)} + \sum_{k'=-\infty}^{\infty} a_2[k']\nu_2 g_0((k-k')T + (T_1-T_2)) + \nu_3 n_1[k],$$

$$(2.1)$$

mit folgenden Größen:

$$a_1[k] \in \{a_{1,0}, a_{1,1}, \cdots, a_{1,M_1-1}\} \quad \text{und} \quad a_2[k] \in \{a_{2,0}, a_{2,1}, \cdots, a_{2,M_2-1}\}.$$

Datentragende Symbole, wobei $M_1$ und $M_2$ die Anzahl der Konstellationspunkte von Signal 1 und 2 darstellen.

$\nu_1$, $\nu_2$, $\nu_3$: Verstärkungsfaktoren von Signal 1, 2 und vom additiven, weißen, Gaußförmigen Rauschen
$g_0(t)$: Gesamtimpulsform aus Sende- und Empfangsfilter, sowie Übertragungskanal
$\varphi_1$, $\varphi_2$: Trägerphasen von Signalen 1 und 2
$T_1$, $T_2$: Symbolphasen, d.h. zeitliche Verschiebung zur optimalen Abtastzeitpunkte von Signal 1 und 2
$n_1[k]$ additives, weißes, Gaußförmiges Rauschen mit Varianz 1

Index 1 steht beispielsweise für den ersten Verarbeitungspart, wobei der zweite Verarbeitungspart erst in der Erweiterung im Abschnitt 7.3.1 eingeführt wird.

### 7.2.4 Iterative Trennung mit Hilfe eines modifizierten BCJR-Algorithmus

Die beiden Symbolsequenzen $a_1[k]$ und $a_2[k]$ lassen sich beispielsweise mit Hilfe eines Viterbi-Algorithmus detektieren. Die Anzahl der Zustände ist beispielsweise $M_2^{L_{dec}-1}$, wobei $L_{dec}$ die Anzahl der berücksichtigten ISI-Abgriffe bzw. ISI-Taps darstellt. Zwischen den Zuständen gibt es $M_1 \cdot M_2$ Übergänge, weshalb die Komplexität bei höherstufigen Modulationsverfahren stark ansteigt. Die Anzahl der Zustände steigt, wenn bei Verwendung von Faltungscodes als Kanalcode ein gemeinsames Trellis-Decodierverfahren eingesetzt wird, um die Leistungseffizienz zu steigern.

Um den enormen Aufwand auf Grund der hohen Anzahl an Zuständen zu reduzieren, kann beispielsweise unter anderem ein iteratives Verfahren eingesetzt werden, bei welchem in jedem Iterationsschritt die beiden Symbolsequenzen getrennt voneinander detektiert werden und das jeweils andere Signal als Störung in die Detektion mit einbezogen wird. Dazu werden beispielsweise die a-posteriori-Wahrscheinlichkeiten für die Symbole $a_1[k]$ und $a_2[k]$ iterativ berechnet, wobei im ersten Schritt beispielsweise alle Wahrscheinlichkeiten als identisch angenommen werden. Dabei wird in jeder Iteration ein modifizierter BCJR-Algorithmus angewandt, der im Abschnitt 7.2.4.1 beschrieben wird, wobei BCJR für Bahl, Cocke, Jelinek und Raviv steht und einen Algorithmus für eine Trellis-Decodierung darstellt. Zuvor werden ein paar Definitionen eingeführt. Der im Zeitschritt k vorliegende, approximierte ISI-Wert $i_1[k]$ von Signal 2, das auf das Signal 1 als Interferenz wirkt, wird beispielsweise beschrieben durch

$$i_1[k] = \sum_{k'=k-L_{dec}/2}^{k+L_{dec}/2} a_2[k']\nu_2 g_0((k-k')T + (T_1 - T_2)).$$

$$(2.2)$$

Hinweis: Der Index 1 bei $i_1[k]$ bezieht sich auf den Verarbeitungspfad 1 in $y_1[k]$. Es gibt beispielsweise $M_2^{L_{dec}+1}$ mögliche Werte für $i_1[k]$. Nachdem die Synchronisationsparameter vorliegen, können diese hypothetischen Werte berechnet werden und erhalten die Bezeichnung $i_{1,p}$ mit dem Index $p \in \{0, 1, \cdots, M_2^{L_{dec}+1} - 1\}$.

Die a-posteriori-Wahrscheinlichkeit, dass $a_1[k] = a_{1,m}$ gesendet wurde, wird mit $p_{1,m}[k]$ bezeichnet und äquivalent dazu $p_{2,m}[k]$ die a-posteriori-Wahrscheinlichkeit, dass $a_2[k] = a_{2,m}$ gesendet wurde,

Der BJCR-Algorithmus arbeitet blockweise, d.h. es wird erst eine bestimmte Anzahl an Symbolen als Block gesammelt, bevor die a-posteriori-Wahrscheinlichkeiten der Sendesymbole auf diesen Block iterativ geschätzt werden. Da im Zeitschritt $k$ in (2.2) jeweils $L_{dec}/2$ Symbole vor und nach $k$ benötigt werden, muss die Blockgröße um $L_{dec}/2$ erweitert werden, wobei die hinzugekommen Symbole selbst nicht neu geschätzt werden. Als a-posteriori-Wahrscheinlichkeiten der Symbole, die noch nicht geschätzt wurden, werden gleich wahrscheinliche Werte angenommen. Ist die Schätzung der Symbole eines Blocks fertig, so wird der zeitlich nachfolgende Block verarbeitet, wobei sich die Blöcke zeitlich überlappen, so dass der nachfolgende Block für dessen erste Symbole (mindestens $L_{dec}/2$) schon Schätzwerte für deren a-posteriori-Wahrscheinlichkeiten aufweist.

In anderen Worten, bei Kenntnis der Symbolphasen $T_1$ und $T_2$ sowie der Gesamtimpulsformung $g_0(T)$ sowie der Konstellationspunkte, die verschiedenen Daten-tragenden Symbolen zugeordnet sind, kann der Empfänger die Werte $i_1[k]$ bzw. $i_{1,p}$ für verschiedene mögliche Folgen von Datensymbolen bzw. Sendesymbolen des zweiten Signalanteils bestimmen. Die Symbolphasen $T_1$ und $T_2$ können beispielsweise durch eine Analyse der Empfangssignale der Synchronisation durch den Empfänger ermittelt werden. Der Gesamtimpuls $g_0(t)$ kann für den Empfänger 750 ebenso bekannt sein, da der Empfänger typischerweise die vorbestimmten Sende- und Empfangsfilter kennt und eine Schätzung der Kanaleigenschaften vornehmen kann. Es wird somit beispielsweise ohne weiteres möglich, $i_{1,p}$ oder $i_{2,p}$ zu bestimmen. Andere Ansätze für die Bestimmung von $i_{1,p}$ sind natürlich auch möglich.

7.2.4.1 Schritt 1

In Schritt 1 wird eine Schätzung der a-posteriori-Wahrscheinlichkeiten für Signal 2 aus den a-posteriori-Wahrscheinlichkeiten von Signal 1 mit Hilfe des modifizierten BCJR-Algorithmus durchgeführt. Beim Durchlaufen des Trellis werden beim BCJR zuerst nichtnormierte Zweig-Übergangswahrscheinlichkeiten $\gamma_{1,k}[i,j]$ im $k$-ten Zeitschritt von Zustand $i$ zu Zustand $j$ mittels

$$\gamma_{1,k}[i,j] = \sum_{m=0}^{M_1-1} p_{1,m}[k]e^{-\frac{\left|y_1[k]-(\nu_1\alpha_{1,m}e^{j(\varphi_1-\varphi_2)}+i_{1,p})\right|^2}{\nu_3^2}}$$

(2.3)

berechnet, wobei $i_{1,p}$ dem zum Zweig $i \rightarrow j$ gehörenden ISI-Wert entspricht. Hinweis: Der Index 1 bei $\gamma_{1,k}[i,j]$ bezieht sich auf den Verarbeitungspfad 1 in $y_1[k]$

Danach werden die berechneten Werte $\gamma_{1,k}[i,j]$ für alle $k$, $i$, $j$ verwendet, um die Vorwärts- und Rückwärtsrekursion durchzuführen. Bei der Vorwärtsrekursion wird die Wahrscheinlichkeit $\alpha_{1,k}[i]$ für einen Zustand $i$ im $k$-ten Zeitschritt berechnet, indem die Zustands-Wahrscheinlichkeiten bis zum Zeitschritt $k$ - 1 einbezogen werden. Bei der Rückwärts-rekursion wird die Wahrscheinlichkeit $\beta_{1,k}[i]$ für einen Zustand $i$ im $k$-ten Zeitschritt berechnet, indem die Wahrscheinlichkeiten der nachfolgenden Zustände bis zum Zeitschritt $k$ einbezogen werden.

Nun kann eine Schätzung der Zustandsübergangswahrscheinlichkeit $p_{1,k}(i, j)$ erfolgen durch

$$p_{1,k}(i,j) = c_{\text{trans},k}\,\alpha_{1,k}[i]\gamma_{1,k}[i,j]\beta_{1,k+1}[j],$$

(2.4)

wobei $c_{\text{trans},k}$ so zu wählen ist, dass die Summe der Wahrscheinlichkeiten in jedem Zeitschritt gleich 1 ergibt.

Die a-posteriori-Wahrscheinlichkeiten $p_{2,m}[k]$ können nun durch Aufsummierung der Zustandsübergangswahrscheinlichkeiten $p_{1,k}(i, j)$ bestimmt werden, die zum jeweiligen Symbol $a_{2,m}$ gehören.

7.2.4.2 Schritt 2

In Schritt 2 wird eine Schätzung der a-posteriori-Wahrscheinlichkeiten für Signal 1 aus den a-posteriori-Wahrscheinlichkeiten von Signal 2 durch Addition der Einzelwahrscheinlichkeiten aller möglichen ISI-Punkte durchgeführt.

Die a-posteriori-Wahrscheinlichkeiten $p_{1,m}[k]$ für das Signal 1 werden wie folgt bestimmt:

$$p_{1,m}[k] = c_{1,\text{sbs}} \sum_{p=0}^{M_2^{\ell_{\text{dec}}+1}-1} \Pr\{i_1[k] = i_{1,p}\}e^{-\frac{\left|y_1[k]-(\nu_1\alpha_{1,m}+i_{1,p})\right|^2}{\nu_3^2}},$$

(2.5)

wobei die a-priori-Wahrscheinlichkeiten $\Pr\{i_1[k] = i_{1,p}\}$ aus dem Produkt der $L_{\text{dec}}$ + 1 a-posteriori-Wahrscheinlichkeiten $p_{2,m}[k]$ berechnet werden, die zu $i_{1,p}$ gehören. Gehört zum Interferenzwert $p$ = 0 z.B. die Symbolfolge

$$\{a_2[k - L_{\text{dec}}/2] = a_{2,0}; a_2[k - L_{\text{dec}}/2 + 1] = a_{2,0}; \cdots ; a_2[k + L_{\text{dec}}/2] = a_{2,0}\},$$

(2.6)

so wird der Wert für $\Pr\{i_1[k] = i_{1,0}\}$ berechnet durch

$$\Pr\{i_1[k] = i_{1,0}\} = p_{2,0}[k - L_{\text{dec}}/2] \cdot p_{2,0}[k - L_{\text{dec}}/2 + 1] \cdots p_{2,0}[k + L_{\text{dec}}/2].$$

$$(2.7)$$

Außerdem wird $C_{1,\text{sbs}}$ so gewählt, dass die Summe über alle a-posteriori-Wahrscheinlichkeiten $p_{1,m}[k]$ gleich 1 ergibt.

7.3. Vorschläge für Erweiterungen

Im Folgenden werden Erweiterungen bzw. Abwandlungen des in Abschnitt 7.2 beschriebenen Konzepts gemäß Ausführungsbeispiel der vorliegenden Erfindung beschrieben. Die hierin beschriebenen Konzepte können, auch in Verbindung mit den im Abschnitt 7.2 beschriebenen Konzepten in Ausführungsbeispielen gemäß der vorliegenden Erfindung eingesetzt werden.
Insbesondere können Ausführungsbeispiele gemäß der Erfindung erhalten werden, indem die im Abschnitt 7.2 beschriebenen Anordnungen basierend auf den Konzepten gemäß den Abschnitten 7.3.1 und/oder 7.3.2 und/oder 7.3.3 modifiziert werden.

7.3.1 Erweiterung auf zweifache ISI-Ausnutzung

Eine Idee gemäß einem Aspekt dieser Erfindung ist eine Erweiterung des BCJR-Verfahrens (z. B. gemäß Abschnitt 7.2.4) auf eine zusätzliche Vorverarbeitung, wodurch man die Detektion des ISI-Anteils mittels BCJR doppelt anwenden kann, so dass das ISI-Gedächtnis beider Signale ausgenutzt werden kann.
Dazu wird neben $y_1[k]$ folgendes Signal berechnet: (bzw. angenommen bzw. durch Abtastung erhalten):

$$y_2[k] = a_2[k]\nu_2 e^{j(\varphi_2 - \varphi_1)} + \sum_{k'=-\infty}^{\infty} a_1[k']\nu_1 g_0((k - k')T + (T_2 - T_1)) + \nu_3 n_2[k].$$

$$(3.1)$$

Es wird also eine zweite Verarbeitung hinzugefügt, wobei nun auf die Symbolphase von Signal 2 und beispielsweise auf die Trägerphase von Signal 1 synchronisiert wird. Der Rauschanteil $n_2[k]$ ist stark korreliert mit $n_1[k]$. Dies wird bei der weiteren Verarbeitung nicht ausgenutzt, kann jedoch optional für eine weitere Verbesserung der Leistungseffizienz getan werden.
Die Trennung erfolgt nun genauso wie in Abschn. 7.2.4 beschrieben, jedoch wird im Schritt 2 statt der Anwendung der Gleichung (2.5) nun eine zweite Instanz des BCJR-Algorithmus auf die Detektion der ISI-Zustände von Signal 1 angewandt, wobei die beiden Indizes, die für die Signale stehen, vertauscht werden. Aus den Gleichungen (2.3) und (2.4) wird damit

$$\gamma_{2,k}[i,j] = \sum_{m=0}^{M_2-1} p_{2,m}[k] e^{-\frac{\left| y_2[k] - (\nu_2 a_{2,m} e^{j(\varphi_2 - \varphi_1)} + i_{2,p}) \right|^2}{\nu_3^2}}$$

$$(3.2)$$

und

$$p_{2,k}(i,j) = c_{\text{trans},k} \alpha_{2,k}[i] \gamma_{2,k}[i,j] \beta_{2,k+1}[j].$$

$$(3.3)$$

In anderen Worten, es kann beispielsweise durch eine zweite Abtastung die Folge $y_2[k]$ erhalten werden, die

bei passender Einstellung der Abtastung beispielsweise durch die Gleichung (3.1) beschrieben werden kann. Basierend auf dem Signal $y_2[k]$, das beispielsweise der zweiten Serie 144 von Abtastwerten bzw. der zweiten Serie 344 von Abtastwerten entsprechen kann, kann dann durch den Wahrscheinlichkeitsbestimmer 160 unter Verwendung der Formeln (3.2) und (3.3) sowie unter Verwendung einer Aufsummierung von durch die Formel (3.3) erhaltenen Wahrscheinlichkeiten auf Wahrscheinlichkeiten $p_{1,m}[k]$ für Symbole des ersten Signalanteils geschlossen werden. Dabei kann beispielsweise ein BCJR-Algorithmus verwendet werden, um basierend auf den in Gleichungen (3.2) erhaltenen Werten $\gamma_{2,k}[i,j]$ die Wahrscheinlichkeitswerte $a_{2,k}[i]$ und $\beta_{2,k+1}[j]$ zu erhalten.

Alternative Vorgehensweisen sind allerdings auch möglich.

7.3.2 Erweiterung (oder Abwandlung) auf zweifache, komplexitätsreduzierte Verarbeitung ohne BCJR

Im Folgenden wird eine weitere Abwandlung der oben (z. B. im Abschnitt 7.2) beschriebenen Vorgehensweise gemäß einem Aspekt der vorliegenden Erfindung beschrieben.

Alternativ zu einer zweifachen ISI-Ausnutzung, wie in Abschnitt 7.3.1 beschrieben, kann die zusätzliche Verarbeitung mittels (3.1) (bzw. die zweite Abtastung, die ein Signal gemäß (3.1) liefert) dazu verwendet werden, die Symbole beider Signale ebenfalls iterativ, aber ohne Ausnutzen von ISI-Gedächtnis, zu schätzen, um Rechenkomplexität einzusparen. Die Einsparung an Rechenkomplexität geht auf Kosten der Leistungseffizienz, welche beschreibt, welches Signal-zu-Störleistungsverhältnis notwendig ist, um eine gewisse Symbolfehlerrate zu erreichen. Dabei sinkt dieser Verlust an Leistungseffizienz bei einer geringen Symbolphasendifferenz und einer günstigen Trägerphasendifferenz zwischen Signal 1 und 2, so dass es Situationen gibt, bei denen die Trennung mittels Ausnutzen von ISI-Gedächtnis keine bessere Leistungseffizienz aufweist - bei höherer Rechenkomplexität.

Die Schätzung der a-posteriori-Wahrscheinlichkeiten $p_{1,m}[k]$ für Signal 1 erfolgt beispielsweise nach den in Abschnitt 7.2.4.2 beschrieben Schritten gemäß (2.5)-(2.7). Für die Schätzung der a-posteriori-Wahrscheinlichkeiten $p_{2,m}[k]$ für Signal 2 erfolgt die Verarbeitung mittels $y_2[k]$ aus (3.1) äquivalent:

$$p_{2,m}[k] = c_{2,sbs} \sum_{p=0}^{M_1^{L_{dec}+1}-1} \Pr\{i_2[k] = i_{2,p}\} e^{-\frac{|y_2[k]-(v_2 a_{2,m}+i_{2,p})|^2}{v_3^2}}, \tag{3.4}$$

wobei die a-priori-Wahrscheinlichkeiten $\Pr\{i_2[k] = i_{2,p}\}$ beispielsweise aus dem Produkt der beispielsweise $L_{dec} + 1$ a-posteriori-Wahrscheinlichkeiten $p_{1,m}[k]$ berechnet werden, die zu $i_{2,p}$ gehören. Gehört zum Interferenzwert $p = 0$ z.B. die Symbolfolge

$$\{a_1[k - L_{dec}/2] = a_{1,0}; a_1[k - L_{dec}/2 + 1] = a_{1,0}; \cdots; a_1[k + L_{dec}/2] = a_{1,0}\}, \tag{3.5}$$

so wird der Wert für $\Pr\{i_2[k] = i_{2,0}\}$ beispielsweise berechnet durch

$$\Pr\{i_2[k] = i_{2,0}\} = p_{1,0}[k - L_{dec}/2] \cdot p_{1,0}[k - L_{dec}/2 + 1] \cdots p_{1,0}[k + L_{dec}/2]. \tag{3.6}$$

Außerdem wird $C_{2,sbs}$ so gewählt, dass die Summe über alle a-posteriori-Wahrscheinlichkeit $p_{2,m}[k]$ gleich 1 ergibt.

In anderen Worten, es kann also sowohl bei der Bestimmung von Wahrscheinlichkeiten von Sendesymbolen des ersten Signalanteils als auch bei der Bestimmung von Wahrscheinlichkeiten für Sendesymbole des zweiten Signalanteils ein Konzept genutzt werden, bei dem Wahrscheinlichkeiten von Sendesymbolen des jeweils anderen Signalanteils genutzt werden, um Wahrscheinlichkeiten verschiedener (Stör-)Beiträge (z. B. $i_{1,p}$ bzw. $i_{2,p}$) verwendet werden. Im Übrigen wird dann unter Berücksichtigung der (Stör-)Beiträge die Wahrscheinlichkeit der verschiedenen Sendesymbole ermittelt, wobei Teilwahrscheinlichkeiten für die einzelnen Sendesymbole, die sich bei Vorliegen bestimmter (Stör-)Beiträge ergeben, über die verschiedenen (Stör-)Beiträge (beispielsweise mit Index p) aufsummiert werden.

Allerdings können auch Abwandlungen von dem entsprechenden Konzept vorgenommen werden.

7.3.3 Erweiterung auf voneinander verschiedene Trägerfrequenzen

Eine weitere Idee dieser Erfindung ist die Erweiterung des mathematischen Modells in Gleichung (2.1), sowie des BCJR-Algorithmus, auf die Trennung von Signalen mit zwei voneinander verschiedenen Trägerfrequenzen $f_{c,1}$ und $f_{c,2}$. Diese Abweichungen entstehen durch Bewegungen von Sender oder Empfänger oder durch Ungenauigkeiten beim verwendeten Oszillator im Sender.

Hinweis: In der Regel sind die Abweichungen der Trägerfrequenzen um ein Vielfaches geringer als die Symbolrate. Fällt die Abweichung in Relation zur Symbolrate jedoch hoch aus, so kann in manchen Fällen nicht mehr dasselbe Matched-Filter für beide Verarbeitungspfade angewandt und das Systemmodell sollte bzw. muss entsprechend angepasst werden.

Es werden in beiden Vorverarbeitungszweigen (aus den ersten zwei Erweiterungen) jeweils auf die Trägerfrequenzen der ISI-behafteten Anteile synchronisiert, d.h. die ECB-Transformation findet jeweils mit der Trägerfrequenz des ISI-Anteils statt und die beiden Gleichungen (2.1) und (3.1) werden wie folgt angepasst:

$$y_1'[k] = a_1[k]\nu_1 e^{j(2\pi(f_{c,1} - f_{c,2})(kT + T_1)) + j(\varphi_1 - \varphi_2)} + \sum_{k'=-\infty}^{\infty} a_2[k']\nu_2 g_0((k - k')T + (T_1 - T_2)) + \nu_3 n_1'[k$$

$$(3.7)$$

und

$$y_2'[k] = a_2[k]\nu_2 e^{j(2\pi(f_{c,2} - f_{c,1})(kT + T_2)) + j(\varphi_2 - \varphi_1)} + \sum_{k'=-\infty}^{\infty} a_1[k']\nu_1 g_0((k - k')T + (T_2 - T_1)) + \nu_3 n_2'[k$$

$$(3.8)$$

Der ISI-Anteil bleibt unverändert, nur die ISI-freie Interferenz und das Rauschen rotiert, wobei die statistischen Eigenschaften von Letzterem auf Grund von dessen rotationsinvarianten Eigenschaften nicht verändert werden . Daher werden nur die Größen $\alpha_{1,m}$ und $\alpha_{2,m}$ in den Gleichungen (2.3) und (3.2) vom BCJR-Ansatz und in den Gleichungen (2.5) und (3.4) vom komplexitätsreduzierten Ansatz zeitvariant und nur diese müssen durch

$$a_{1,m}[k] = a_{1,m} \cdot e^{j(2\pi(f_{c,1} - f_{c,2})(kT + T_1))}$$

$$(3.9)$$

und

$$a_{2,m}[k] = a_{2,m} \cdot e^{j(2\pi(f_{c,2} - f_{c,1})(kT + T_2))}$$

$$(3.10)$$

ersetzt werden, was den Rechenaufwand vergleichsweise nur marginal erhöht.

In anderen Worten, durch eine geringfügige Abwandlung der verwendeten Berechnungsvorschriften bzw. Formeln können die oben beschriebenen Konzepte auf das Vorhandensein verschiedener Trägerfrequenzen erweitert werden. Die entsprechenden Erweiterungen sind allerdings als optional anzusehen.

## 8. Schlussfolgerungen

Im Folgenden werden Aspekte der vorliegenden Erfindung noch einmal kurz zusammengefasst.

Ein erster Aspekt der Erfindung betrifft eine Erweiterung des iterativen Trennverfahrens mittels BCJR-Algorithmus auf eine doppelte Vorverarbeitung mit einer getrennten Synchronisation für beide Signale, wobei jeweils auf die Störung Takt-synchronisiert und auf das Nutzsignal phasen-( und frequenz-) synchronisiert wird und die a-posteriori-Symbol-Wahrscheinlichkeiten der Signale jeweils bei der Anwendung des BCJR für das andere Signal als a-priori-Wahrscheinlichkeiten der Störung zu verwenden sind.

Ein zweiter Aspekt der Erfindung betrifft eine Erweiterung auf ein iteratives Trennverfahren ohne BCJR-Algorithmus mit einer doppelten Vorverarbeitung mit einer getrennten Synchronisation für beide Signale, wobei jeweils auf die Störung takt-synchronisiert und auf das Nutzsignal phasen-( und frequenz-) synchronisiert wird und die a-posteriori-Symbol-Wahrscheinlichkeiten der Signale jeweils bei der Anwendung der Schätzung für das andere Signal als a-priori-Wahrscheinlichkeiten der Störung zu verwenden sind.

Ein weiterer Aspekt der Erfindung betrifft eine Erweiterung des iterativen Trennverfahrens mittels BCJR-Algorithmus als auch des iterativen Trennverfahrens ohne BCJR-Algorithmus auf den Empfang von zwei Signalen mit voneinander unterschiedlichen Trägerfrequenzen, wobei beide dahin gehend angepasst werden, dass sich die Phase der taktsynchronisierten Signalanteils in jedem Zeitschritt weiterdreht.

Diesbezüglich sei darauf hingewiesen, dass die entsprechenden Erfindungsaspekte sowohl einzeln als auch in Kombination mit den oben beschriebenen Ausführungsbeispielen verwendet werden können.

In anderen Worten, es kann beispielsweise ein Ausführungsbeispiel gemäß den Fig. 1, 2a und 2b optional um alle Aspekte, Merkmale, Funktionalitäten und Details ergänzt werden, die hierin im Hinblick auf die Erweiterung des iterativen Trennverfahrens mittels BCJR-Algorithmus auf eine doppelte Vorverarbeitung mit einer getrennten Synchronisation für beide Signale beschrieben sind.

Weiterhin kann beispielsweise das Ausführungsbeispiel gemäß den Fig. 3, 4a und 4b optional um alle Aspekte, Merkmale, Funktionalitäten und Details ergänzt werden, die hierin im Hinblick auf die Erweiterung auf ein iteratives Trennverfahren ohne BCJR-Algorithmus mit einer doppelten Vorverarbeitung mit einer getrennten Synchronisation für beide Signale beschrieben sind.

Im Übrigen können beispielsweise optional alle Ausführungsbeispiele um die Merkmale, Funktionalitäten und Details ergänzt werden, die hierin im Hinblick auf die Erweiterung beider iterativen Trennverfahren auf den Empfang von zwei Signalen mit voneinander unterschiedlichen Trägerfrequenzen beschrieben sind.

Ergänzend sei darauf hingewiesen, dass die entsprechenden Merkmale, Funktionalitäten und Details sowohl einzeln als auch in Kombination in die entsprechenden Ausführungsbeispiele mit aufgenommen werden können.

## 9. Implementierungsalternativen

Obwohl manche Aspekte im Zusammenhang mit einer Vorrichtung beschrieben wurden, versteht es sich, dass diese Aspekte auch eine Beschreibung des entsprechenden Verfah-rens darstellen, sodass ein Block oder ein Bauelement einer Vorrichtung auch als ein ent-sprechender Verfahrensschritt oder als ein Merkmal eines Verfahrensschrittes zu verste-hen ist. Analog dazu stellen Aspekte, die im Zusammenhang mit einem oder als ein Ver-fahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden.

Das erfindungsgemäße codierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersigna-le gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] Johannes Huber. Patentanmeldung 102018202647.5 in Deutschland: Empfänger und Verfahren zum Empfangen eines Kombinationssignals unter Verwendung von Wahrscheinlichkeitsdichtefunktionen, Feb 2018.

[2] Johannes Huber. Patentanmeldung 102018202649.1 in Deutschland: Empfänger und Verfahren zum Empfangen eines Kombinationssignals unter Verwendung getrennter Inphase- und Quadraturkomponenten, Feb 2018.

[3] Johannes Huber. Patentanmeldung Aufwandsgünstiger Empfänger für zwei überlagerte Datensignale (Two-User-Receiver), Nov 2016

**Patentansprüche**

1. Empfänger (300) zum Empfangen eines Kombinationssignals (310), das zwei separate Signalanteile aufweist, deren Impulse zueinander verschoben sind und/oder deren Trägerschwingungen eine Phasendifferenz aufweisen,

   wobei der Empfänger ausgelegt ist, um eine erste Serie von Abtastwerten (342, $y_1[k]$) unter Verwendung einer ersten Abtastung zu erhalten, wobei die erste Abtastung an eine Symbolphase des ersten Signalanteils angepasst ist;
   wobei der Empfänger ausgelegt ist, um eine zweite Serie von Abtastwerten (344, $y_2[k]$) unter Verwendung einer zweiten Abtastung, zu erhalten, wobei die zweite Abtastung an eine Symbolphase des zweiten Signalanteils angepasst ist;
   wobei der Empfänger ausgelegt ist, um Wahrscheinlichkeiten $p_{1,m}[k]$ (312; 492) von Sendesymbolen des ersten Signalanteils und Wahrscheinlichkeiten $p_{2,m}[k]$ (314; 432) von Sendesymbolen des zweiten Signalanteils für eine Mehrzahl von Abtastzeitpunkten (k) basierend auf der ersten Serie von Abtastwerten und der zweiten Serie von Abtastwerten zu erhalten;
   wobei der Empfänger ausgelegt ist, um basierend auf Abtastwerten (342, $y_1[k]$) der ersten Abtastung und geschätzten oder berechneten Wahrscheinlichkeiten $p_{2,m}[k]$ (314;432) für Symbole des zweiten Signalanteils ohne Berücksichtigung einer Intersymbolinterferenz zwischen Sendesymbolen des ersten Signalanteils in den Abtastwerten (342, $y_1[k]$) der ersten Abtastung Wahrscheinlichkeiten $p_{1,m}[k]$ (312; 492) für Symbole des ersten Signalanteils zu bestimmen;
   und
   wobei der Empfänger ausgelegt ist, um basierend auf Abtastwerten (344, $y_2[k]$) der zweiten Abtastung und geschätzten oder berechneten Wahrscheinlichkeiten $p_{1,m}[k]$ (312;492) für Symbole des ersten Signalanteils ohne Berücksichtigung einer Intersymbolinterferenz zwischen Sendesymbolen des zweiten Signalanteils in den Abtastwerten (344, $y_2[k]$) der zweiten Abtastung Wahrscheinlichkeiten $p_{2,m}[k]$ (314;432) für Symbole des zweiten Signalanteils zu bestimmen.

2. Empfänger (300) gemäß Anspruch 1,

   wobei Abtastzeitpunkte der ersten Abtastung so eingestellt sind, dass eine Abtastung eines Ausgangssignals (332) eines signalangepassten Filters (330) derart erfolgt, dass ein Ausgangssignalanteil des signalangepassten Filters, der auf dem ersten Signalanteil basiert, im Wesentlichen Intersymbol-Interferenz-frei abgetastet wird; und
   wobei Abtastzeitpunkte der zweiten Abtastung so eingestellt sind, dass eine Abtastung eines Ausgangssignals (332) eines signalangepassten Filters (330) derart erfolgt, dass ein Ausgangssignalanteil des signalangepassten Filters, der auf dem zweiten Signalanteil basiert, im Wesentlichen Intersymbol-Interferenz-frei abgetastet wird.

3. Empfänger (300) gemäß Anspruch 1 oder 2,

   wobei der Empfänger ausgelegt ist, um die erste Abtastung an die Symbolphase des ersten Signalanteils und an die Trägerphase des zweiten Signalanteils anzupassen; und
   wobei der Empfänger ausgelegt ist, um die zweite Abtastung an die Symbolphase des zweiten Signalanteils und an die Trägerphase des ersten Signalanteils anzupassen.

4. Empfänger (300) gemäß einem der Ansprüche 1 bis 3,

wobei der Empfänger ausgelegt ist, um eine Wahrscheinlichkeitsfunktion auszuwerten, die eine Wahrscheinlichkeit $p_{1,m}[k]$ (312; 492) eines Sendesymbols ($a_{1,m}$) des ersten Signalanteils bei Vorliegen eines aktuellen Abtastwerts (342, $y_1[k]$) der ersten Abtastung und bei Vorliegen einer Überlagerung ($i_{1,p}$) aufgrund einer Folge ($a_{2,0}$; $a_{2,0}$; ...; $a_{2,0}$) von Sendesymbolen des zweiten Signalanteils sowie bei Vorliegen einer Rauschstörung (vs) beschreibt, um die Wahrscheinlichkeiten $p_{1,m}[k]$ (312; 492) für Sendesymbole des ersten Signalanteils zu bestimmen; und

wobei der Empfänger ausgelegt ist, um eine Wahrscheinlichkeitsfunktion auszuwerten, die eine Wahrscheinlichkeit $p_{2,m}[k]$ (314;432) eines Sendesymbols ($a_{2,m}$) des zweiten Signalanteils bei Vorliegen eines aktuellen Abtastwerts (344, $y_2[k]$) der zweiten Abtastung und bei Vorliegen einer Überlagerung ($i_{2,p}$) aufgrund einer Folge ($a_{1,0}$; $a_{1,0}$; ...; $a_{1,0}$) von Sendesymbolen des ersten Signalanteils sowie bei Vorliegen einer Rauschstörung (vs) beschreibt, um die Wahrscheinlichkeiten $p_{2,m}[k]$ (314;432) für Symbole des zweiten Signalanteils zu bestimmen.

5. Empfänger (300) gemäß Anspruch 4,

wobei der Empfänger ausgelegt ist, um die Wahrscheinlichkeitsfunktion, die eine Wahrscheinlichkeit (312; 492; $p_{1,m}[k]$) eines Sendesymbols ($a_{1,m}$) des ersten Signalanteils beschreibt, für eine Mehrzahl von verschiedenen Überlagerungen ($i_{1,p}$), die durch verschiedene Folgen von Sendesymbolen des zweiten Signalanteils herrühren, auszuwerten, und um Ergebnisse der Auswertungen entsprechend zugehörigen Wahrscheinlichkeiten ($\Pr\{i_{1}[k]=i_{1,p}\}$) der jeweiligen Folgen von Sendesymbolen des zweiten Signalanteils zu gewichten, um Wahrscheinlichkeitsbeiträge zu einer Wahrscheinlichkeit $p_{1,m}[k]$ (312;492) für ein Sendesymbol (m) des ersten Signalanteils zu erhalten, und um die Wahrscheinlichkeitsbeiträge, die zu einem gleichen Sendesymbol (m) des ersten Signalanteils zugeordnet sind, zu summieren, um die Wahrscheinlichkeit $p_{1,m}[k]$ (312; 492) für das Sendesymbol (m) des ersten Signalanteils zu erhalten;
und/oder

wobei der Empfänger ausgelegt ist, um die Wahrscheinlichkeitsfunktion, die eine Wahrscheinlichkeit $p_{2,m}[k]$ (314;432) eines Sendesymbols ($a_{2,m}$) des zweiten Signalanteils beschreibt, für eine Mehrzahl von verschiedenen Überlagerungen ($i_{2,p}$), die durch verschiedene Folgen von Sendesymbolen des ersten Signalanteils herrühren, auszuwerten, und um Ergebnisse der Auswertungen entsprechend zugehörigen Wahrscheinlichkeiten ($\Pr\{i_{2}[k]=i_{2,p}\}$) der jeweiligen Folgen von Sendesymbolen des ersten Signalanteils zu gewichten, um Wahrscheinlichkeitsbeiträge zu einer Wahrscheinlichkeit $p_{2,m}[k]$ (314;432) für ein Sendesymbol (m) des zweiten Signalanteils zu erhalten, und um die Wahrscheinlichkeitsbeiträge, die zu einem gleichen Sendesymbol (m) des zweiten Signalanteils zugeordnet sind, zu summieren, um die Wahrscheinlichkeit $p_{2,m}[k]$ (314;432) für das Sendesymbol (m) des zweiten Signalanteils zu erhalten.

6. Empfänger (300) gemäß einem der Ansprüche 4 bis 5, wobei der Empfänger ausgelegt ist, um bei einer Auswertung der ersten Wahrscheinlichkeitsfunktion, die eine Wahrscheinlichkeit $p_{1,m}[k]$ (312; 492) eines Sendesymbols ($a_{1,m}$) des ersten Signalanteils beschreibt, einen zeitlich variablen Beitrag ($a_{1,m}[k]$) eines Sendesymbols des ersten Signalanteils, der sich aufgrund einer Differenz von Trägerfrequenzen des ersten Signalanteils und des zweiten Signalanteils ergibt, zu berücksichtigen.
und/oder
wobei der Empfänger ausgelegt ist, um bei einer Auswertung der zweiten Wahrscheinlichkeitsfunktion, die eine Wahrscheinlichkeit $p_{2,m}[k]$ (314;432) eines Sendesymbols ($a_{2,m}$) des zweiten Signalanteils beschreibt, einen zeitlich variablen Beitrag ($a_{2,m}[k]$) eines Sendesymbols des zweiten Signalanteils, der sich aufgrund einer Differenz von Trägerfrequenzen des zweiten Signalanteils und des ersten Signalanteils ergibt, zu berücksichtigen.

7. Empfänger (300) gemäß einem der Ansprüche 1 bis 6,

wobei der Empfänger ausgelegt ist, um die Wahrscheinlichkeit $p_{1,m}[k]$ für ein Symbol mit Sendesymbolindex m des ersten Signalanteils gemäß

$$p_{1,m}[k] = c_{1,\text{sbs}} \sum_{p=0}^{M_2^{L_{\text{dec}}+1}-1} \Pr\{i_1[k] = i_{1,p}\} e^{-\frac{\left| y_1[k] - (v_1 a_{1,m} + i_{1,p}) \right|^2}{v_3^2}}$$

zu erhalten,

wobei $c_{1,sbs}$ ein Normierungsfaktor ist;

wobei p eine Laufvariable ist, die unterschiedliche Überlagerungen $i_{1,p}$, die von verschiedene Folgen von Sendesymbolen des zweiten Signalanteils herrühren, bezeichnet;

wobei $M_2$ eine Anzahl von Konstellationspunkten des zweiten Signalanteils ist;

wobei $L_{dec}$ eine relevante Ausdehnung einer Intersymbolinterferenz zwischen Sendesymbolen des zweiten Signalanteils beschreibt;

wobei $Pr\{i_1[k]=i_{1,p}\}$ eine Wahrscheinlichkeit für das Vorliegen einer Folge von Sendesymbolen des zweiten Signalanteils, die zu der Überlagerung $i_{1,p}$ führen, beschreibt;

wobei $y_1[k]$ ein Abtastwert der ersten Abtastung zu einem Zeitschritt k ist;

wobei $v_1$ ein Verstärkungsfaktor des ersten Signalanteils ist;

wobei $a_{1,m}$ ein Sendesymbol des ersten Signalanteils mit Sendesymbolindex m ist, der im Falle einer Differenz zwischen einer Trägerfrequenz des ersten Signalanteils und einer Trägerfrequenz des zweiten Signalanteils ein zeitvariabler Beitrag $a_{1,m}[k]$ ist;

wobei $i_{1,p}$ eine Überlagerung ist, die von einer Folge von Sendesymbolen des zweiten Signalanteils herrührt;

wobei $v_3$ eine Rauschintensität beschreibt;

und/oder

wobei der Empfänger ausgelegt ist, um die Wahrscheinlichkeit $p_{2,m}[k]$ für ein Symbol mit Sendesymbolindex m des zweiten Signalanteils gemäß

$$p_{2,m}[k] = c_{2,sbs} \sum_{p=0}^{M_1^{L_{dec}+1}-1} Pr\{i_2[k]=i_{2,p}\} e^{-\frac{\left|y_2[k]-(v_2 a_{2,m}+i_{2,p})\right|^2}{v_3^2}}$$

zu erhalten,

wobei $c_{2,sbs}$ ein Normierungsfaktor ist;

wobei p eine Laufvariable ist, die unterschiedliche Überlagerungen $i_{2,p}$, die von verschiedene Folgen von Sendesymbolen des ersten Signalanteils herrühren, bezeichnet;

wobei $M_1$ eine Anzahl von Konstellationspunkten des ersten Signalanteils ist;

wobei $L_{dec}$ eine relevante Ausdehnung einer Intersymbolinterferenz zwischen Sendesymbolen des ersten Signalanteils beschreibt;

wobei $Pr\{i_2[k]=i_{2,p}\}$ eine Wahrscheinlichkeit für das Vorliegen einer Folge von Sendesymbolen des ersten Signalanteils, die zu der Überlagerung $i_{2,p}$ führen, beschreibt;

wobei $y_2[k]$ ein Abtastwert der zweiten Abtastung zu einem Zeitschritt k ist;

wobei $v_2$ ein Verstärkungsfaktor des zweiten Signalanteils ist;

wobei $a_{2,m}$ ein Sendesymbol des zweiten Signalanteils mit Sendesymbolindex m ist, der im Falle einer Differenz zwischen einer Trägerfrequenz des zweiten Signalanteils und einer Trägerfrequenz des ersten Signalanteils ein zeitvariabler Beitrag $a_{2,m}[k]$ ist;

wobei $i_{2,p}$ eine Überlagerung ist, die von einer Folge von Sendesymbolen des ersten Signalanteils herrührt;

wobei $v_3$ eine Rauschintensität beschreibt.

8. Empfänger gemäß einem der Ansprüche 1 bis 7,

wobei der Empfänger ausgelegt ist, um basierend auf einer aktualisierten Schätzung der Wahrscheinlichkeiten $p_{1,m}[k]$, $p_{2,m}[k]$ (312; 492; 314; 432) von Sendesymbolen eines der beiden Signalanteile eine verbesserte Schätzung der Wahrscheinlichkeiten $p_{1,m}[k]$, $p_{2,m}[k]$ (312; 492; 314; 432) von Sendesymbolen eines anderen der beiden Signalanteile zu erhalten.

9. Verfahren (600) zum Empfangen eines Kombinationssignals, das zwei separate Signalanteile aufweist, deren Impulse zueinander verschoben sind und/oder deren Trägerschwingungen eine Phasendifferenz aufweisen,

wobei das Verfahren ein Erhalten (610) einer erste Serie von Abtastwerten (342, $y_1[k]$) unter Verwendung einer ersten Abtastung umfasst, wobei die erste Abtastung an eine Symbolphase des ersten Signalanteils angepasst ist;

wobei das Verfahren ein Erhalten (620) einer zweiten Serie von Abtastwerten (344, $y_2[k]$) unter Verwendung einer zweiten Abtastung umfasst, wobei die zweite Abtastung an eine Symbolphase des zweiten Signalanteils angepasst ist;

wobei das Verfahren ein Erhalten (630) von Wahrscheinlichkeiten $p_{1,m}[k]$ (312; 492;) von Sendesymbolen des ersten Signalanteils und von Wahrscheinlichkeiten $p_{2,m}[k]$ (314;432) von Sendesymbolen des zweiten Signalanteils für eine Mehrzahl von Abtastzeitpunkten (k) basierend auf der ersten Serie von Abtastwerten und der zweiten Serie von Abtastwerten umfasst;

wobei basierend auf Abtastwerten (342, $y_1[k]$) der ersten Abtastung und geschätzten oder berechneten Wahrscheinlichkeiten $p_{2,m}[k]$ (314;432) für Symbole des zweiten Signalanteils ohne Berücksichtigung einer Intersymbolinterferenz zwischen Sendesymbolen des ersten Signalanteils in den Abtastwerten der ersten Abtastung Wahrscheinlichkeiten $p_{1,m}[k]$ (312;492) für Symbole des ersten Signalanteils bestimmt werden; und

wobei basierend auf Abtastwerten (344, $y_2[k]$) der zweiten Abtastung und geschätzten oder berechneten Wahrscheinlichkeiten $p_{1,m}[k]$ (312;492) für Symbole des ersten Signalanteils ohne Berücksichtigung einer Intersymbolinterferenz zwischen Sendesymbolen des zweiten Signalanteils in den Abtastwerten der zweiten Abtastung Wahrscheinlichkeiten $p_{2,m}[k]$ (314;432) für Symbole des zweiten Signalanteils bestimmt werden.

10. Computerprogramm mit einem Programmcode zur Durchführung des Verfahrens nach Anspruch 9, wenn das Programm auf einem Computer abläuft.

**Claims**

1. Receiver (300) for receiving a combination signal (310) comprising two separate signal portions whose pulses are shifted relative to each other and/or whose carrier oscillations have a phase difference,

   wherein the receiver is configured to obtain a first series of samples (342, $y_1[k]$) using a first sampling, wherein the first sampling is adapted to a symbol phase of the first signal portion;
   wherein the receiver is configured to obtain a second series of samples (344, $y_2[k]$) using a second sampling, wherein the second sampling is adapted to a symbol phase of the second signal portion;
   wherein the receiver is configured to obtain probabilities p1,m[k] (312; 492) of transmission symbols of the first signal portion and probabilities p2,m[k] (314; 432) of transmission symbols of the second signal portion for a plurality of sampling times (k) based on the first series of samples and the second series of samples;
   wherein the receiver is configured to determine probabilities p1,m[k] (312; 492) for symbols of the first signal portion based on samples (342, $y_1[k]$) of the first sampling and estimated or calculated probabilities $p_{2,m}[k]$ (314; 432) for symbols of the second signal portion without taking into account inter-symbol interference between transmission symbols of the first signal portion in the samples (342, $y_1[k]$) of the first sampling; and
   wherein the receiver is configured to determine probabilities p2,m[k] (314; 432) for symbols of the second signal portion based on samples (344, $y_2[k]$) of the second sampling and estimated or calculated probabilities $p_{1,m}[k]$ (312; 492) for symbols of the first signal portion without taking into account inter-symbol interference between transmission symbols of the second signal portion in the samples (344, $y_2[k]$) of the second sampling.

2. Receiver (300) according to claim 1,

   wherein sampling times of the first sampling are set such that sampling of an output signal (332) of a signal-matched filter (330) is performed such that an output signal portion, based on the first signal portion, of the signal-matched filter is sampled substantially inter-symbol-interference-free; and
   wherein sampling times of the second sampling are set such that sampling of an output signal (332) of a signal-matched filter (330) is performed such that an output signal portion, based on the second signal portion, of the signal-matched filter is sampled substantially inter-symbol-interference-free.

3. Receiver (300) according to claim 1 or 2,

   wherein the receiver is configured to adapt the first sampling to the symbol phase of the first signal portion and to the carrier phase of the second signal portion; and
   wherein the receiver is configured to adapt the second sampling to the symbol phase of the second signal portion and to the carrier phase of the first signal portion.

4. Receiver (300) according to one of claims 1 to 3,

wherein the receiver is configured to evaluate a probability function which describes a probability $p_{1,m}[k]$ (312; 492) of a transmission symbol ($a_{1,m}$) of the first signal portion upon presence of a current sample (342, $y_1[k]$) of the first sampling and upon presence of a superposition ($i_{1,p}$) on the basis of a sequence ($a_{2,0}$; $a_{2,0}$; ...; $a_{2,0}$) of transmission symbols of the second signal portion and upon presence of noise interference ($v_3$), in order to determine the probabilities $p_{1,m}[k]$ (312; 492) for transmission symbols of the first signal portion; and
wherein the receiver is configured to evaluate a probability function which describes a probability $p_{2,m}[k]$ (314; 432) of a transmission symbol ($a_{2,m}$) of the second signal portion upon presence of a current sample (344, $y_2[k]$) of the second sampling and upon presence of a superposition ($i_{2,p}$) on the basis of a sequence ($a_{1,0}$; $a_{1,0}$; ...; $a_{1,0}$) of transmission symbols of the first signal portion and upon presence of noise interference ($v_3$) in order to determine the probabilities $p_{2,m}[k]$ (314; 432) for symbols of the second signal portion.

5.   Receiver (300) according to claim 4,

wherein the receiver is configured to evaluate the probability function which describes a probability (312; 492; $p_{1,m}[k]$) of a transmission symbol ($a_{1,m}$) of the first signal portion for a plurality of different superpositions ($i_{1,p}$) which originate from different sequences of transmission symbols of the second signal portion, and to weight results of the evaluations according to associated probabilities (Pr{$i_1[k]=i_{1,p}$}) of the respective sequences of transmission symbols of the second signal portion in order to obtain probability contributions to a probability $p_{1,m}[k]$ (312; 492) for a transmission symbol (m) of the first signal portion, and to sum the probability contributions which are associated to a same transmission symbol (m) of the first signal portion in order to obtain the probability $p_{1,m}[k]$ (312; 492) for the transmission symbol (m) of the first signal portion;
and/or
wherein the receiver is configured to evaluate the probability function which describes a probability p2,m[k] (314; 432) of a transmission symbol (a2,m) of the second signal portion for a plurality of different superpositions (i2,p) which originate from different sequences of transmission symbols of the first signal portion, and to weight results of the evaluations according to associated probabilities (Pr{i2[k]=i2,p}) of the respective sequences of transmission symbols of the first signal portion in order to obtain probability contributions to a probability p2,m[k] (314; 432) for a transmission symbol (m) of the second signal portion, and to sum the probability contributions which are associated to a same transmission symbol (m) of the second signal portion in order to obtain the probability p2,m[k] (314; 432) for the transmission symbol (m) of the second signal portion.

6.   Receiver (300) according to one of claims 4 to 5, wherein the receiver is configured, upon an evaluation of the first probability function which describes a probability $p_{1,m}[k]$ (312; 492) of a transmission symbol ($a_{1,m}$) of the first signal portion, to take into account a temporally variable contribution ($a_{1,m}[k]$) of a transmission symbol of the first signal portion which results on the basis of a difference of carrier frequencies of the first signal portion and of the second signal portion.
and/or
wherein the receiver is configured, upon an evaluation of the second probability function which describes a probability $p_{2,m}[k]$ (314; 432) of a transmission symbol ($a_{2,m}$) of the second signal portion, to take into account a temporally variable contribution ($a_{2,m}[k]$) of a transmission symbol of the second signal portion which results on the basis of a difference of carrier frequencies of the second signal portion and of the first signal portion.

7.   Receiver (300) according to one of claims 1 to 6,

wherein the receiver is configured to obtain the probability p1,m[k] for a symbol with transmission symbol index m of the first signal portion according to

$$ p_{1,m}[k] = c_{1,\text{sbs}} \sum_{p=0}^{M_2^{L_{\text{dec}}+1}-1} \Pr\{i_1[k] = i_{1,p}\} e^{-\frac{\left|y_1[k]-(\nu_1 a_{1,m}+i_{1,p})\right|^2}{\nu_3^2}} $$

wherein $c_{1,\text{sbs}}$ is a normalization factor;
wherein p is a running variable which denotes different superpositions $i_{1,p}$ which originate from different sequences of transmission symbols of the second signal portion;
wherein M2 is a number of constellation points of the second signal portion;

wherein Ldec describes a relevant expansion of inter-symbol interference between transmission symbols of the second signal portion;

wherein $\Pr\{i_1[k]=i_{1,p}\}$ describes a probability for the presence of a sequence of transmission symbols of the second signal portion which lead to the superposition $i_{1,p}$;

wherein $y_1[k]$ is a sample of the first sampling at a time step k;

wherein $v_1$ is a gain factor of the first signal portion;

wherein $a_{1,m}$ is a transmission symbol of the first signal portion with transmission symbol index m which, in the case of a difference between a carrier frequency of the first signal portion and a carrier frequency of the second signal portion, is a temporally variable contribution $a_{1,m}[k]$;

wherein $i_{1,p}$ is a superposition which originates from a sequence of transmission symbols of the second signal portion;

wherein $v_3$ describes a noise intensity;

and/or

wherein the receiver is configured to obtain the probability $p_{2,m}[k]$ for a symbol with transmission symbol index m of the second signal portion according to

$$p_{2,m}[k] = c_{2,\text{sbs}} \sum_{p=0}^{M_1^{L_{\text{dec}}+1}-1} \Pr\{i_2[k] = i_{2,p}\} e^{-\frac{\left|y_2[k]-(v_2 a_{2,m}+i_{2,p})\right|^2}{v_3^2}}$$

wherein $c_{2,\text{sbs}}$ is a normalization factor;

wherein p is a running variable which denotes different superpositions $i_{2,p}$ which originate from different sequences of transmission symbols of the first signal portion;

wherein $M_1$ is a number of constellation points of the first signal portion;

wherein $L_{\text{dec}}$ describes a relevant expansion of inter-symbol interference between transmission symbols of the first signal portion;

wherein $\Pr\{i_2[k]=i_{2,p}\}$ describes a probability for the presence of a sequence of transmission symbols of the first signal portion which lead to the superposition $i_{2,p}$;

wherein $y_2[k]$ is a sample of the second sampling at a time step k;

wherein $v_2$ is a gain factor of the second signal portion;

wherein $a_{2,m}$ is a transmission symbol of the second signal portion with transmission symbol index m which, in the case of a difference between a carrier frequency of the second signal portion and a carrier frequency of the first signal portion, is a temporally variable contribution $a_{2,m}[k]$;

wherein $i_{2,p}$ is a superposition which originates from a sequence of transmission symbols of the first signal portion;

wherein $v_3$ describes a noise intensity.

8. Receiver according to one of claims 1 to 7,
   wherein the receiver is configured to obtain an improved estimate of the probabilities $p_{1,m}[k]$, $p_{2,m}[k]$ (312; 492; 314; 432) of transmission symbols of another of the two signal portions based on an updated estimate of the probabilities $p_{1,m}[k]$, $p_{2,m}[k]$ (312; 492; 314; 432) of transmission symbols of one of the two signal portions.

9. Method (600) for receiving a combination signal comprising two separate signal portions whose pulses are shifted relative to each other and/or whose carrier oscillations have a phase difference,

   wherein the method comprises obtaining (610) a first series of samples (342, $y_1[k]$) using a first sampling, wherein the first sampling is adapted to a symbol phase of the first signal portion;
   wherein the method comprises obtaining (620) a second series of samples (344, $y_2[k]$) using a second sampling, wherein the second sampling is adapted to a symbol phase of the second signal portion;
   wherein the method comprises obtaining (630) probabilities $p_{1,m}[k]$ (312; 492;) of transmission symbols of the first signal portion and probabilities $p_{2,m}[k]$ (314; 432) of transmission symbols of the second signal portion for a plurality of sampling times (k) based on the first series of samples and the second series of samples;
   wherein probabilities $p1,m[k]$ (312; 492) for symbols of the first signal portion are determined based on samples (342, $y_1[k]$) of the first sampling and estimated or calculated probabilities $p_{2,m}[k]$ (314; 432) for symbols of the second signal portion without taking into account inter-symbol interference between transmission symbols of the first signal portion in the samples of the first sampling;

and

wherein probabilities p2,m[k] (314; 432) for symbols of the second signal portion are determined based on samples (344, $y_2$[k]) of the second sampling and estimated or calculated probabilities $p_{1,m}$[k] (312; 492) for symbols of the first signal portion without taking into account inter-symbol interference between transmission symbols of the second signal portion in the samples of the second sampling.

**10.** Computer program having a program code for carrying out the method according to claim 9 when the program runs on a computer.

**Revendications**

**1.** Récepteur (300) pour recevoir un signal de combinaison (310) qui présente deux parts de signal séparées dont les impulsions sont décalées l'une par rapport à l'autre et/ou dont les oscillations de porteuse présentent une différence de phase,

dans lequel le récepteur est conçu pour obtenir une première série de valeurs de balayage (342, $y_1$[k]) à l'aide d'un premier balayage, dans lequel le premier balayage est adapté à une phase de symbole de la première part de signal;

dans lequel le récepteur est adapté pour obtenir une deuxième série de valeurs de balayage (344, $y_2$[k]) à l'aide d'un deuxième balayage, le deuxième balayage étant adapté à une phase de symbole de la deuxième part de signal;

dans lequel le récepteur est conçu pour obtenir les probabilités $p_{1,m}$[k] (312; 492) des symboles de transmission de la première part de signal et les probabilités $p_{2,m}$[k] (314; 432) des symboles de transmission de la deuxième part de signal pour une pluralité de moments de balayage (k) sur base de la première série de valeurs de balayage et de la deuxième série de valeurs de balayage;

dans lequel le récepteur est conçu pour déterminer, sur base des valeurs de balayage (342, $y_1$[k]) du premier balayage et des probabilités estimées ou calculées $p_{2,m}$[k] (314; 432) pour les symboles de la deuxième part de signal, sans tenir compte d'une interférence entre symboles entre les symboles de transmission de la première part de signal dans les valeurs de balayage (342, $y_1$[k]) du premier balayage, les probabilités $p_{1,m}$[k] (312; 492) pour les symboles de la première part de signal; et

dans lequel le récepteur est conçu pour déterminer, sur base des valeurs de balayage (344, $y_2$[k]) du deuxième balayage et des probabilités estimées ou calculées $p_{1,m}$[k] (312; 492) pour les symboles de la première part de signal, sans tenir compte d'une interférence entre symboles entre les symboles de transmission de la deuxième part de signal dans les valeurs de balayage (344, $y_2$[k]) du deuxième balayage, les probabilités $p_{2,m}$[k] (314; 432) pour les symboles de la deuxième part de signal.

**2.** Récepteur (300) selon la revendication 1,

dans lequel les moments de balayage du premier balayage sont réglés de sorte qu'un balayage du signal de sortie (332) d'un filtre adapté au signal (330) ait lieu de sorte qu'une part de signal de sortie du filtre adapté au signal qui est basée sur la première part de signal soit balayée essentiellement de manière exempte d'interférence entre symboles; et

dans lequel les moments de balayage du deuxième balayage sont réglés de sorte qu'un signal de sortie (332) d'un filtre adapté au signal (330) ait lieu de sorte qu'une part de signal de sortie du filtre adapté au signal qui est basée sur la deuxième part de signal soit balayée essentiellement de manière exempte d'interférence entre symboles.

**3.** Récepteur (300) selon la revendication 1 ou 2,

dans lequel le récepteur est conçu pour adapter le premier balayage à la phase de symbole de la première part de signal et à la phase de porteuse de la deuxième part de signal; et

dans lequel le récepteur est conçu pour adapter le deuxième balayage à la phase de symbole de la deuxième part de signal et à la phase de porteuse de la première part de signal.

**4.** Récepteur (300) selon l'une des revendications 1 à 3,

dans lequel le récepteur est conçu pour évaluer une fonction de probabilité qui décrit une probabilité $p_{1,M}[k]$ (312; 492) d'un symbole de transmission ($a_{1,m}$) de la première part de signal en cas de présence d'une valeur de balayage actuelle (342, $y_1[k]$) du premier balayage et en cas de présence d'une superposition ($i_{1,p}$) due à une séquence ($a_{2,0}$; $a_{2,0}$; ...; $a_{2,0}$) de symboles de transmission de la deuxième part de signal ainsi qu'en cas de présence d'une interférence de bruit ($v_3$), pour déterminer les probabilités $p_{1,m}[k]$ (312; 492) pour les symboles de transmission de la première part de signal; et

dans lequel le récepteur est conçu pour évaluer une fonction de probabilité qui décrit une probabilité $p_{2,m}[k]$ (314; 432) d'un symbole de transmission ($a_{2,m}$) de la deuxième part de signal en cas de présence d'une valeur de balayage actuelle (344, $y_2[k]$) du deuxième balayage et en cas de présence d'une superposition ($i_{2,p}$) due à une séquence ($a_{i,0}$; $a_{i,0}$; ...; $a_{1,0}$) de symboles de transmission de la première part de signal ainsi qu'en cas de présence d'une interférence de bruit ($v_3$), pour déterminer les probabilités $p_{2,m}[k]$ (314; 432) pour les symboles de la deuxième part de signal.

5. Récepteur (300) selon la revendication 4,

dans lequel le récepteur est conçu pour évaluer la fonction de probabilité qui décrit une probabilité (312; 492; $p_{1,m}[k]$) d'un symbole de transmission ($a_{1,m}$) de la première part de signal pour une pluralité de superpositions différentes ($i_{1,p}$) qui proviennent du fait de différentes séquences de symboles de transmission de la deuxième part de signal, et pour pondérer les résultats des évaluations selon les probabilités ($Pr\{i_1[k]=i_{1,p}\}$) associées des séquences respectives de symboles de transmission de la deuxième part de signal pour obtenir les contributions de probabilité à une probabilité $p_{1,m}[k]$ (312; 492) pour un symbole de transmission (m) de la première part de signal, et pour additionner les contributions de probabilité qui sont associées à un même symbole de transmission (m) de la première part de signal pour obtenir la probabilité $p_{1,m}[k]$ (312; 492) pour le symbole de transmission (m) de la première part de signal;

et/ou

dans lequel le récepteur est conçu pour évaluer la fonction de probabilité qui décrit une probabilité $p_{2,m}[k]$ (314; 432) d'un symbole de transmission ($a_{2,m}$) de la deuxième part de signal pour une pluralité de superpositions différentes ($i_{2,p}$), qui proviennent du fait de différentes séquences de symboles de transmission de la première part de signal, et pour pondérer les résultats des évaluations selon les probabilités ($Pr\{i_2[k]=i_{2,p}\}$) associées des séquences respectives de symboles de transmission de la première part de signal pour obtenir les contributions de probabilité à une probabilité $p_{2,m}[k]$ (314; 432) pour un symbole de transmission (m) de la deuxième part de signal, et pour additionner les contributions de probabilité qui sont associées à un même symbole de transmission (m) de la deuxième part de signal pour obtenir la probabilité $p_{2,m}[k]$ (314; 432) pour le symbole de transmission (m) de la deuxième part de signal.

6. Récepteur (300) selon l'une des revendications 4 à 5, dans lequel le récepteur est conçu pour tenir compte, lors d'une évaluation de la première fonction de probabilité qui décrit une probabilité $p_{1,m}[k]$ (312; 492) d'un symbole de transmission ($a_{1,m}$) de la première part de signal, d'une contribution variable dans le temps ($a_{1,m}[k]$) d'un symbole de transmission de la première part de signal qui se produit du fait d'une différence entre les fréquences de porteuse de la première part de signal et de la deuxième part de signal,

et/ou

dans lequel le récepteur est conçu pour tenir compte, lors d'une évaluation de la deuxième fonction de probabilité qui décrit une probabilité $p_{2,m}[k]$ (314; 432) d'un symbole de transmission ($a_{2,m}$) de la deuxième part de signal, d'une contribution variable dans le temps ($a_{2,m}[k]$) d'un symbole de transmission de la deuxième part de signal qui se produit du fait d'une différence entre les fréquences de porteuse de la deuxième part de signal et de la première part de signal.

7. Récepteur (300) selon l'une des revendications 1 à 6,

dans lequel le récepteur est conçu pour obtenir la probabilité $p_{1,m}[k]$ pour un symbole à l'indice de symbole de transmission m de la première part de signal selon

$$p_{1,m}[k] = c_{1,sbs} \sum_{p=0}^{M_2^{L_{dec}+1}-1} Pr\{i_1[k] = i_{1,p}\} e^{-\frac{|y_1[k]-(v_1 a_{1,m}+i_{1,p})|^2}{v_3^2}},$$

où $c_{1,sbs}$ est un facteur de normalisation;

où p est une variable courante qui désigne différentes superpositions $i_{1,p}$ qui proviennent de différentes séquences de symboles de transmission de la deuxième part de signal;

où $M_2$ est un nombre de points de constellation de la deuxième part de signal;

où $L_{dec}$ décrit une étendue pertinente d'interférence entre symboles entre les symboles de transmission de la deuxième part de signal;

où $Pr\{i_1[k]=i_{1,p}\}$ décrit une probabilité de présence d'une séquence de symboles de transmission de la deuxième part de signal qui conduisent à la superposition $i_{1,p}$;

où $y_1[k]$ est une valeur de balayage du premier balayage à un moment k;

où $v_1$ est un facteur d'amplification de la première part de signal;

où $a_{1,m}$ est un symbole de transmission de la première part de signal à l'indice de symbole de transmission m qui, dans le cas d'une différence entre une fréquence de porteuse de la première part de signal et une fréquence de porteuse de la deuxième part de signal, est une contribution variable dans le temps $a_{1,m}[k]$;

où $i_{1,p}$ est une superposition qui provient d'une séquence de symboles de transmission de la deuxième part de signal;

où $v_3$ décrit une intensité de bruit;

et/ou

dans lequel le récepteur est conçu pour obtenir la probabilité $p_{2,m}[k]$ pour un symbole à l'indice de symbole de transmission m de la deuxième part de signal selon

$$p_{2,m}[k] = c_{2,sbs} \sum_{p=0}^{M_1^{L_{dec}+1}-1} Pr\{i_2[k] = i_{2,p}\} e^{-\frac{|y_2[k]-(v_2 a_{2,m}+i_{2,p})|^2}{v_3^2}},$$

où $c_{2,sbs}$ est un facteur de normalisation;

où p est une variable courante qui désigne différentes superpositions $i_{2,p}$ qui proviennent de différentes séquences de symboles de transmission de la première part de signal;

où $M_1$ est un nombre de points de constellation de la première part de signal;

où $L_{dec}$ décrit une étendue pertinente d'interférence entre symboles entre les symboles de transmission de la première part de signal;

où $Pr\{i_2[k]=i_{2,p}\}$ décrit une probabilité de présence d'une séquence de symboles de transmission de la première part de signal qui conduisent à la superposition $i_{2,p}$;

où $y_2[k]$ est une valeur de balayage du deuxième balayage à un moment k;

où $v_2$ est un facteur d'amplification de la deuxième part de signal;

où $a_{2,m}$ est un symbole de transmission de la deuxième part de signal à l'indice de symbole de transmission m qui, dans le cas d'une différence entre une fréquence de porteuse de la deuxième part de signal et une fréquence de porteuse de la première part de signal, est une contribution variable dans le temps $a_{2,m}[k]$;

où $i_{2,p}$ est une superposition qui provient d'une séquence de symboles de transmission de la première part de signal;

où $v_3$ décrit une intensité de bruit.

8. Récepteur selon l'une des revendications 1 à 7,
dans lequel le récepteur est conçu pour obtenir, sur base d'une estimation mise à jour des probabilités $p_{1,m}[k]$, $p_{2,m}[k]$ (312; 492; 314; 432) des symboles de transmission de l'une des deux parts de signal, une estimation améliorée des probabilités $p_{1,m}[k]$, $p_{2,m}[k]$ (312; 492; 314; 432) des symboles de transmission d'une autre des deux parts de signal.

9. Procédé (600) pour recevoir un signal de combinaison qui présente deux parts de signal séparées dont les impulsions sont décalées l'une par rapport à l'autre et/ou dont les oscillations de porteuse présentent une différence de phase,

dans lequel le procédé comporte le fait d'obtenir (610) une première série de valeurs de balayage (342, $y_1[k]$) à l'aide d'un premier balayage, dans lequel le premier balayage est adapté à une phase de symbole de la première part de signal;

dans lequel le procédé comporte le fait d'obtenir (620) une deuxième série de valeurs de balayage (344, y2[k]) à l'aide d'un deuxième balayage, dans lequel le deuxième balayage est adapté à une phase de symbole de la deuxième part de signal;

dans lequel le procédé comporte le fait d'obtenir (630) les probabilités $p_{1,m}[k]$ (312; 492) de symboles de transmission de la première part de signal et les probabilités $p_{2,m}[k]$ (314; 432) de symboles de transmission de la deuxième part de signal pour une pluralité de moments de balayage (k) sur base de la première série de valeurs de balayage et de la deuxième série de valeurs de balayage;

dans lequel sont déterminées, sur base des valeurs de balayage (342, $y_1$[k]) du premier balayage et des probabilités estimées ou calculées $p_{2,m}$[k] (314; 432) pour les symboles de la deuxième part de signal, sans tenir compte d'une interférence entre symboles entre les symboles de transmission de la première part de signal dans les valeurs de balayage du premier balayage, les probabilités $p_{1,m}$[k] (312; 492) pour les symboles de la première part de signal;

et

dans lequel sont déterminées, sur base des valeurs de balayage (344, $y_2$[k]) du deuxième balayage et des probabilités estimées ou calculées $p_{1,m}$[k] (312; 492) pour les symboles de la première part de signal, sans tenir compte d'une interférence entre symboles entre les symboles de transmission de la deuxième part de signal dans les valeurs de balayage du deuxième balayage, les probabilités $p_{2,m}$[k] (314; 432) pour les symboles de la deuxième part de signal.

10. Programme d'ordinateur avec un code de programme pour mettre en oeuvre le procédé selon la revendication 9 lorsque le programme est exécuté sur un ordinateur.

Fig. 1

EP 3 994 856 B1

Konzept I
Schitt 1    200

$p_{1,m}[k]$    $\alpha_{1,m}$    $i_{1,p}[i,j]$ Intersymbol -
Wahrscheinlichkeit    (Sendesymbol    Interferenz zwischen
eines Symbols des    des ersten    Sendesymbolen des
ersten Signalanteils    Signalanteils)    zweiten Signalanteils

292    216    $\varphi_1 - \varphi_2$
                    (Phasen-
$y_1[k]$            verschiebung)
Abtastwert der    $V_1$(Intensität
ersten Serie von    des ersten
Abtastwerten    Signalanteils)
                        218    219
212    214

220    Berechnung von Zweig-
        Übergangswahrscheinlichkeiten
        (z.B. $\gamma_{1,k}[i,j]$, z.B. gemäß Gleichung (2.3))    $V_3$(Rausch-
                                                                    intensität)

        Zweig-Übergangs-
222    wahrscheinlichkeiten
        (z.B. $\gamma_{1,k}[i,j]$)

        Berechnung von Zustands-Wahrscheinlichkeiten
        (z.B. $\alpha_{1,k}[i]$, $\beta_{1,k+1}[j]$) (z.B. mit BCJR-Verfahren,    230
        z.B. mit Verwertsrekursion und Rückwertsrekursion)

210    Zustandswahrscheinlichkeit    Zweig-Übergangs-    Zustands-
        für Zeitschritt k    wahrscheinlichkeit    wahrscheinlichkeit
        (z.B. $\alpha_{1,k}[i]$)    232    (z.B. $\gamma_{1,k}[i,j]$)    für Zeitschritt k+1
                                                            (z.B. $\beta_{1,k+1}[j]$)

240    Bestimmung einer ersten Zustands-
        übergangs-Wahrscheinlichkeit
        (z.B. $p_{1,k}[i,j]$, z.B. gemäß Gleichung 2.4)    234

        Zustands-Übergangs-
242    wahrscheinlichkeit    Iteration
        (z.B. $p_{1,k}[i,j]$)    (optional)

250    Wahrscheinlichkeitsbestimmung
        (z.B. Aufsummierung von $p_{1,k}[i,j]$)

                Wahrscheinlichkeit eines Symbols
252    des zweiten Signalanteils (z.B. $p_{2,m}[k]$)

Fig. 2a

Konzept I
Schitt 2

$p_{2,m}[k]$
Wahrscheinlichkeit eines Symbols des zweiten Signalanteils

$\alpha_{2,m}$ (Sendesymbol des zweiten Signalanteils)

$i_{2,p}[i,j]$ Intersymbol - Interferenz zwischen Sendesymbolen des zweiten Signalanteils

$y_2[k]$   252

Abtastwert der zweiten Serie von Abtastwerten

$V_2$(Intensität des zweiten Signalanteils)

$\varphi_2 - \varphi_1$ (Phasen- verschiebung)

270   **Berechnung von Zweig- Übergangswahrscheinlichkeiten (z.B. $\gamma_{2,k}[i,j]$, z.B. gemäß Gleichung (3.2))**

$V_3$(Rausch- intensität)

272   Zweig-Übergangs- wahrscheinlichkeiten (z.B. $\gamma_{2,k}[i,j]$)

**Berechnung von Zustands-Wahrscheinlichkeiten (z.B. $\alpha_{2,k}[i]$, $\beta_{2,k+1}[j]$) (z.B. mit BCJR-Verfahren, z.B. mit Vorwärtsrekursion und Rückwärtsrekursion)**   280

260

Zustandswahrscheinlichkeit für Zeitschritt k (z.B. $\alpha_{2,k}[i]$)   282

Zweig-Übergangs- wahrscheinlichkeit (z.B. $\gamma_{2,k}[i,j]$)

Zustands- wahrscheinlichkeit für Zeitschritt k+1 (z.B. $\beta_{2,k+1}[j]$)   284

290   **Bestimmung einer ersten Zustands- übergangs-Wahrscheinlichkeit (z.B. $p_{2,k}[i,j]$, z.B. gemäß Gleichung (3.3))**

292   Zustands-Übergangs- wahrscheinlichkeit (z.B. $p_{2,k}[i,j]$)

Iteration (optional)

294   **Wahrscheinlichkeitsbestimmung (z.B. Aufsummierung von $p_{2,k}[i,j]$)**

252   Wahrscheinlichkeit eines Symbols des ersten Signalanteils (z.B. $p_{1,m}[k]$)

# Fig. 2b

EP 3 994 856 B1

Fig. 3

Konzept II
Schitt 1

Fig. 4a

Konzept II
Schitt 2

Start
(optional)

Wahrscheinlichkeiten
für Symbole des zweiten
Signalanteils (z.B. $p_{2,m}[k]$)

~432

$V_1$
Intensität
des ersten
Signalanteils

$y_1[k]$

Abtastwert der
ersten Serie von
Abtastwerten

Berechnung von Wahrscheinlichkeiten
verschiedener Folgen p von
Sendesymbolen des zweiten
Signalanteils (z.B. $\Pr\{i_1[k] = i_{1,p}\}$,
z.B. gemäß Gleichung (2.7))

$\alpha_{1,m}$
Sendesymbol
des ersten
Signalanteils

470

z.B. $\Pr\{i_1[k] = i_{1,p}\}$

482

~472

484

$i_{1,p}$
Interferenz durch
Folge p von
Sendesymbolen
des zweiten
Signalanteils

486

460

480

Berechnung von Wahrscheinlichkeiten
für Symbole des ersten Signalanteils
(z.B. $p_{1,m}[k]$,
z.B. gemäß Gleichung (2.5))

488

Intensität des
Rauschens

Wahrscheinlichkeiten
für Symbole des
ersten Signalanteils
(z.B. $p_{1,m}[k]$)

~492

Iteration
(optional)

Fig. 4b

500

Erhalten einer ersten Serie von Abtastwerten (z.B. $y_1[k]$) unter Verwendung einer ersten Abtastung, wobei die erste Abtastung an eine Symbolphase des ersten Signalanteils angepasst ist;

510

Erhalten einer zweiten Serie von Abtastwerten (z.B. $y_2[k]$) unter Verwendung einer zweiten Abtastung, wobei die zweite Abtastung an eine Symbolphase des zweiten Signalanteils angepasst ist;

520

Erhalten von Wahrscheinlichkeiten (z.B. $p_{1,m}[k]$) von Sendesymbolen des ersten Signalanteils und von Wahrscheinlichkeiten (z.B. $p_{2,m}[k]$) von Sendesymbolen des zweiten Signalanteils für eine Mehrzahl von Abtastzeitpunkten (k) basierend auf der ersten Serie von Abtastwerten und der zweiten Serie von Abtastwerten.

• Bestimmen von Wahrscheinlichkeiten (z.B. $p_{2,m}[k]$) für Symbole des zweiten Signalanteils basierend auf Abtastwerten (z.B. $y_1[k]$) der ersten Abtastung und geschätzten oder berechneten Wahrscheinlichkeiten (z.B. $p_{1,m}[k]$) für Symbole des ersten Signalanteils unter Berücksichtigung einer Intersymbolinterferenz (z.B. $i_{1,p}$) zwischen Sendesymbolen des zweiten Signalanteils in den Abtastwerten (z.B. $y_1[k]$) der ersten Abtastung

• Bestimmen von Wahrscheinlichkeiten (z.B. $p_{1,m}[k]$) für Symbole des ersten Signalanteils basierend auf Abtastwerten (z.B. $y_2[k]$) der zweiten Abtastung und geschätzten oder berechneten Wahrscheinlichkeiten (z.B. $p_{2,m}[k]$) für Symbole des zweiten Signalanteils unter Berücksichtigung einer Intersymbolinterferenz (z.B. $i_{2,p}$) zwischen Sendesymbolen des ersten Signalanteils in den Abtastwerten (z.B. $y_2[k]$) der zweiten Abtastung

530

Fig. 5

600

Erhalten einer ersten Serie von Abtastwerten (z.B. $y_1[k]$) unter Verwendung einer ersten Abtastung umfasst, wobei die erste Abtastung an eine Symbolphase des ersten Signalanteils angepasst ist;

610

Erhalten einer zweiten Serie von Abtastwerten (z.B. $y_2[k]$) unter Verwendung einer zweiten Abtastung umfasst, wobei die zweite Abtastung an eine Symbolphase des zweiten Signalanteils angepasst ist;

620

Erhalten von Wahrscheinlichkeiten (z.B. $p_{1,m}[k]$) von Sendesymbolen des ersten Signalanteils und von Wahrscheinlichkeiten (z.B. $p_{2,m}[k]$) von Sendesymbolen des zweiten Signalanteils für eine Mehrzahl von Abtastzeitpunkten (z.B. $k$) basierendauf der ersten Serie von Abtastwerten und der zweiten Serie von Abtastwerten.

- Bestimmen von Wahrscheinlichkeiten (z.B. $p_{1,m}[k]$) für Symbole des ersten Signalanteils basierend auf Abtastwerten (z.B. $y_1[k]$) der ersten Abtastung und geschätzten oder berechneten Wahrscheinlichkeiten (z.B. $p_{2,m}[k]$) für Symbole des zweiten Signalanteils ohne Berücksichtigung einer Intersymbolinterferenz zwischen Sendesymbolen des ersten Signalanteils in den Abtastwerten der ersten Abtastung

- Bestimmen von Wahrscheinlichkeiten (z.B. $p_{2,m}[k]$) für Symbole des zweiten Signalanteils basierend auf Abtastwerten (z.B. $y_2[k]$) der zweiten Abtastung und geschätzten oder berechneten Wahrscheinlichkeiten (z.B. $p_{1,m}[k]$) für Symbole des ersten Signalanteils ohne Berücksichtigung einer Intersymbolinterferenz zwischen Sendesymbolen des zweiten Signalanteils in den Abtastwerten der zweiten Abtastung

630

# Fig. 6

## Zwei verschiedene 2-Nutzer-Empfängerkonzepte

Empfangssignal (Signal 1+2) 700 / 710 → Umsetzung (720) → 722 → Synchronisation (730) → Trennung mit Decodierung (740) → 742 → dec. Daten von Signal 1; → 744 → dec. Daten von Signal 2

Empfänger mit Integration der Kanal-Decodierung in das Trennverfahren

## Fig. 7a

Empfangssignal (Signal 1+2) 750 / 760 → Umsetzung (770) → 712 → Synchronisation (780) → Trennung (790) → Signal 1 → 792 → Decodierung (796) → 797 → dec. Daten; → Signal 2 → 794 → Decodierung (798) → 797 → dec. Daten

Empfänger mit für jedes Signal separater Kanal-Decodierung nach Trennung

## Fig. 7b

EP 3 994 856 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20090161749 A1
- DE 102018202648
- DE 102018202649
- DE 102018202647

### In der Beschreibung aufgeführte Nicht-Patentliteratur

- Trellis-Codierung: Grundlagen und Anwendungen in der digitalen Übertragungstechnik. **J. HUBER.** Nachrichtentechnik. Springer-Verlag, 1992, vol. 21
- **RÖßLER et al.** A comparison of iterative demapping with iterative soft decision interference cancellation employing the distribution of interference. *Proceeding/ 2004 IEEE 59 th vehicular technology conderence,* 17. Mai 2004, vol. 1, ISBN 978-0-7803-8255-8, 570-574